# EUROPEAN PATENT SPECIFICATION

(11) **EP 3 097 310 B1**
(45) Date of publication and mention of the grant of the patent: **10.04.2019**
(21) Application number: 15737415.8
(22) Date of filing: 07.01.2015
(51) Int. Cl.: F04B 15/02, F04B 49/22, F04B 7/00

(54) **CONCRETE PUMP SYSTEM AND METHOD**
BETONPUMPENSYSTEM UND -VERFAHREN
PROCÉDÉ ET SYSTÈME DE POMPE À BÉTON

(30) Priority: 15.01.2014 US 201414155812; 31.01.2014 US 201461933929 P; 23.07.2014 US 201414339189
(43) Date of publication of application: 30.11.2016
(73) Proprietor: Priddy, Francis Wayne, Bartonville, TX 76226-6382 (US)
(72) Inventor: Priddy, Francis Wayne, Bartonville, TX 76226-6382 (US)
(74) Representative: Letzelter, Felix Phillip
(86) International application number: PCT/US2015/010449
(87) International publication number: WO 2015/108731

(56) References cited:
- WO-A1-2009/041811
- US-A- 4 337 017
- US-A- 4 790 728
- US-A- 5 380 174
- US-A- 5 380 174
- US-A- 5 458 470
- US-A1- 2003 215 344
- US-A1- 2007 246 897

## Description

### FIELD OF THE INVENTION

The present invention generally relates to systems and methods for pumping concrete and/or cement. Specifically, the present invention in many preferred embodiments has application to situations in which concrete/cement must be pumped with a uniform flow rate.

### PRIOR ART AND BACKGROUND OF THE INVENTION

### Background (0100)-(0400)

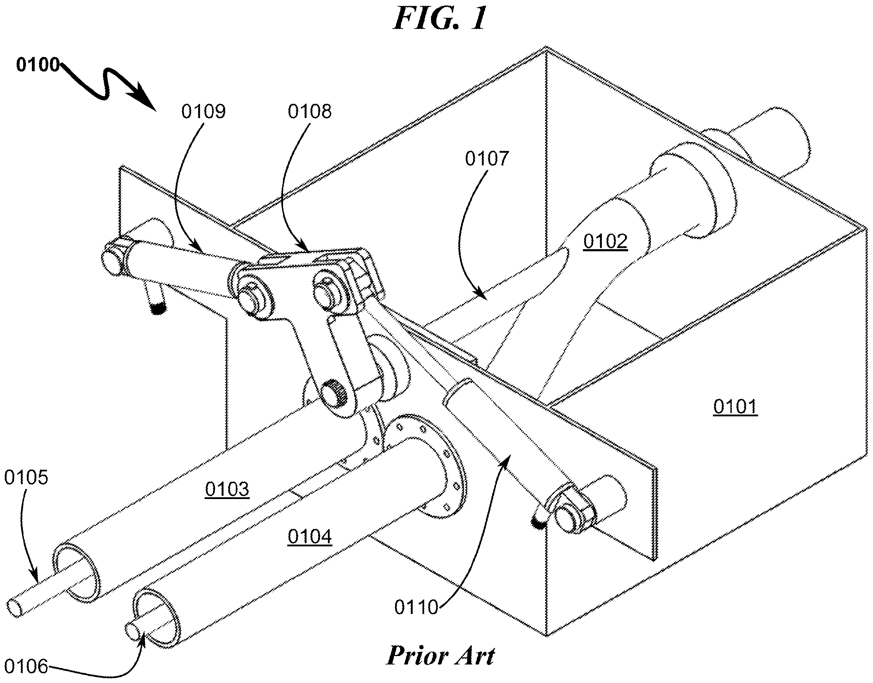

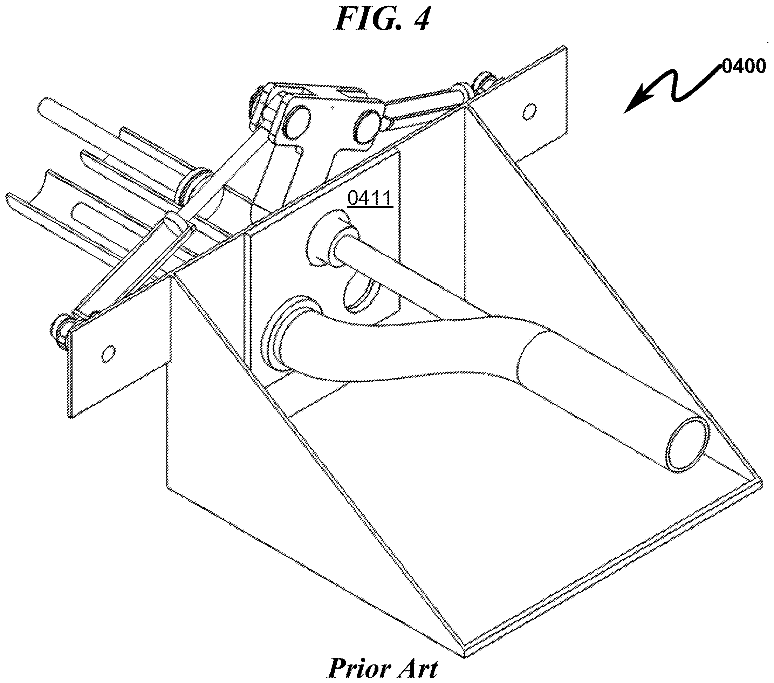

Conventional concrete pumps are typically configured in functional construction as depicted in FIG. 1 (**0100**) - FIG. 4 (**0400**). As illustrated in FIG. 1 (**0100**), it can be seen that a material hopper (MHOP) (**0101**) is filled with concrete/cement or other material that is to be pumped through an ejection port (**0102**) to a construction jobsite for delivery to a concrete form or other containment structure. Hydraulic pumps (**0103**, **0104**) alternately are filled with material from the hopper (**0101**) using hydraulic pump rams (**0105**, **0106**) and these same hydraulic pump rams (**0105**, **0106**) are activated to push the material into the ejection port (**0102**) to the jobsite. The ejection port (**0102**) articulates between each hydraulic pump cylinder (**0103**, **0104**) and their corresponding hydraulic pump ram (**0105**, **0106**) by virtue of a driveshaft (**0107**) linked to a positioning means (**0108**) that is rotated by virtue of hydraulic positioning drivers (**0109**, **0110**). Hydraulic pressure driving the hydraulic pump rams (**0105**, **0106**) and the hydraulic positioning drivers (**0109**, **0110**) is coordinated so that the material in the hopper is injected into a loading pump cylinder (**0103**, **0104**) when the cylinder input port is open to the material hopper (**0101**) and transmitted to the ejection port (**0102**) when the other hydraulic pump ram (**0105**, **0106**) is activated. The cycle alternates between injection in one pump cylinder port and ejection from the other pump cylinder port. As depicted in FIG. 4 (**0400**), a spectacle plate (**0411**) mates with the articulating ejection port (**0102**) based on the activation state of each hydraulic pump cylinder and corresponding hydraulic pump ram.

As depicted in the diagrams within FIG. 1 (**0100**) - FIG. 4 (**0400**), the spectacle plate (**0411**) and articulating ejection port (**0102**) typically operate in a two-state left / right operational mode and arc configured such that there is a center transition region between the two cylinder ports in which no flow occurs from the pump cylinders (**0103**, **0104**) to the articulating ejection port (**0102**). In this transition region the flow through the articulating ejection port (**0102**) will be abruptly stopped and started with backflow into the material hopper (**0101**), resulting in heightened stresses within the pump cylinders (**0103**, **0104**) and piping/hoses connected to the articulating ejection port (**0102**). These heightened stresses can cause premature wear and/or failure of the pumping system as well as make manipulation of the hoses distributing the concrete difficult at the terminal job site. While some prior art configurations may utilize a pressurized pneumatic ballast (low pressure accumulator) connected to the articulating ejection port (**0102**) (not shown) to modulate the impulse pressure differentials associated with this operation, this workaround is not entirely successful in forcing a uniform material flow through the articulating ejection port (**0102**). Furthermore, this approach does not improve the wear and stress associated with the pump cylinders (**0103**, **0104**) which may in some circumstances incorporate internal piston springs (not shown) or other modifications to limit the impulse pressure loads on the hydraulic drivers (**0105**, **0106**).

One skilled in the art will recognize that the articulation of the driveshaft (**0107**) and positioning means (**0108**) may be accomplished using the hydraulic drivers (**0109**, **0110**) as depicted or by using a wide variety of other mechanical means. The illustration of the hydraulic drivers (**0109**, **0110**) in this context is only exemplary of a wide variety of methodologies to articulate the position of the material ejection port (**0102**).

### Typical Pump Cycle (0500)-(1900)

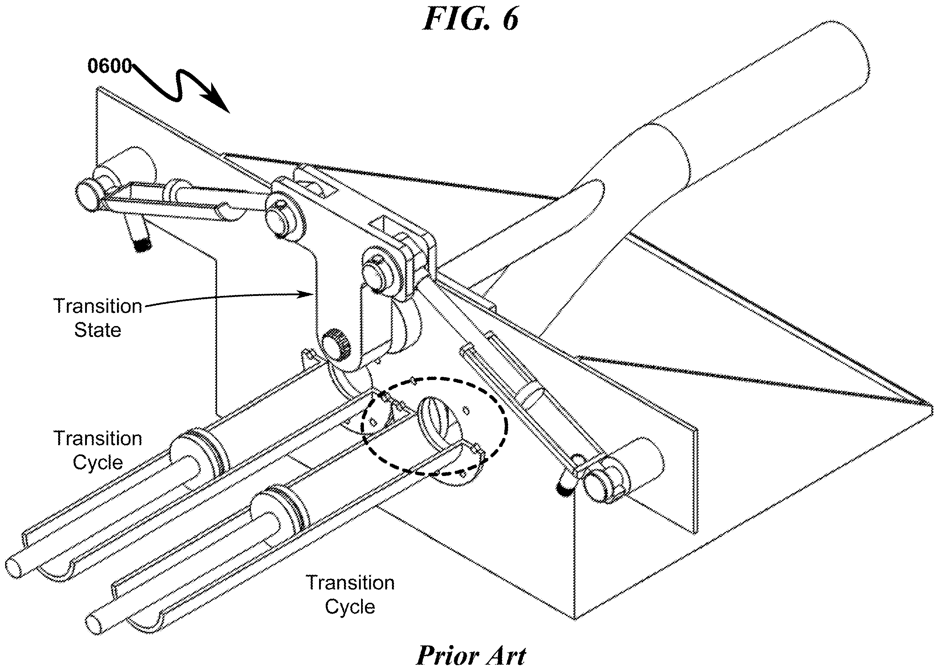

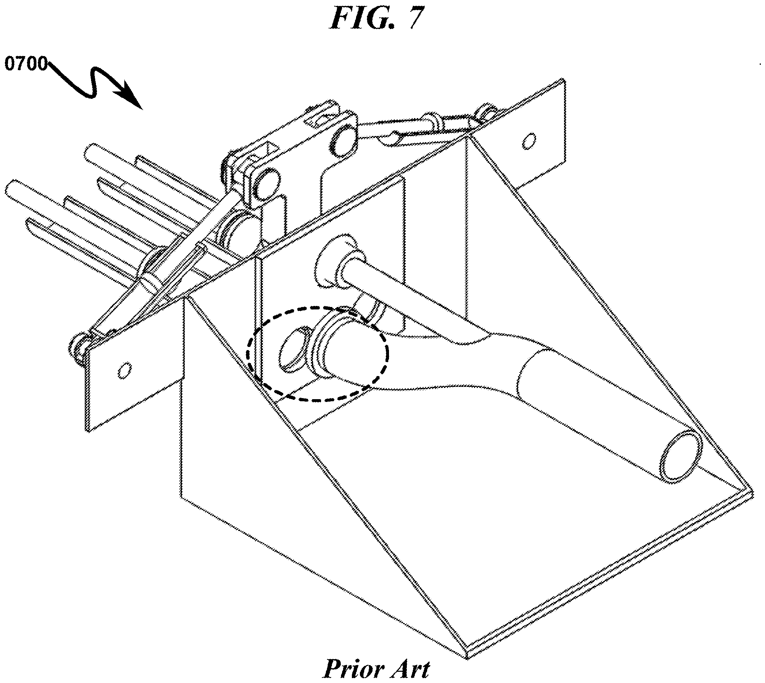

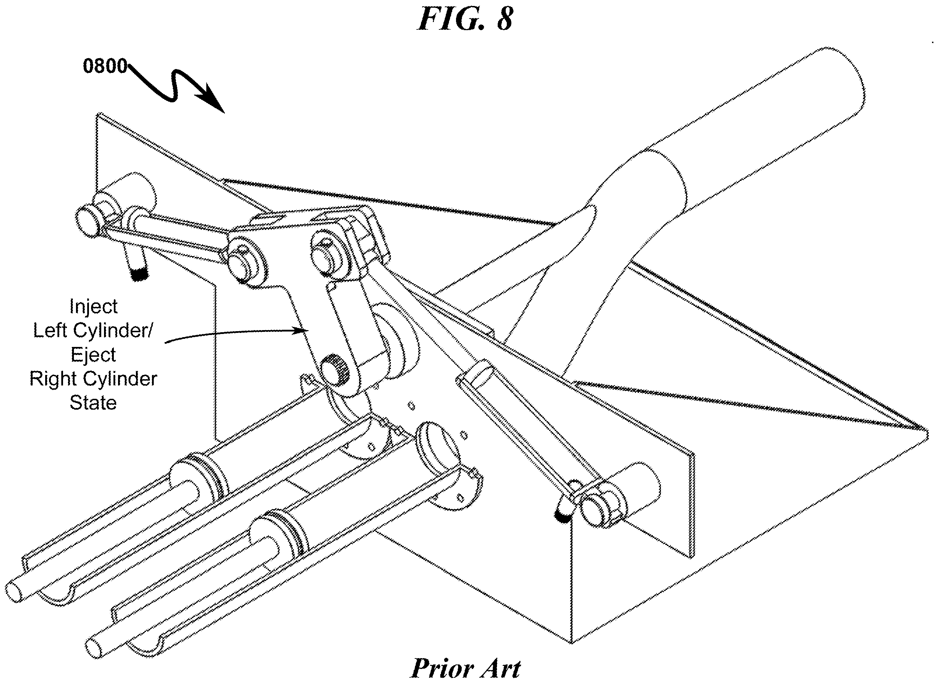

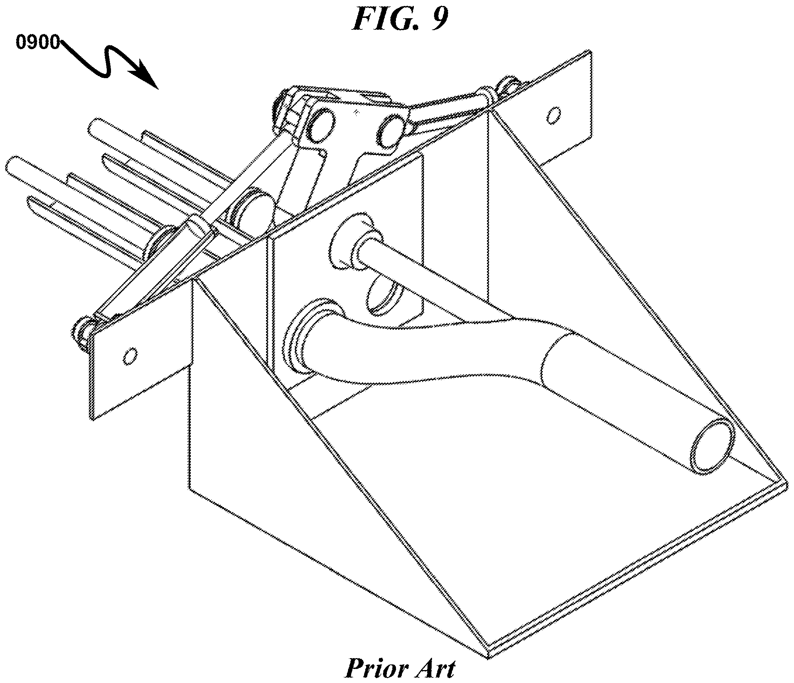

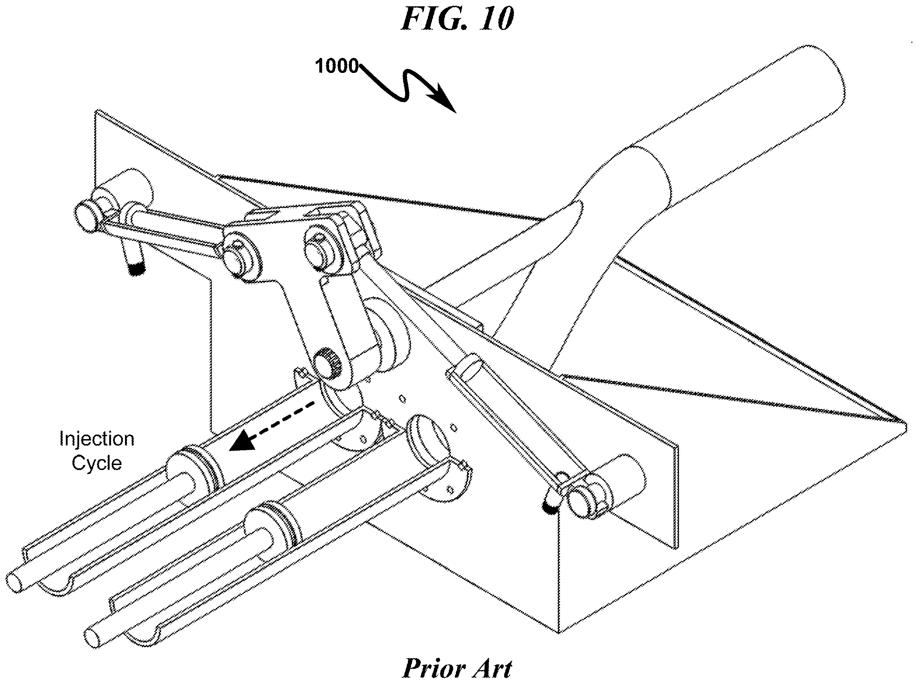

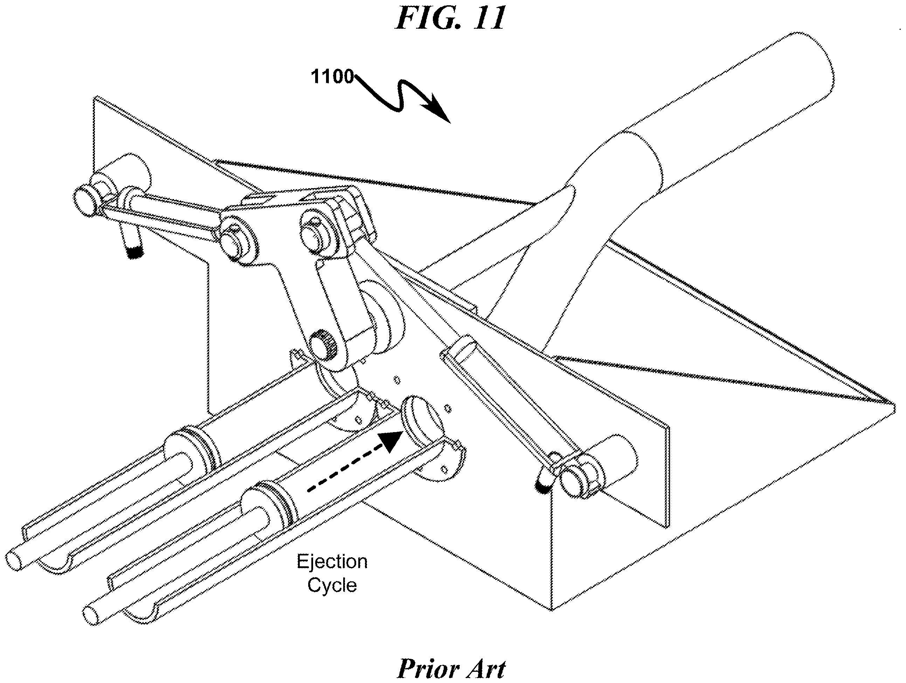

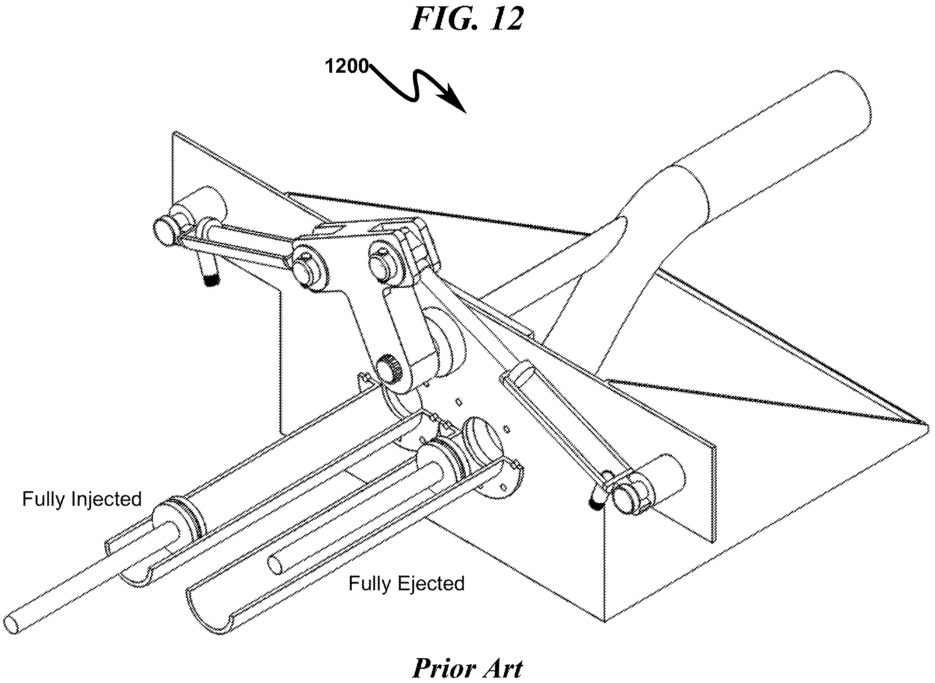

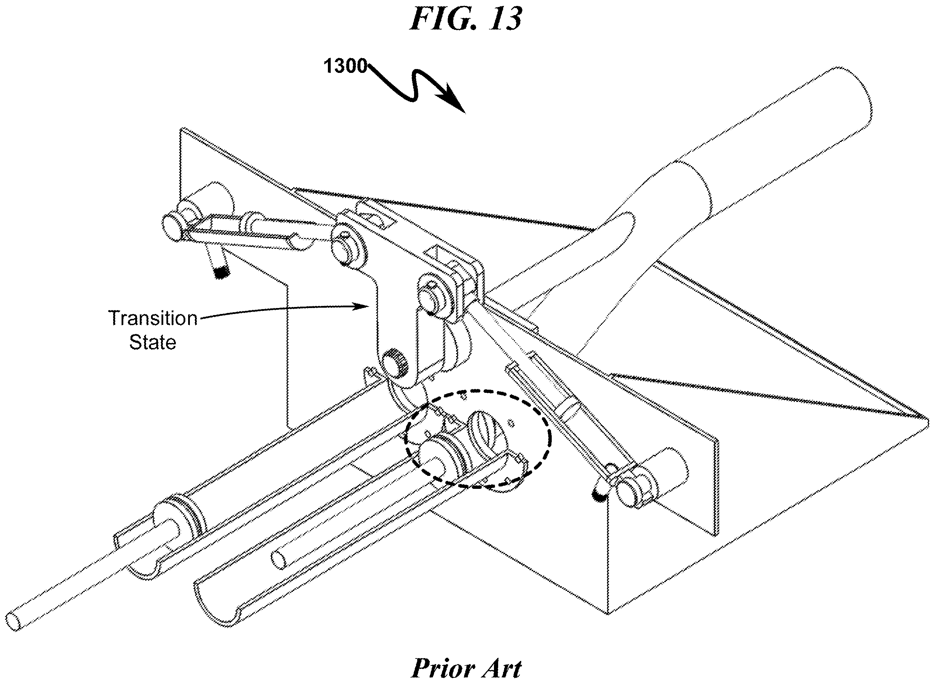

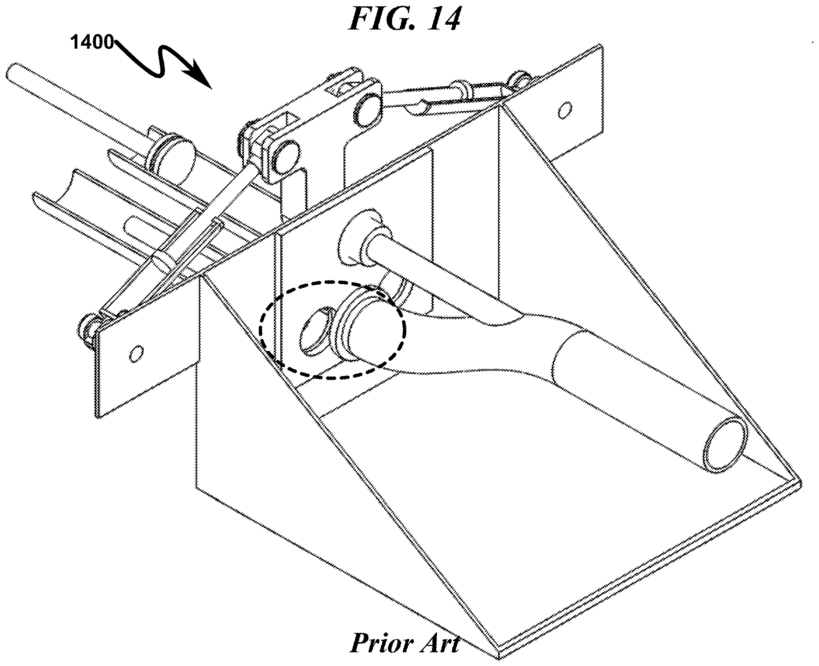

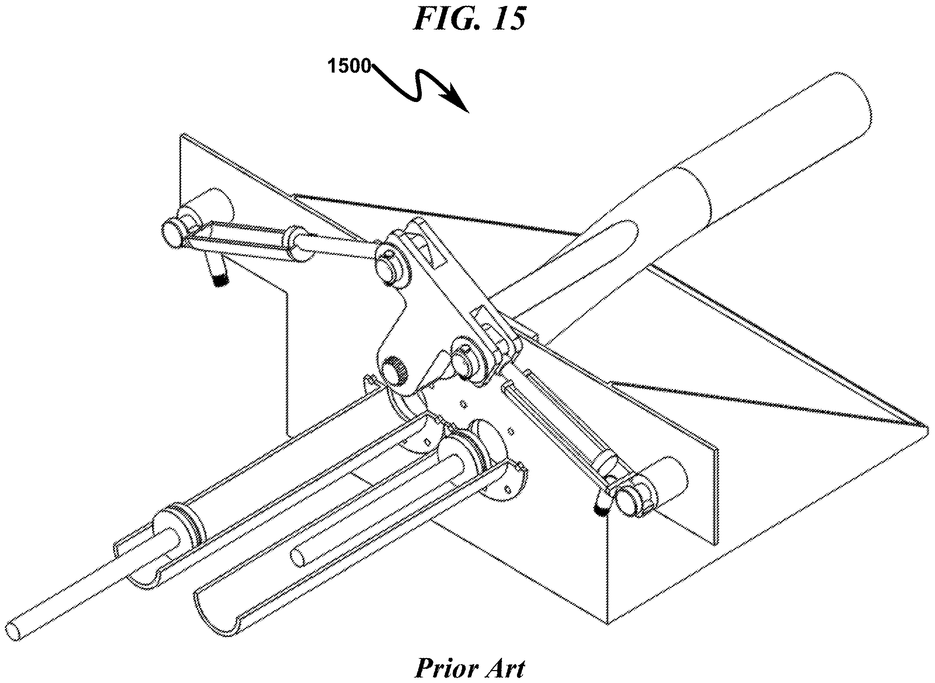

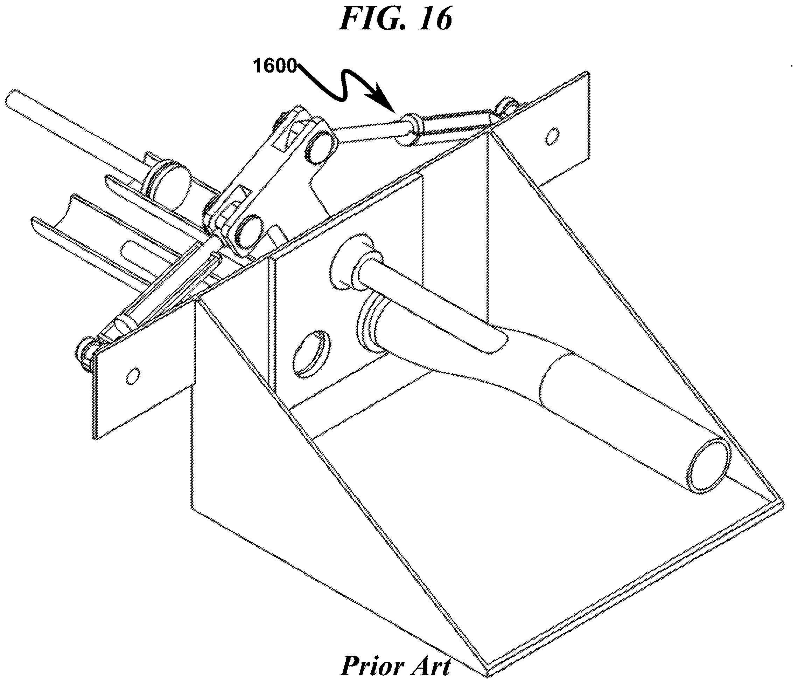

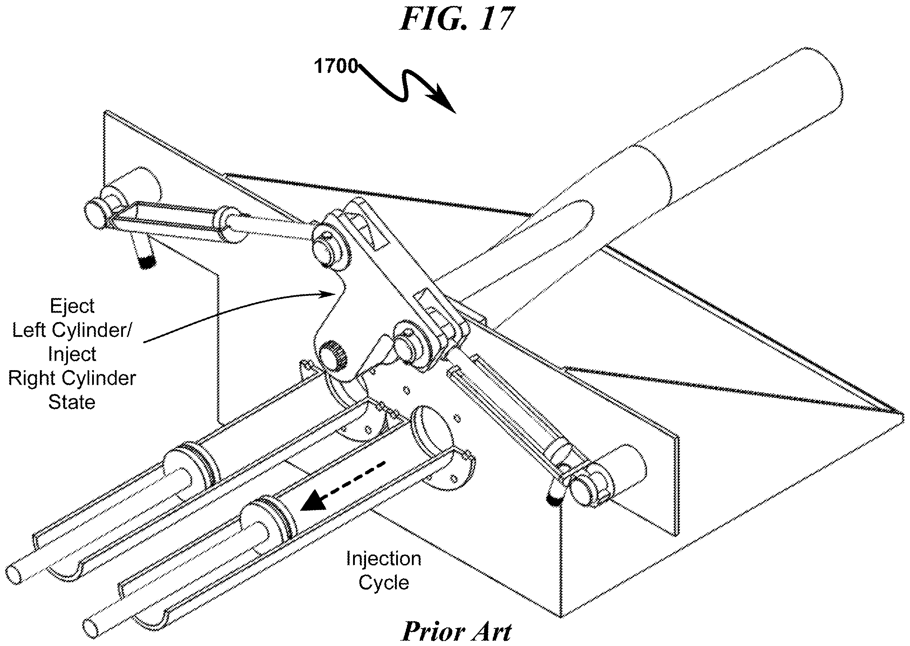

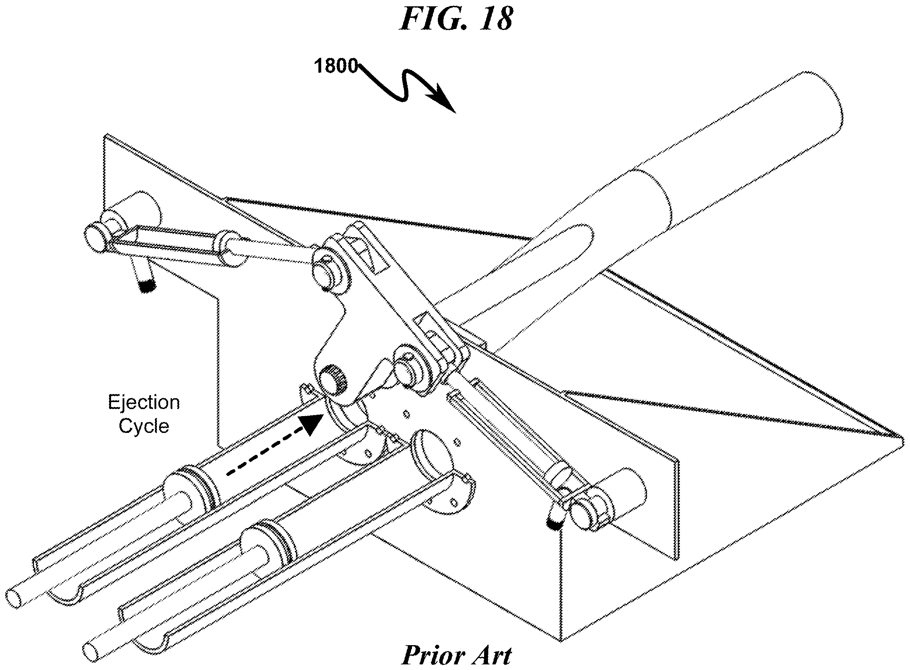

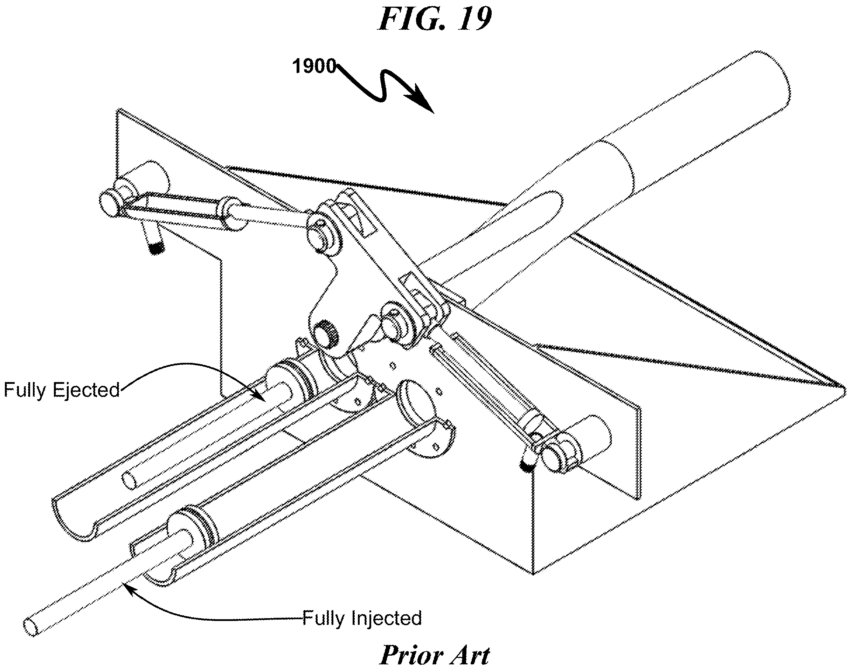

To better understand the benefits of the present invention, a detailed review of conventional prior art concrete pumping systems is warranted. A typical method associated with a prior art concrete pumping cycle is depicted in the flowchart of FIG. 5 (**0500**) with supporting drawings illustrating the various steps depicted in FIG. 6 (**0600**) - FIG. 19 (**1900**). The typical pumping method includes the following steps:
(1) As depicted in FIG. 6 (**0600**) and FIG. 7 (**0700**), suspending pumping operations during the transition of the cutting plate / ejection port from the left to the right hydraulic pump ram (**0501**);
(2) As depicted in FIG. 8 (**0800**) and FIG. 9 (**0900**), repositioning the cutting plate / ejection port from the left to the right hydraulic pump ram (**0502**);
(3) As depicted in FIG. 10 (**1000**) and FIG. 12 (**1200**), receiving concrete from the material hopper into the first (left) hydraulic pump ram via the first (left) spectacle plate port in conjunction with step (4) (**0503**);
(4) As depicted in FIG. 11 (**1100**) and FIG. 12 (**1200**), activating the second hydraulic pump ram to eject concrete thru the second spectacle plate port and into the ejection port in conjunction with step (3) (**0504**);
(5) As depicted in FIG. 13 (**1300**) and FIG. 14 (**1400**), suspending pumping operations during the transition of the cutting plate / ejection port from the right to the left hydraulic pump ram (**0505**);
(6) As depicted in FIG. 15 (**1500**) and FIG. 16 (**1600**), repositioning the cutting plate / ejection port from the right to the left hydraulic pump ram (**0506**);
(7) As depicted in FIG. 17 (**1700**) and FIG. 19 (**1900**), receiving concrete from the material hopper into the second (right) hydraulic pump ram via the second (right) spectacle plate port in conjunction with step (8) (**0507**);
(8) As depicted in FIG. 18 (**1800**) and FIG. 19 (**1900**), activating the first hydraulic pump ram to eject concrete thru the first spectacle plate port and into the ejection port in conjunction with step (7) (**0508**); and
(9) Proceeding to step (1) to repeat the pumping cycle.

As depicted in these steps and diagrams, the prior art concrete pumping method incurs suspended pumping operating when transitioning the ejection port from the left-to-right (**0501**, **0600**, **0700**) and right-to-left (**0505**, **1300**, **1400**) hydraulic pumping cylinders. Furthermore, as the ejection port moves over the spectacle plate there may be regions of operation where material from the ejection port may reflow/backflow into the material hopper (see detail in FIG. 6 (**0600**), FIG. 7 (**0700**), FIG. 13 (**1300**) and FIG. 14 (**1400**)), thus reducing the overall flow rate of concrete to the jobsite.

### Typical Pump Cycle Flow Inefficiencies (2000)-(2400)

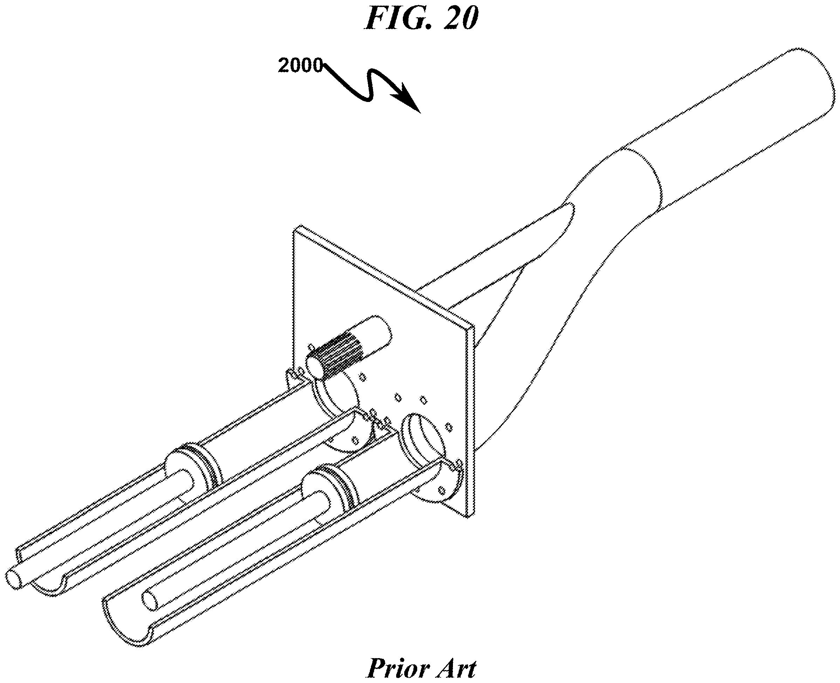

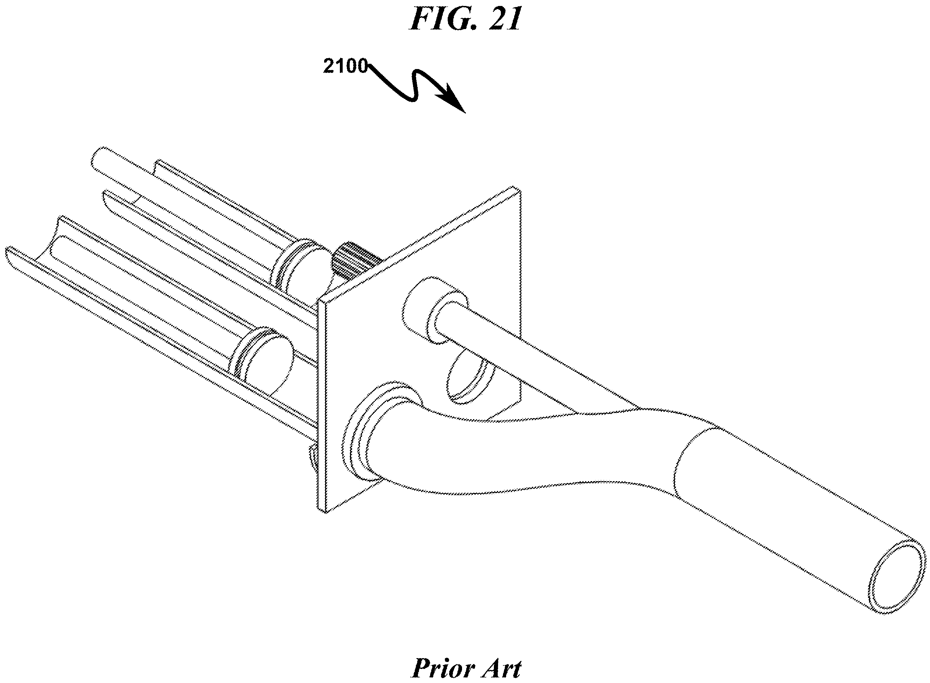

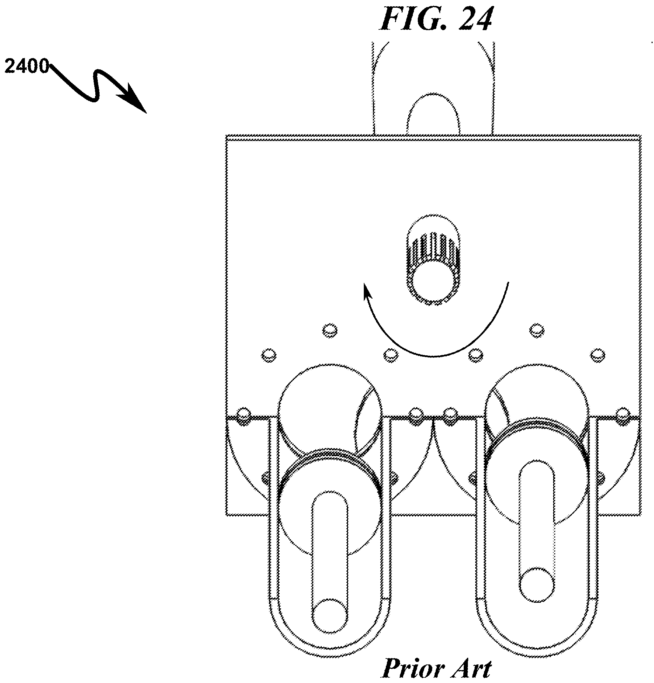

Within the traditional pumping cycle depicted in FIG. 6 (**0600**) - FIG. 19 (**1900**), several inefficiencies exist. FIG. 20 (**2000**) - FIG. 24 (**2400**) are provided to illustrate these inefficiencies by depicting only the hydraulic pump rams, spectacle plate, and output ejection port. As generally depicted in FIG. 20 (**2000**) and FIG. 21 (**2100**), when the ejection port is fully covering one of the two hydraulic pump ram pumps, material may be ejected from the right hydraulic pump to the ejection port and injected into the left hydraulic pump ram from the material hopper. In this state the ejection port (and corresponding piping to the job site) is fully sealed with respect to the pumping operation.

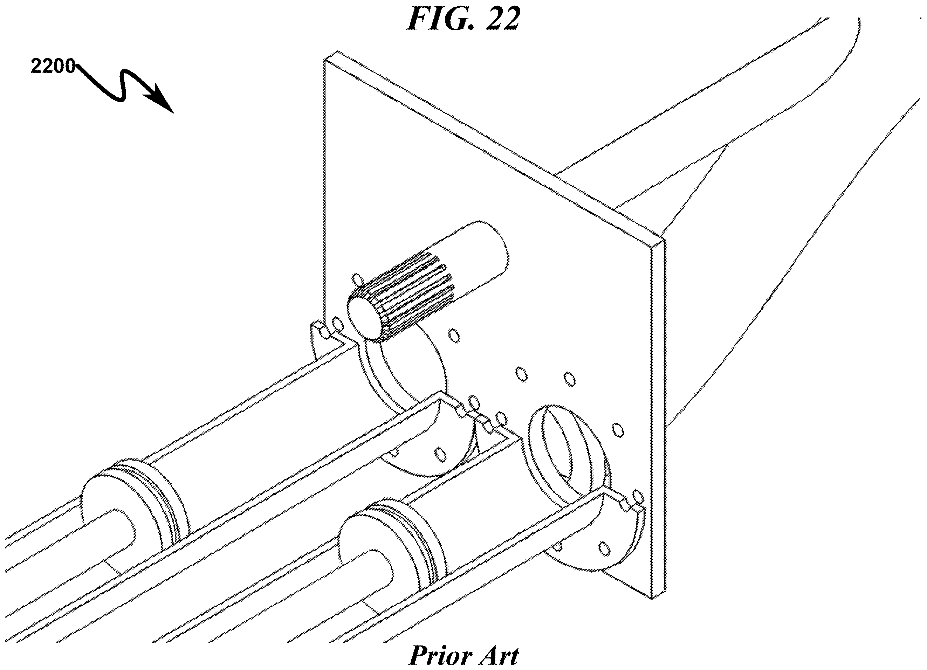

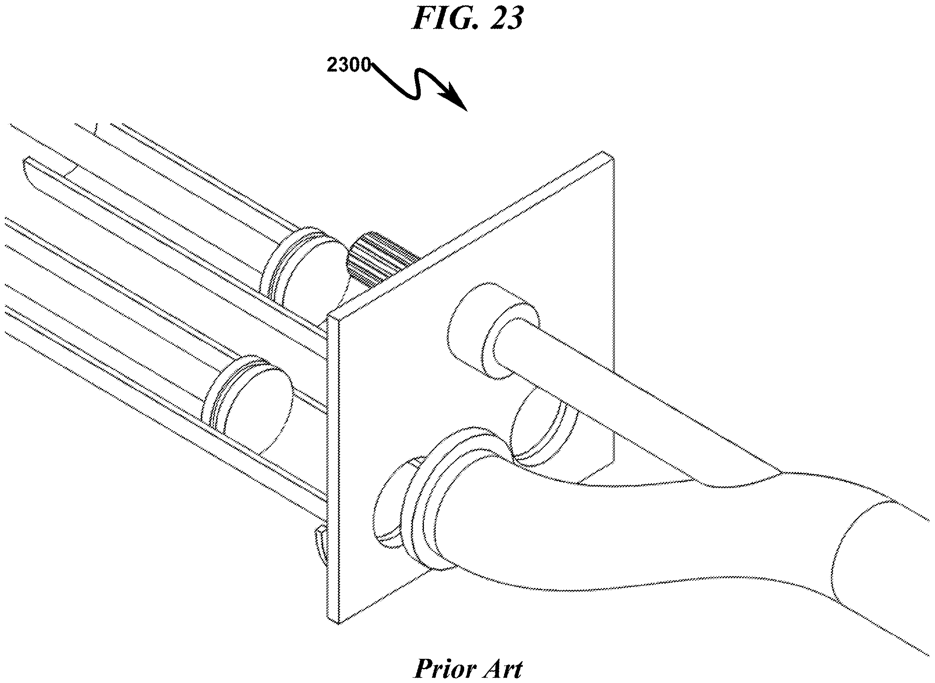

However, as generally depicted in FIG. 22 (**2200**) and FIG. 23 (**2300**), when the ejection port is partially covering one of the two hydraulic pump rams, material may backflow from the ejection port to the material hopper because the system is no longer fully sealed by the right hydraulic pump ram. This typically results in a reduction of pumping pressure and overall reduction in material moved by the pumping operation.

Finally, as generally depicted in FIG. 24 (**2400**), as the ejection port transitions between the right and left hydraulic pump rams there exists a "dead zone" where pumping operations are essentially suspended as neither hydraulic pump ram has access to the ejection port. This transition region results in an impulse reduction in pump flow that places stress on the ejection port and hydraulic pump rams. The reduction in pump flow during this transition period is an undesirable artifact of this conventional pump architecture.

### Deficiencies in the Prior Art

The prior art as detailed above suffers from the following deficiencies:
- Prior art concrete pump systems and methods do not sustain a constant flow of material through the ejection port.
- Prior art concrete pump systems and methods due to their non-uniform material flow may result in difficulties placing concrete at the job site due to the impulse nature of material flow from piping at the job site.
- Prior art concrete pump systems and methods incur one or more portions of the pumping cycle wherein no material is pumped through the ejection port.
- Prior art concrete pump systems and methods may permit material to reflow from the ejection port to the material hopper during one or more portions of the pumping cycle.
- Prior art concrete pump systems and methods generally incur spikes in hydraulic pressure during the center transition region of the output port, resulting in significant wear and stress on the hydraulic pump.
- Prior art concrete pump systems and methods generally require an accumulator or other device connected to the output port to modulate spikes in output material flow pressure.

While some of the prior art may teach some solutions to several of these problems, the core issue pumping concrete with a uniform delivery rate has not been solved by the prior art.

### OTHER REFERENCES

US 5,380,174 to Schwing teaches a pump for thick matter with delivery cylinders, in particular a two-cylinder concrete pump. In order to control the flow of thick matter, the pump incorporates a distributing regulator that is connected permanently at an outlet opening with the pump-side end of a delivery line and incorporates at least one inlet opening where it is sealed on the web between the thick-matter flow passage openings from the delivery cylinders into a supply tank, the thick-matter flow passage openings and the inlet opening of the distributing regulator being of identical outline and area, the distributing regulator connecting adjacent thick matter flow passage openings alternately with the delivery line and the supply tank by a rotating movement. The thick-matter flow passage openings together with their associated delivery cylinder openings are each connected through a standoff pipe, and the inside diameters of the flow passage openings that are formed by the standoff pipes are reduced on the web, the reduction in the diameter in the distributing regulator inlet opening being matched to the web.

WO/2009/041811 to Staring teaches a slurry pump, particularly for pumping abrasive slurries or construction slurries. The slurry pump comprises a frame, a rotor that is rotatably connected to the frame and is provided with at least three pump cylinders each having a related hydraulic drive cylinder, wherein the drive cylinders comprise a piston and a piston rod that is connected to a slurry displacer in the pump cylinder for moving the slurry displacer by the pump cylinder, wherein the pump cylinders comprise cylinder openings which by rotation of the rotor can consecutively be placed in front of an inlet opening for receiving slurry during a suction stroke of the slurry displacer, and an outlet opening which in rotation direction is spaced apart from the slurry displacer for discharge of the slurry during a pressure stroke of the slurry displacer, wherein at least two consecutive cylinder openings in a certain rotation position of the rotor are at least partially jointly positioned in front of the outlet opening.

### OBJECTIVES OF THE INVENTION

Accordingly, the objectives of the present invention are (among others) to circumvent the deficiencies in the prior art and affect the following objectives in the context of a concrete pump system and method:
(1) Provide for a concrete pump system and method that provides for a uniform material delivery rate.
(2) Provide for a concrete pump system and method that provides for an increased material delivery rate as compared to the prior art.
(3) Provide for a concrete pump system and method that minimizes or eliminates material reflow from the ejection port back into the material hopper.
(4) Provide for a concrete pump system and method that is easily retrofitted into existing concrete pump systems.
(5) Provide for a concrete pump system and method that does not require an accumulator or other devices to modulate impulse material flow.
(6) Provide for a concrete pump system and method that eases the placement of material at the job site by providing a uniform delivery flow through the output ejection port.

While these objectives should not be understood to limit the teachings of the present invention, in general these objectives are achieved in part or in whole by the disclosed invention, that is defined by the appended claims and that is discussed in the following sections. One skilled in the art will no doubt be able to select aspects of the present invention as disclosed to affect any combination of the objectives described above.

### BRIEF SUMMARY OF THE INVENTION

The present invention as embodied in a system and method utilizes a trapezoidal-shaped spectacle plate and associated cutting ring in conjunction with coordination of hydraulic pump ram operation to ensure the following:
- The flow path from each hydraulic pump ram is never obstructed when transferring material to the ejection port.
- Each hydraulic pump ram is positively sealed off at the end of the pumping cycle to prevent material from reflowing from the ejection port back into the material hopper.

The trapezoidal-shaped spectacle plate is mated with a corresponding trapezoidal-shaped cutting ring that may be optionally fitted with sealing wings that ensure backflow from the ejection port is minimized or eliminated.

The system/method as described herein may be applied to conventional concrete pumping systems in which two hydraulic pump rams are used in a bipolar operation mode with a first hydraulic pump ram injecting material from the material hopper while the second hydraulic pump ram ejects material into the ejection port for delivery to the job site. In this configuration the ejection port and associated cutting plate articulates between the first and second hydraulic pump rams. However, the present invention also anticipates that the ejection port and cutting ring may be configured to support multiple injecting/ejecting hydraulic pump rams and thus permit "ganged" pumping into a common ejection port assembly that rotates between the hydraulic pump ram input ports. This configuration may permit improved overall pumping rates as compared to existing prior art concrete pumps.

### BRIEF DESCRIPTION OF THE DRAWINGS

For a fuller understanding of the advantages provided by the invention, reference should be made to the following detailed description together with the accompanying drawings wherein:
FIG. 1 illustrates a front perspective view of a prior art concrete pump;

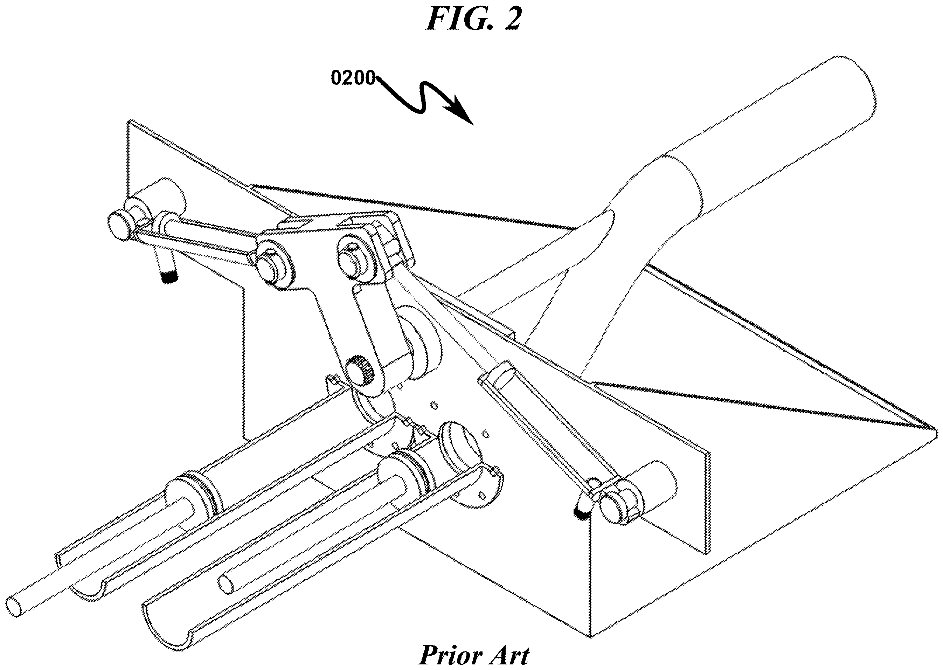

FIG. 2 illustrates a front perspective sectional detail view of a prior art concrete pump;

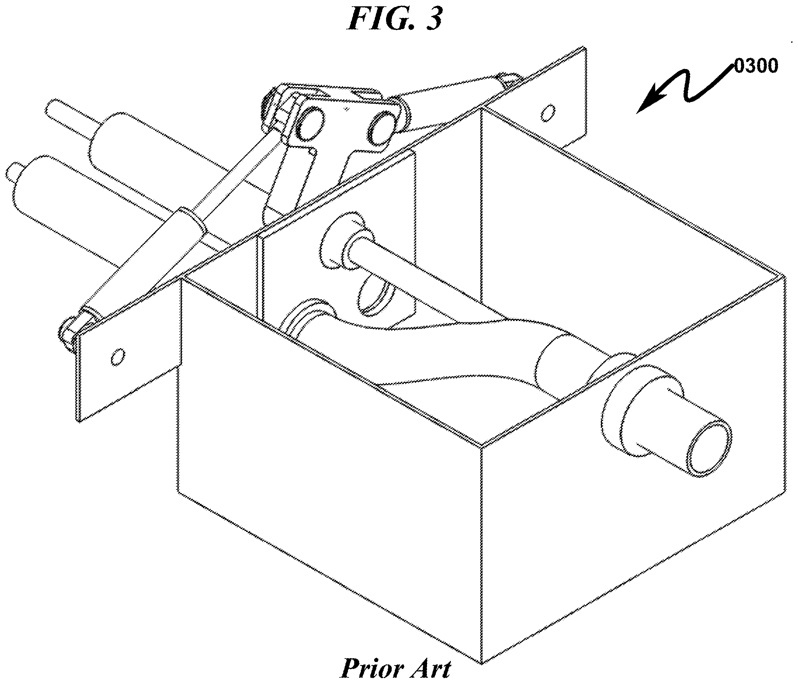

FIG. 3 illustrates a rear perspective view of a prior art concrete pump;
FIG. 4 illustrates a rear perspective sectional detail view of a prior art concrete pump;

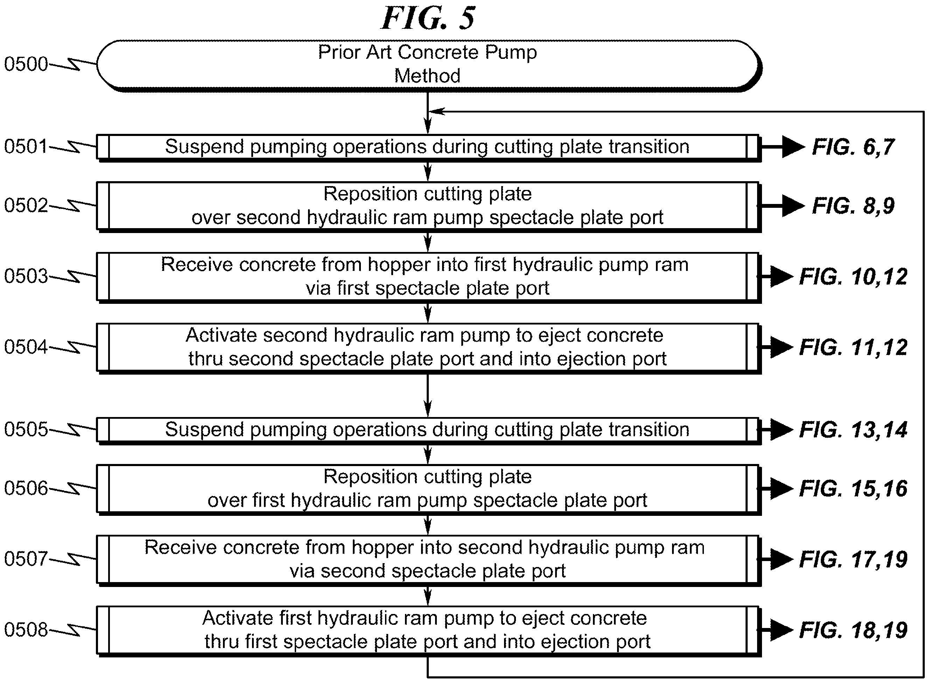

FIG. 5 illustrates a typical prior art pumping method depicted in more detail in FIG. 6 - FIG. 19;
FIG. 6 illustrates a front perspective sectional view of a prior art concrete pump in transition between left injection and right ejection cycles;
FIG. 7 illustrates a rear perspective sectional view of a prior art concrete pump in transition between left injection and right ejection cycles;
FIG. 8 illustrates a front perspective sectional view of a prior art concrete pump positioned to inject material into the left pump cylinder and eject material from the right pump cylinder;
FIG. 9 illustrates a front perspective sectional view of a prior art concrete pump positioned to inject material into the left pump cylinder and eject material from the right pump cylinder;
FIG. 10 illustrates a front perspective sectional view of a prior art concrete pump injecting material into the left pump cylinder;
FIG. 11 illustrates a front perspective sectional view of a prior art concrete pump ejecting material from the right pump cylinder;
FIG. 12 illustrates a front perspective sectional view of a prior art concrete pump with the left pump cylinder fully injected and the right pump cylinder fully ejected;
FIG. 13 illustrates a front perspective sectional view of a prior art concrete pump in transition between right injection and left ejection cycles;
FIG. 14 illustrates a rear perspective sectional view of a prior art concrete pump in transition between right injection and left ejection cycles;
FIG. 15 illustrates a front perspective sectional view of a prior art concrete pump positioned to inject material into the right pump cylinder and eject material from the left pump cylinder;
FIG. 16 illustrates a front perspective sectional view of a prior art concrete pump positioned to inject material from the right pump cylinder and eject material from the left pump cylinder;
FIG. 17 illustrates a front perspective sectional view of a prior art concrete pump injecting material into the right pump cylinder;
FIG. 18 illustrates a front perspective sectional view of a prior art concrete pump ejecting material from the left pump cylinder;
FIG. 19 illustrates a front perspective sectional view of a prior art concrete pump with the right pump cylinder fully injected and the left pump cylinder fully ejected;
FIG. 20 illustrates a front perspective sectional view of a prior art concrete pump depicting the left/right hydraulic pump rams and ejection port positioned to fully cover the right portion of the spectacle plate and associated hydraulic pump ram;
FIG. 21 illustrates a rear perspective sectional view of a prior art concrete pump depicting the left/right hydraulic pump rams and ejection port positioned to fully cover the right portion of the spectacle plate and associated hydraulic pump ram;
FIG. 22 illustrates a front perspective sectional view of a prior art concrete pump depicting the left/right hydraulic pump rams and ejection port positioned to partially cover the right portion of the spectacle plate and associated hydraulic pump ram;
FIG. 23 illustrates a rear perspective sectional view of a prior art concrete pump depicting the left/right hydraulic pump rams and ejection port positioned to partially cover the right portion of the spectacle plate and associated hydraulic pump ram;
FIG. 24 illustrates a front perspective sectional view of a prior art concrete pump depicting the left/right hydraulic pump rams and ejection port positioned at the center of the spectacle plate and associated left/right hydraulic pump rams;

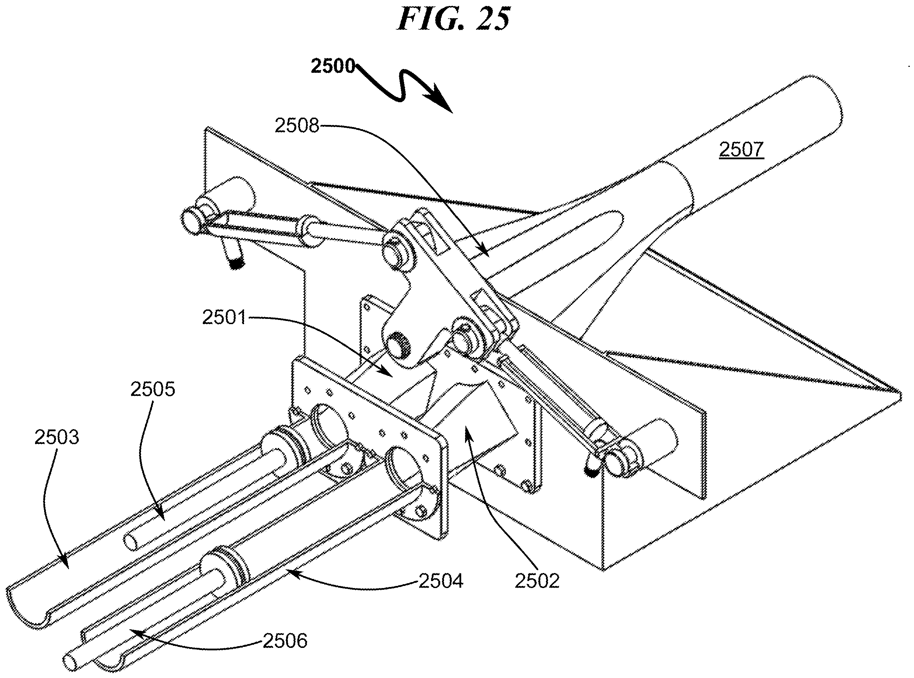

FIG. 25 illustrates a front perspective view of a preferred exemplary embodiment of the present invention utilizing a sectioned annular-ring-shaped spectacle plate and corresponding ejection port / cutting plate;

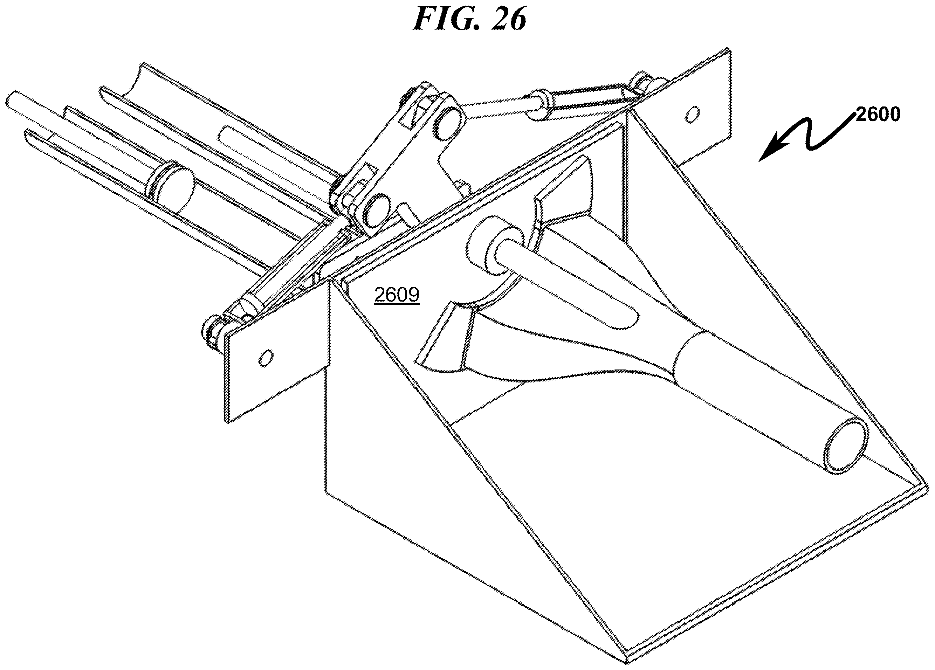

FIG. 26 illustrates a rear perspective view of a preferred exemplary embodiment of the present invention utilizing a sectioned annular-ring-shaped spectacle plate and corresponding ejection port / cutting plate;

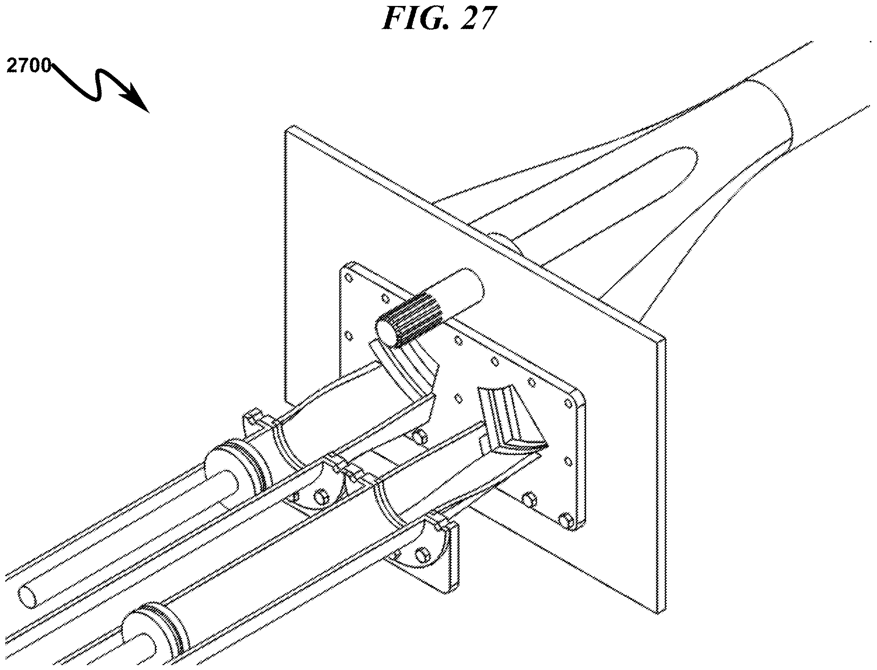

FIG. 27 illustrates a front perspective detail view of a preferred exemplary embodiment of the present invention utilizing a sectioned annular-ring-shaped spectacle plate and corresponding ejection port / cutting plate with transition hydraulic pump ram inputs in section view;

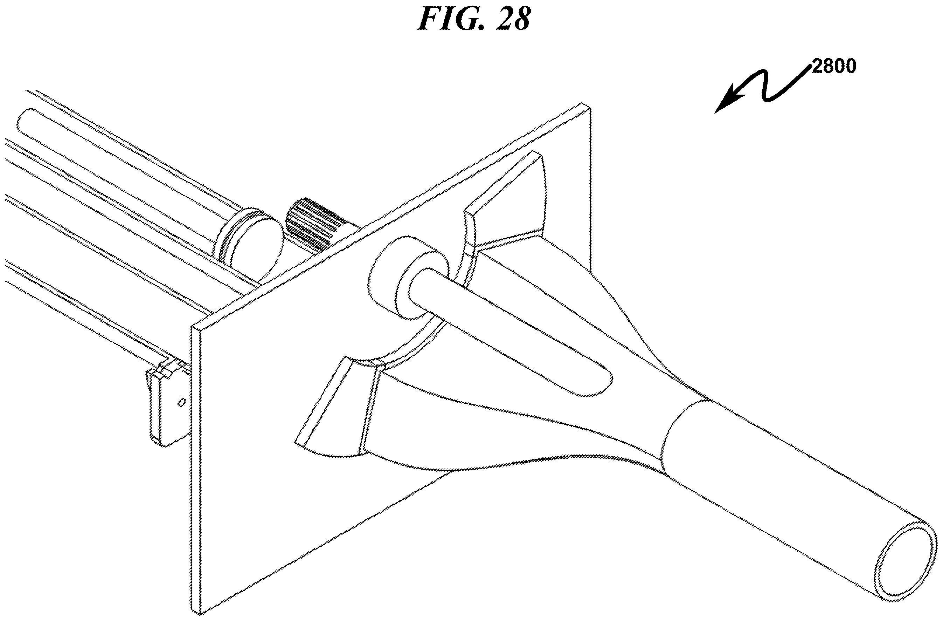

FIG. 28 illustrates a rear perspective detail view of a preferred exemplary embodiment of the present invention utilizing a sectioned annular-ring-shaped spectacle plate and corresponding ejection port / cutting plate with transition hydraulic pump ram inputs in section view;

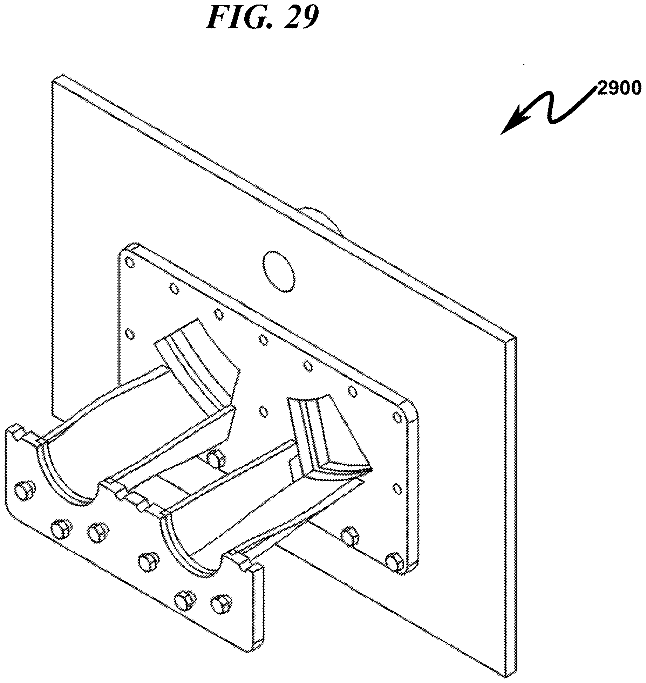

FIG. 29 illustrates a front perspective detail view of a preferred exemplary embodiment of the present invention utilizing a sectioned annular-ring-shaped spectacle plate and corresponding ejection port / cutting plate detailing the transition port apertures in the spectacle plate;

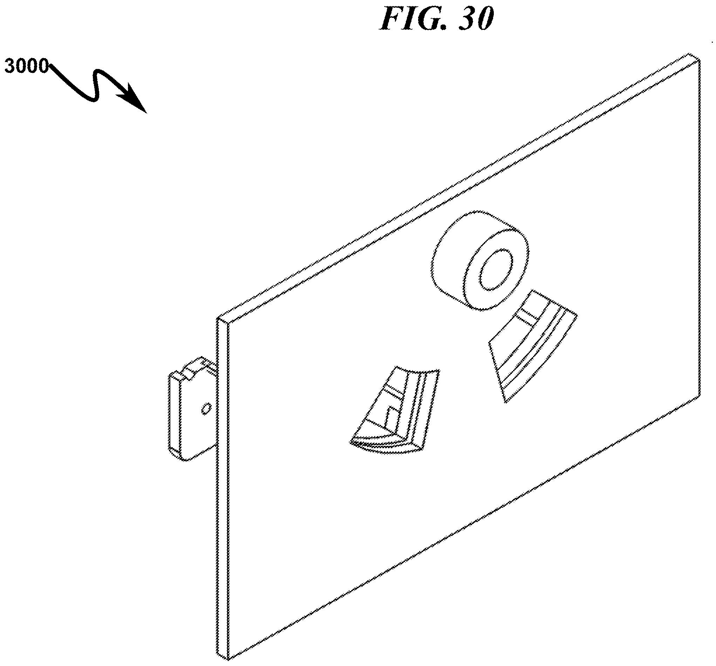

FIG. 30 illustrates a rear perspective detail view of a preferred exemplary embodiment of the present invention utilizing a sectioned annular-ring-shaped spectacle plate and corresponding ejection port/cutting plate detailing the transition port apertures in the spectacle plate;

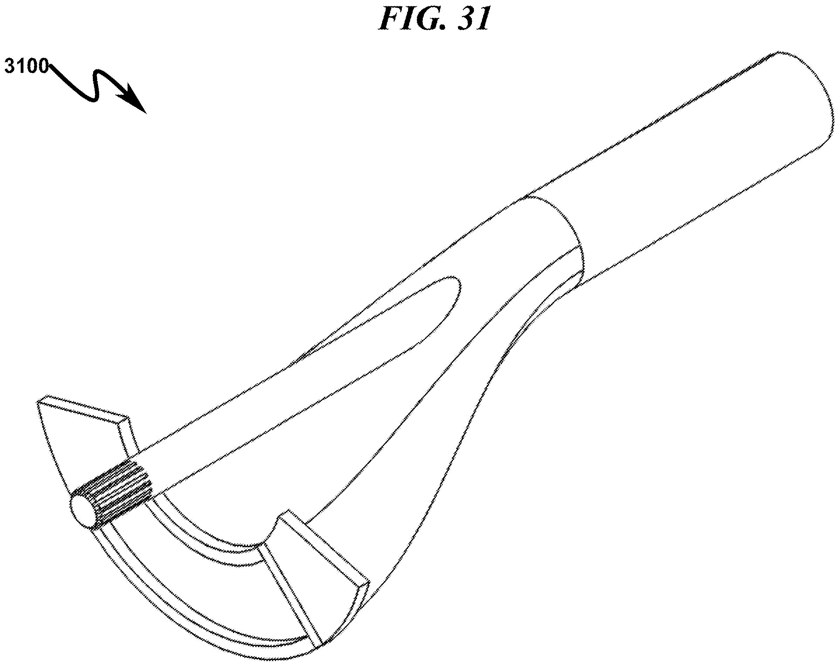

FIG. 31 illustrates a front perspective detail view of a preferred exemplary embodiment of the present invention utilizing a sectioned annular-ring-shaped spectacle plate and detailing the ejection port and cutting plate construction;

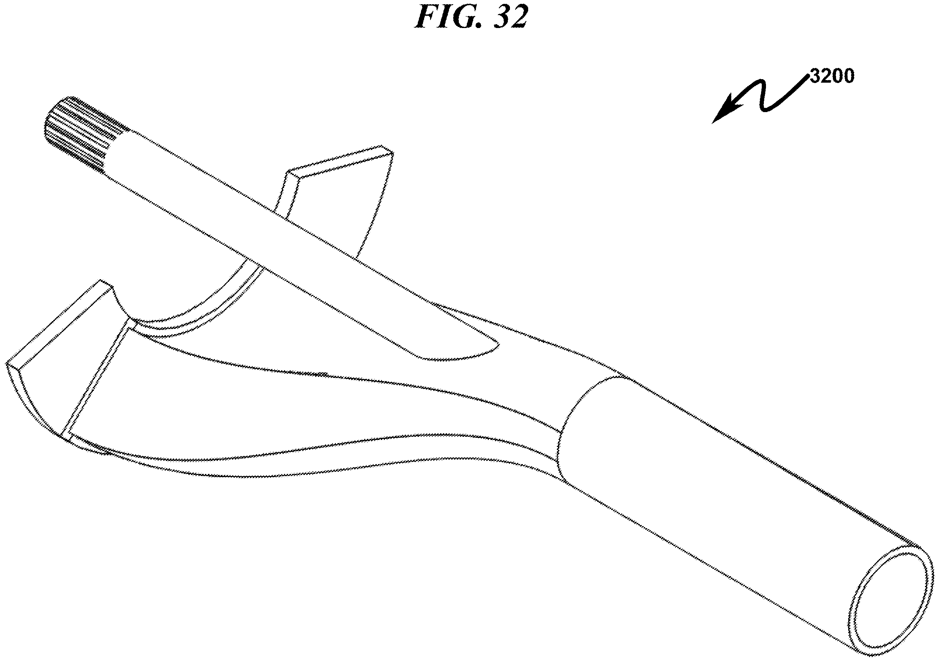

FIG. 32 illustrates a rear perspective detail view of a preferred exemplary embodiment of the present invention utilizing a sectioned annular-ring-shaped spectacle plate and corresponding ejection port / cutting plate and detailing the ejection port and cutting plate construction;

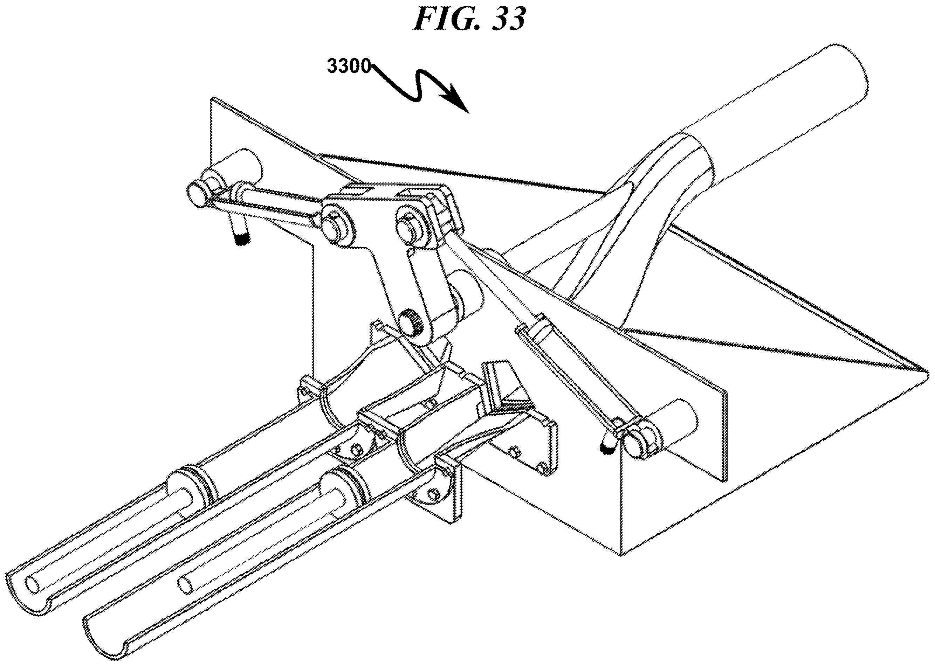

FIG. 33 illustrates a front perspective view of a preferred exemplary embodiment of the present invention utilizing a trapezoidal-shaped spectacle plate and corresponding ejection port / cutting plate;

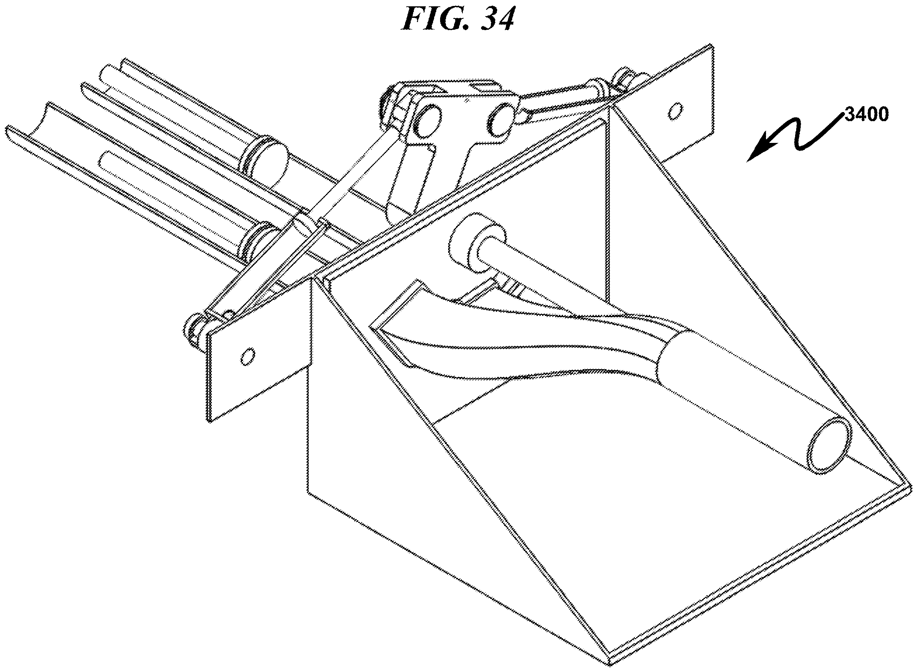

FIG. 34 illustrates a rear perspective view of a preferred exemplary embodiment of the present invention utilizing a trapezoidal-shaped spectacle plate and corresponding ejection port / cutting plate;

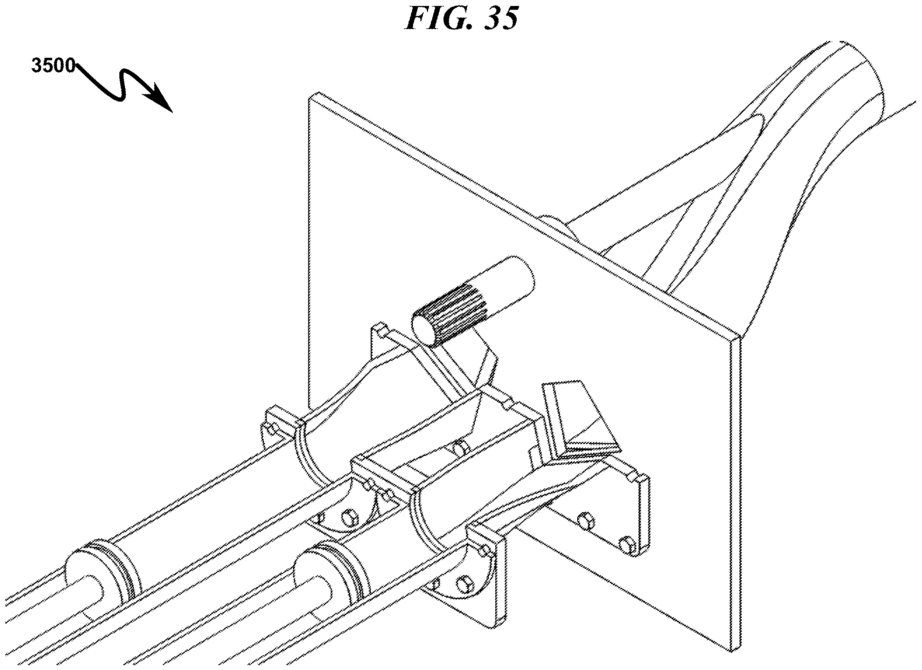

FIG. 35 illustrates a front perspective detail view of a preferred exemplary embodiment of the present invention utilizing a trapezoidal-shaped spectacle plate and corresponding ejection port / cutting plate with transition hydraulic pump ram inputs in section view;

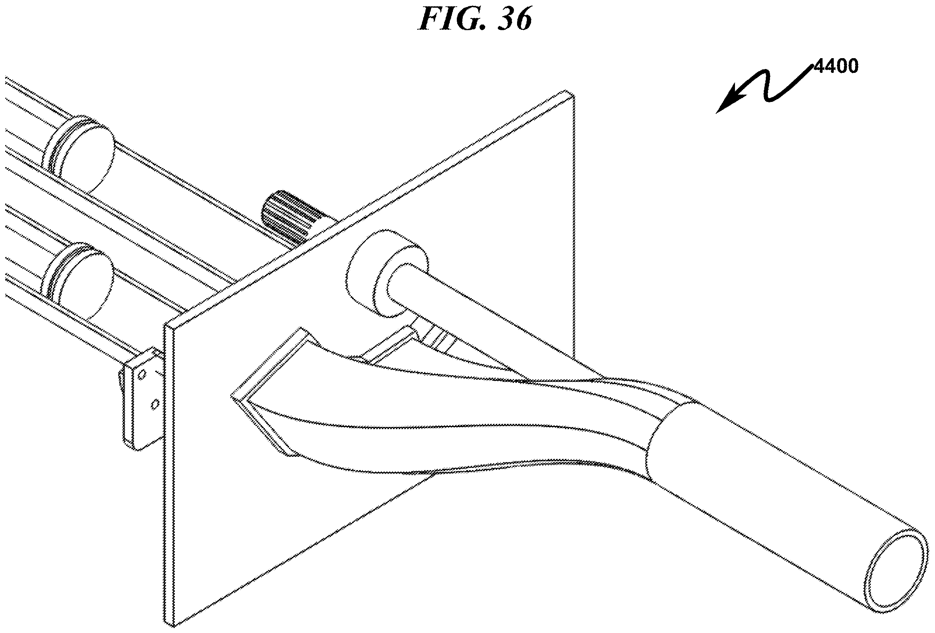

FIG. 36 illustrates a rear perspective detail view of a preferred exemplary embodiment of the present invention utilizing a trapezoidal-shaped spectacle plate and corresponding ejection port / cutting plate with transition hydraulic pump ram inputs in section view;

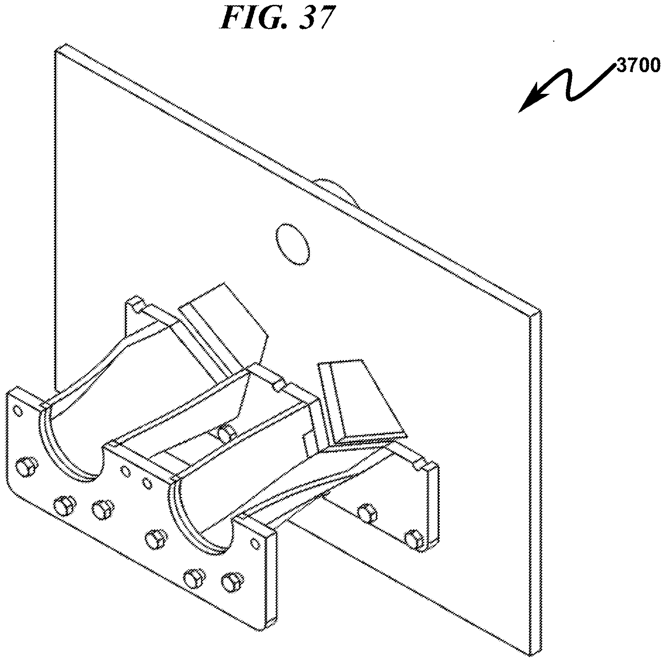

FIG. 37 illustrates a front perspective detail view of a preferred exemplary embodiment of the present invention utilizing a trapezoidal-shaped spectacle plate and corresponding ejection port / cutting plate detailing the transition port apertures in the spectacle plate;

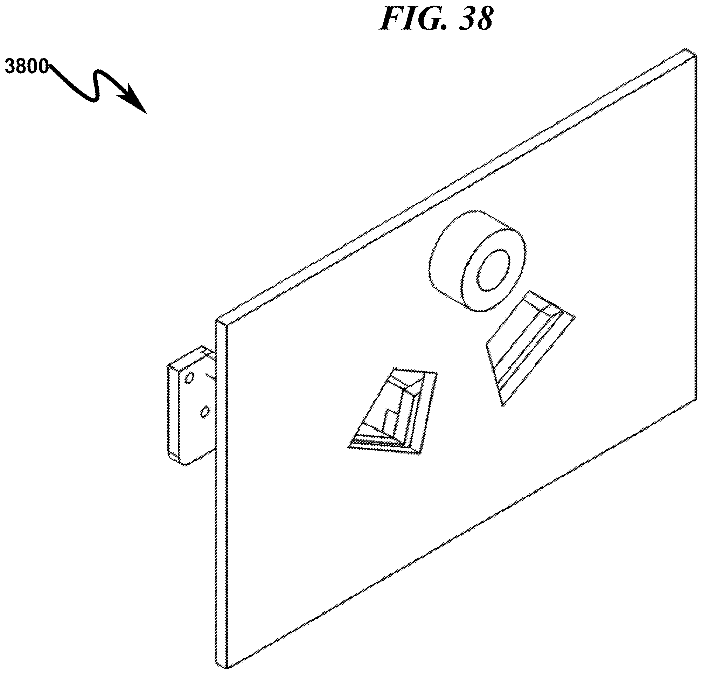

FIG. 38 illustrates a rear perspective detail view of a preferred exemplary embodiment of the present invention utilizing a trapezoidal-shaped spectacle plate and corresponding ejection port / cutting plate detailing the transition port apertures in the spectacle plate;

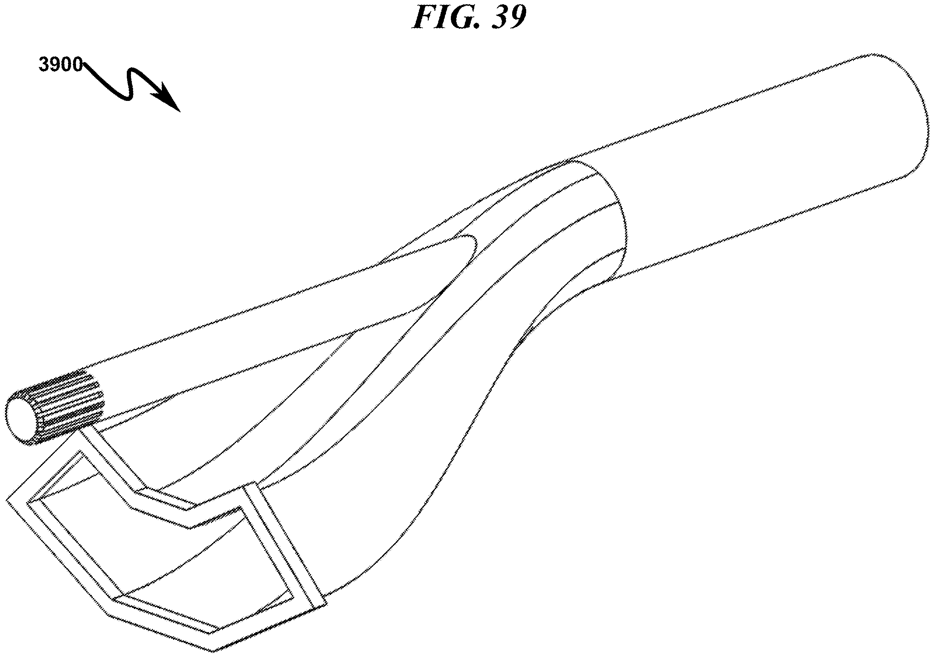

FIG. 39 illustrates a front perspective detail view of a preferred exemplary embodiment of the present invention utilizing a trapezoidal-shaped spectacle plate and detailing the ejection port and cutting plate construction;

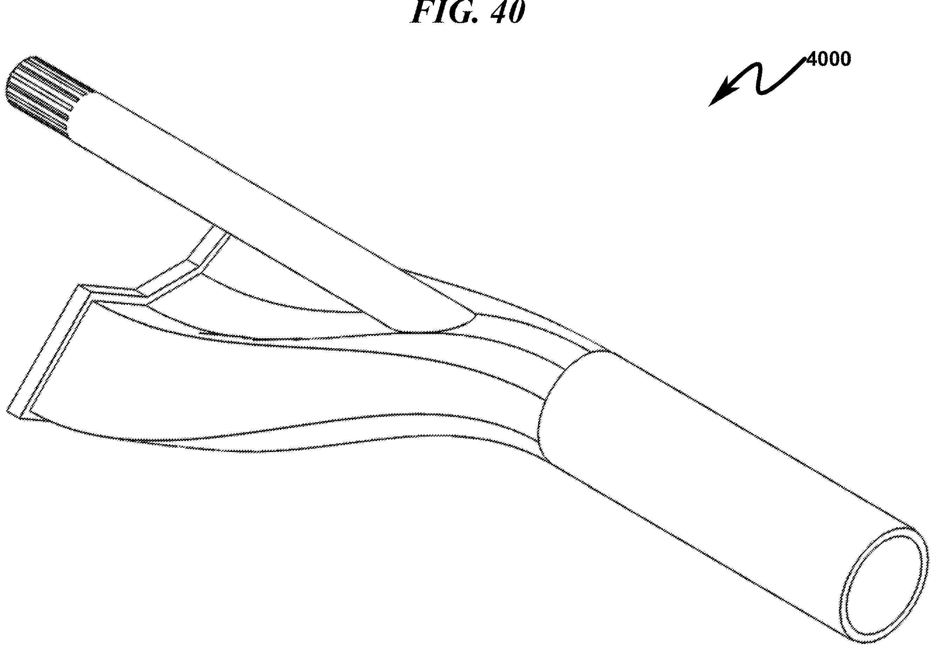

FIG. 40 illustrates a rear perspective detail view of a preferred exemplary embodiment of the present invention utilizing a trapezoidal-shaped spectacle plate and corresponding ejection port / cutting plate and detailing the ejection port and cutting plate construction;

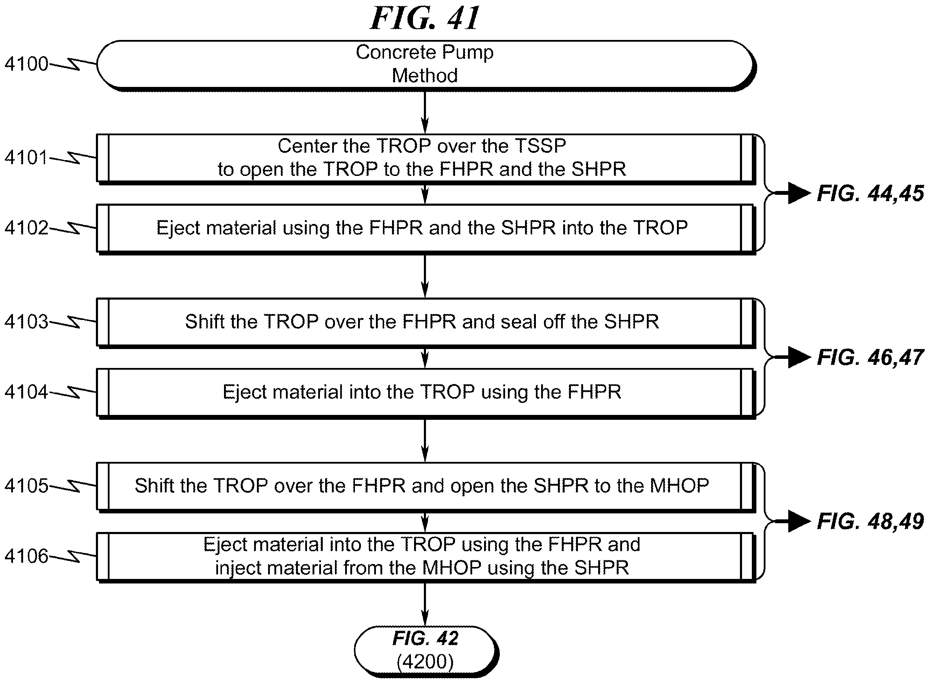

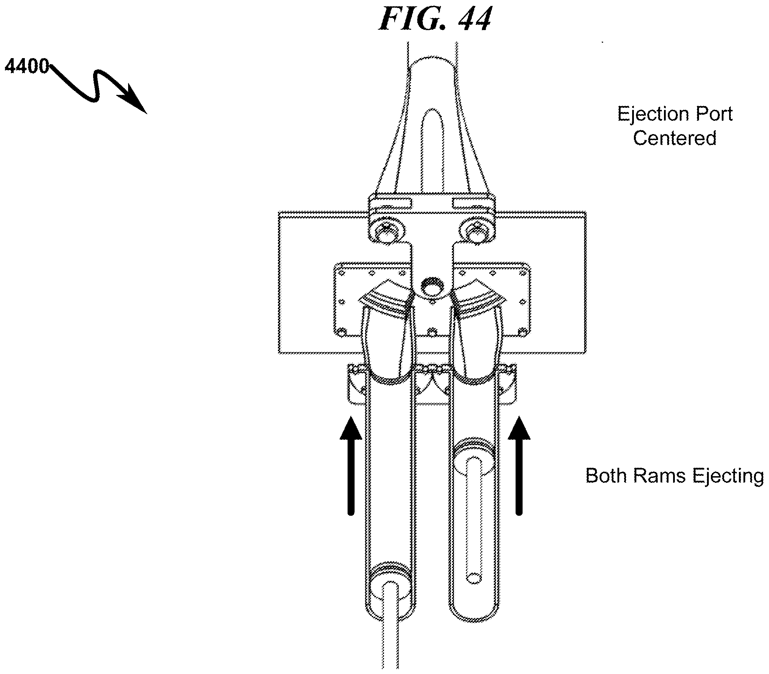

FIG. 41 illustrates a flowchart depicting a preferred exemplary invention method described in more detail in FIG. 44 - FIG. 61;

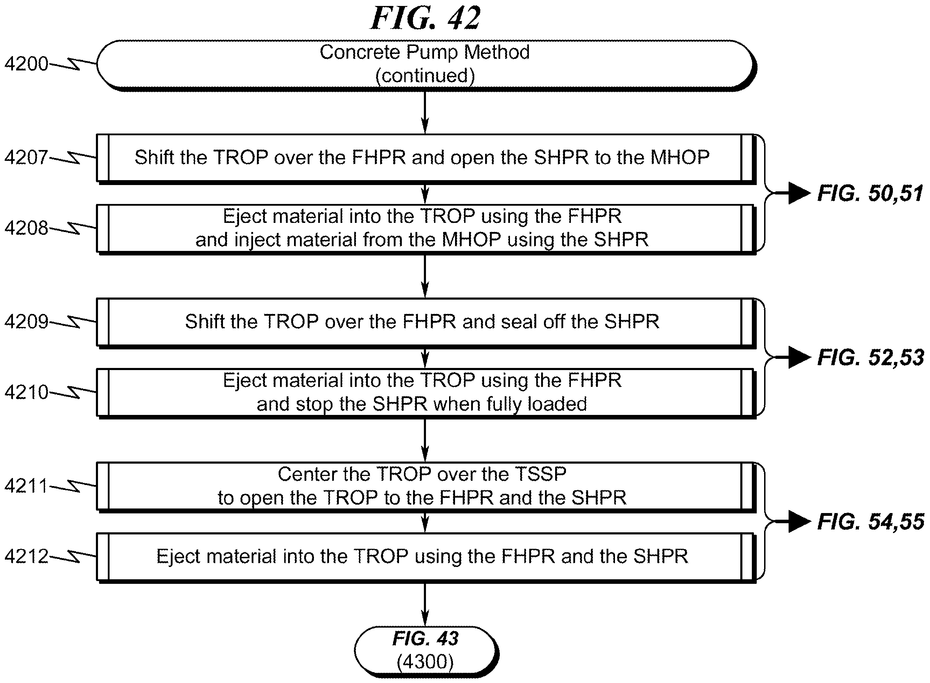

FIG. 42 illustrates a flowchart depicting a preferred exemplary invention method described in more detail in FIG. 44 - FIG. 61;

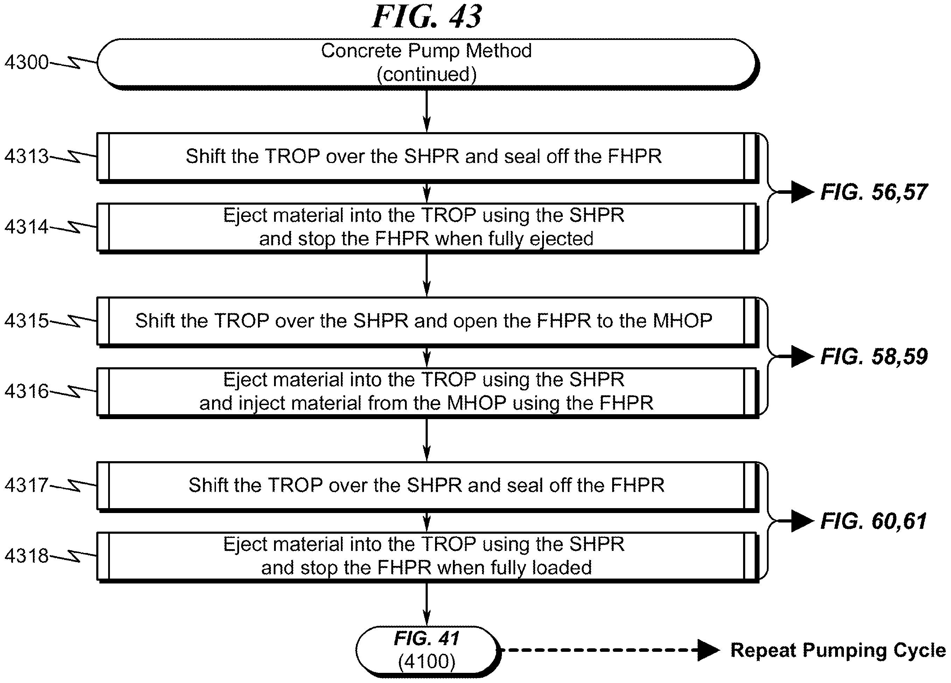

FIG. 43 illustrates a flowchart depicting a preferred exemplary invention method described in more detail in FIG. 44 - FIG. 61;
FIG. 44 illustrates a front perspective view of a preferred exemplary embodiment of the present invention utilizing a sectioned annular-ring-shaped spectacle plate configured with the ejection port centered and both rams ejecting;

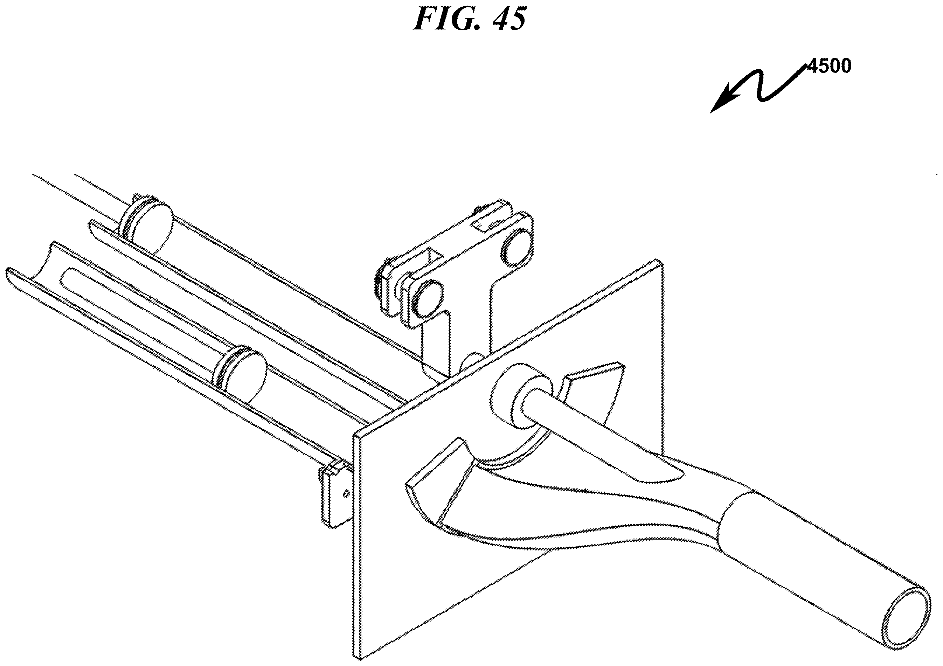

FIG. 45 illustrates a rear perspective view of a preferred exemplary embodiment of the present invention utilizing a sectioned annular-ring-shaped spectacle plate configured with the ejection port centered and both rams ejecting;

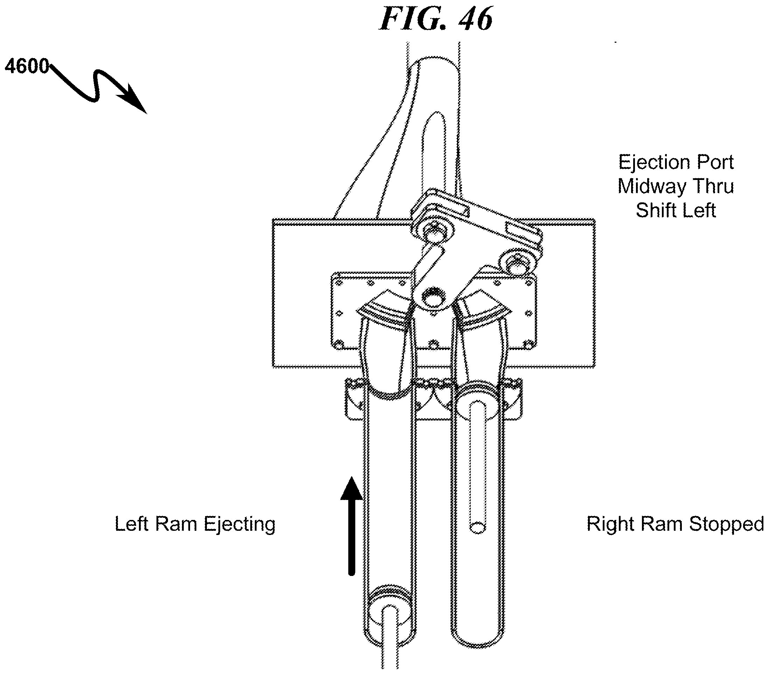

FIG. 46 illustrates a front perspective view of a preferred exemplary embodiment of the present invention utilizing a sectioned annular-ring-shaped spectacle plate configured with the ejection port positioned midway through shift left with the left ram ejecting and the right ram stopped;

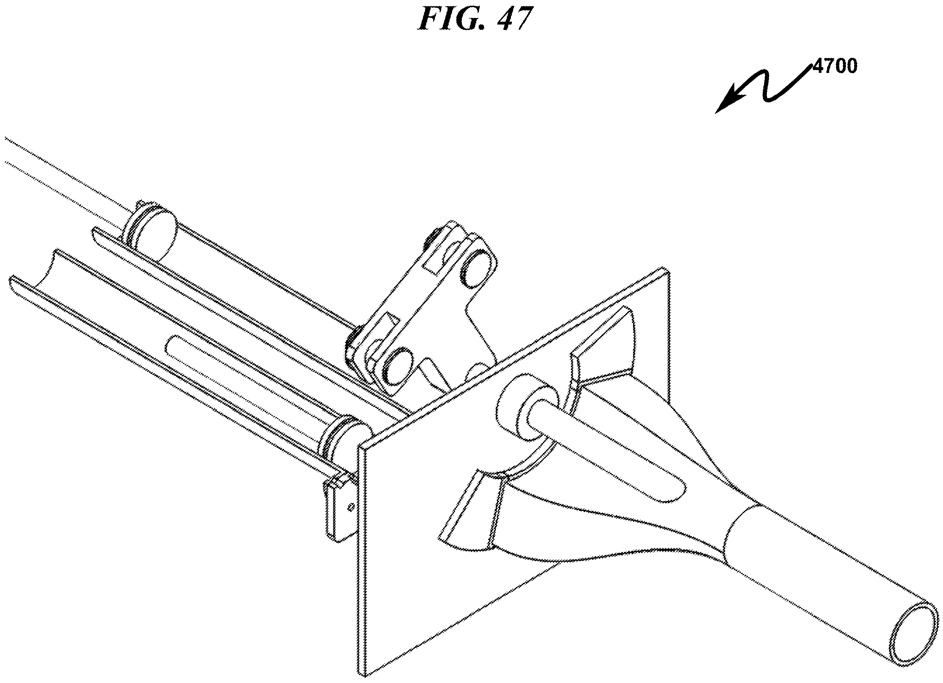

FIG. 47 illustrates a rear perspective view of a preferred exemplary embodiment of the present invention utilizing a sectioned annular-ring-shaped spectacle plate configured with the ejection port positioned midway through shift left with the left ram ejecting and the right ram stopped;

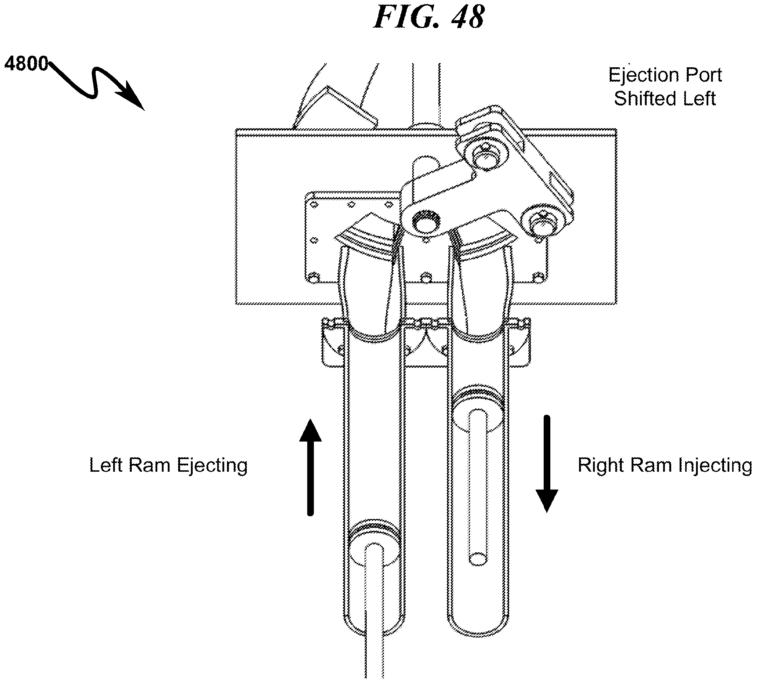

FIG. 48 illustrates a front perspective view of a preferred exemplary embodiment of the present invention utilizing a sectioned annular-ring-shaped spectacle plate configured with the ejection port shifted left with the left ram ejecting and the right ram injecting;

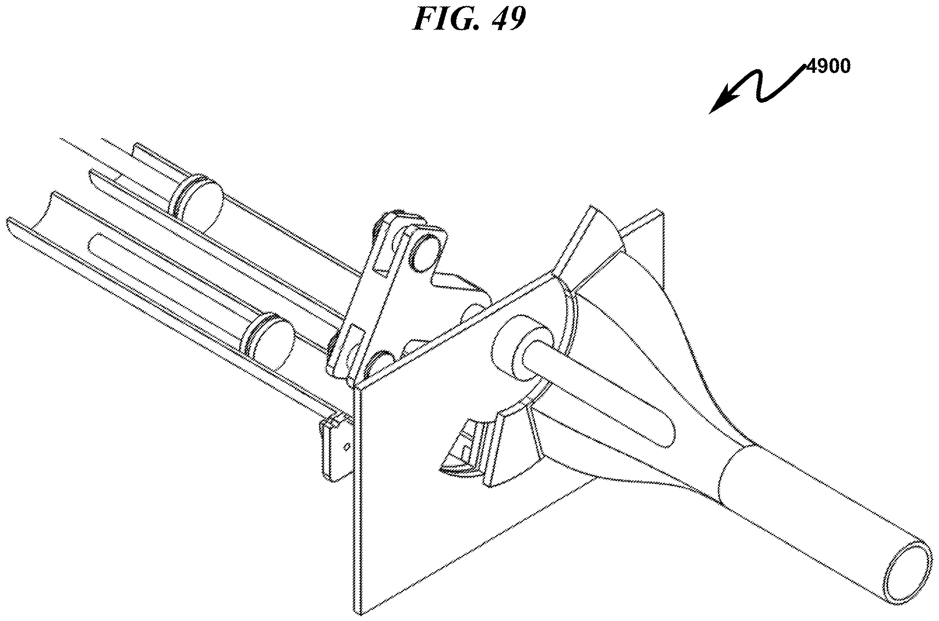

FIG. 49 illustrates a rear perspective view of a preferred exemplary embodiment of the present invention utilizing a sectioned annular-ring-shaped spectacle plate configured with the ejection port shifted left with the left ram ejecting and the right ram injecting;

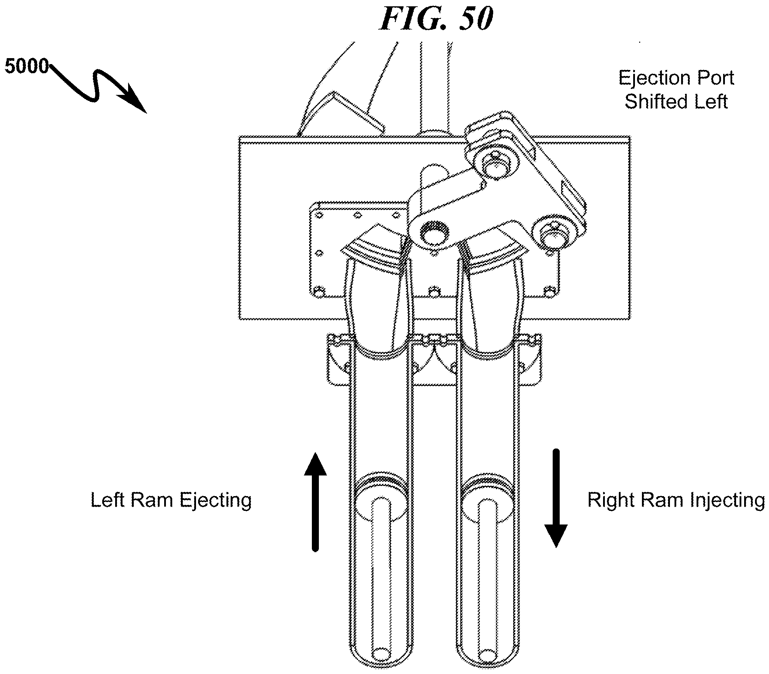

FIG. 50 illustrates a front perspective view of a preferred exemplary embodiment of the present invention utilizing a sectioned annular-ring-shaped spectacle plate configured with the ejection port shifted left with the left ram ejecting and the right ram injecting;

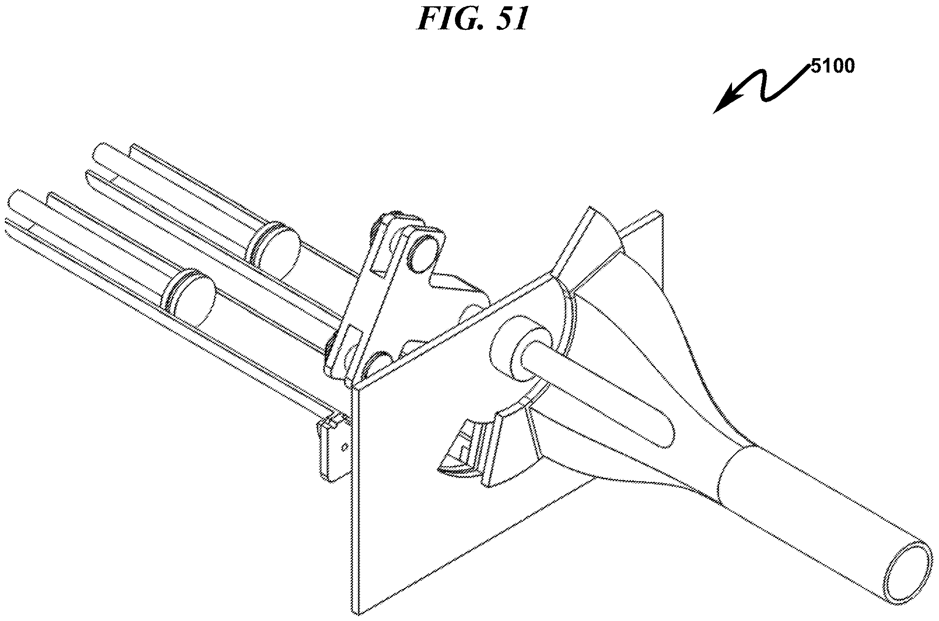

FIG. 51 illustrates a rear perspective view of a preferred exemplary embodiment of the present invention utilizing a sectioned annular-ring-shaped spectacle plate configured with the ejection port shifted left with the left ram ejecting and the right ram injecting;

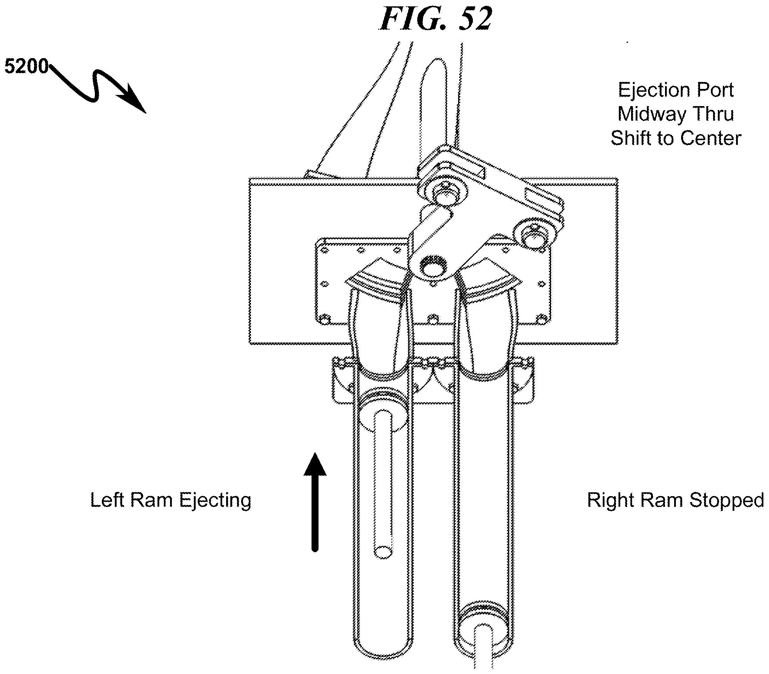

FIG. 52 illustrates a front perspective view of a preferred exemplary embodiment of the present invention utilizing a sectioned annular-ring-shaped spectacle plate configured with the ejection port positioned midway thru shift to center with the left ram ejecting and the right ram stopped;

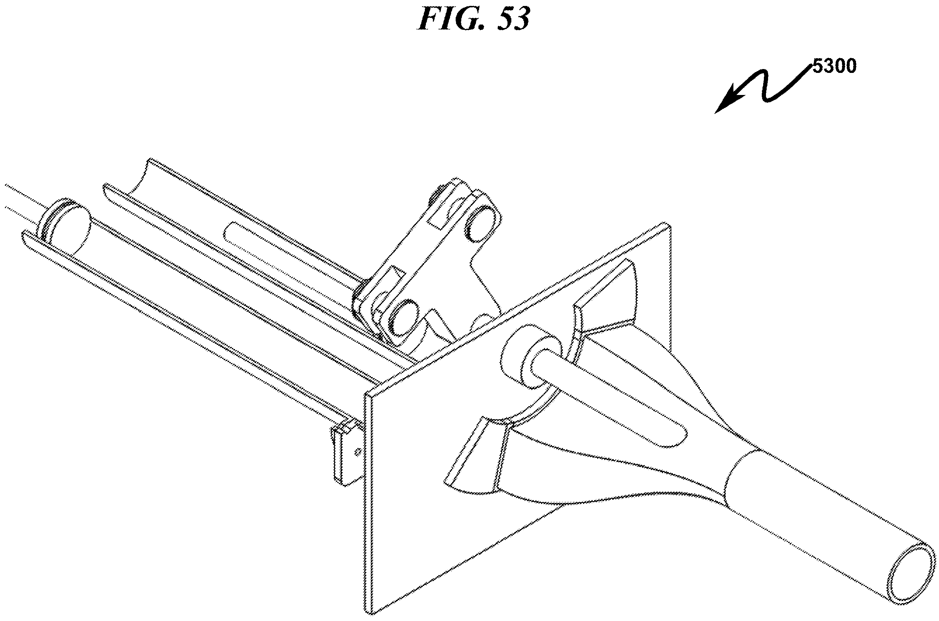

FIG. 53 illustrates a rear perspective view of a preferred exemplary embodiment of the present invention utilizing a sectioned annular-ring-shaped spectacle plate configured with the ejection port positioned midway thru shift to center with the left ram ejecting and the right ram stopped;

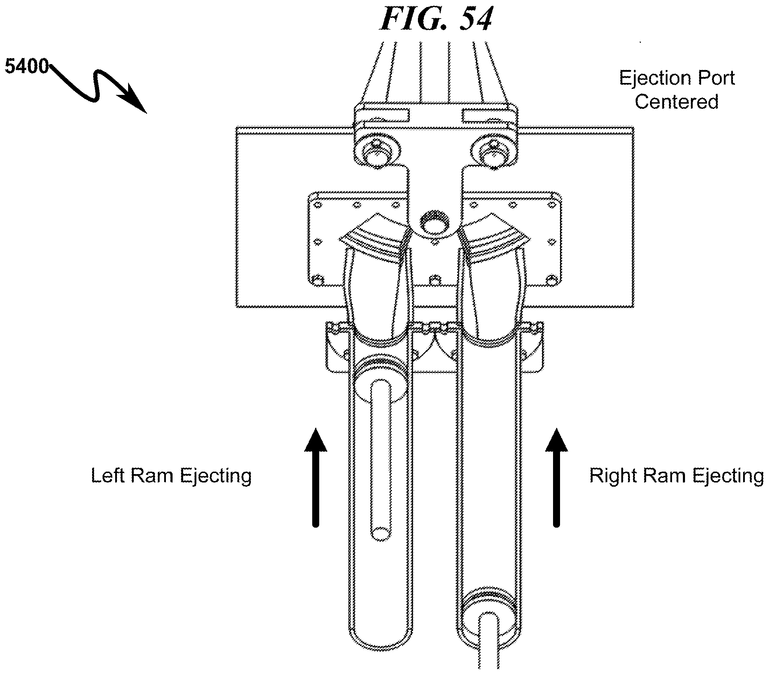

FIG. 54 illustrates a front perspective view of a preferred exemplary embodiment of the present invention utilizing a sectioned annular-ring-shaped spectacle plate configured with the ejection port centered with the left ram ejecting and the right ram ejecting;

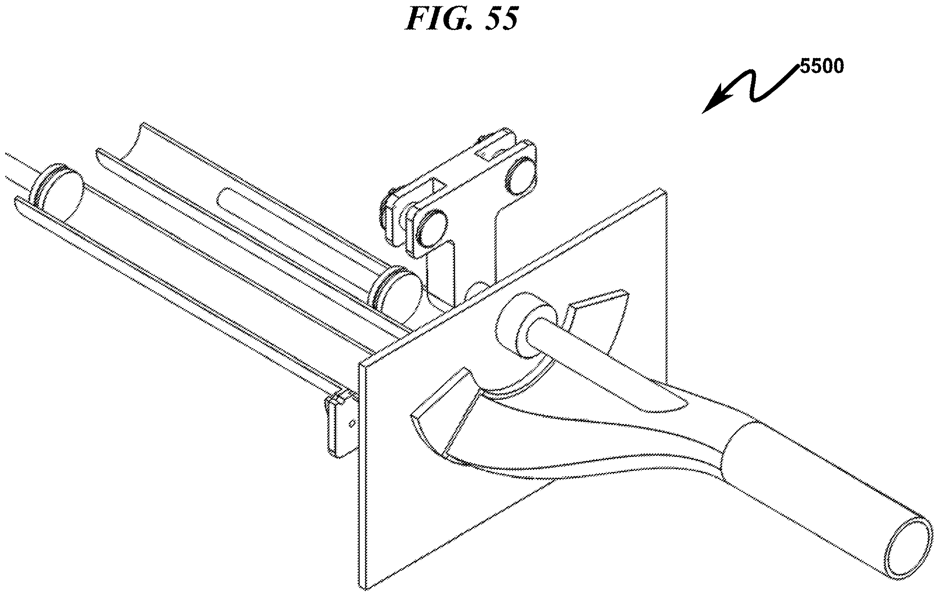

FIG. 55 illustrates a rear perspective view of a preferred exemplary embodiment of the present invention utilizing a sectioned annular-ring-shaped spectacle plate configured with the ejection port centered with the left ram ejecting and the right ram ejecting;

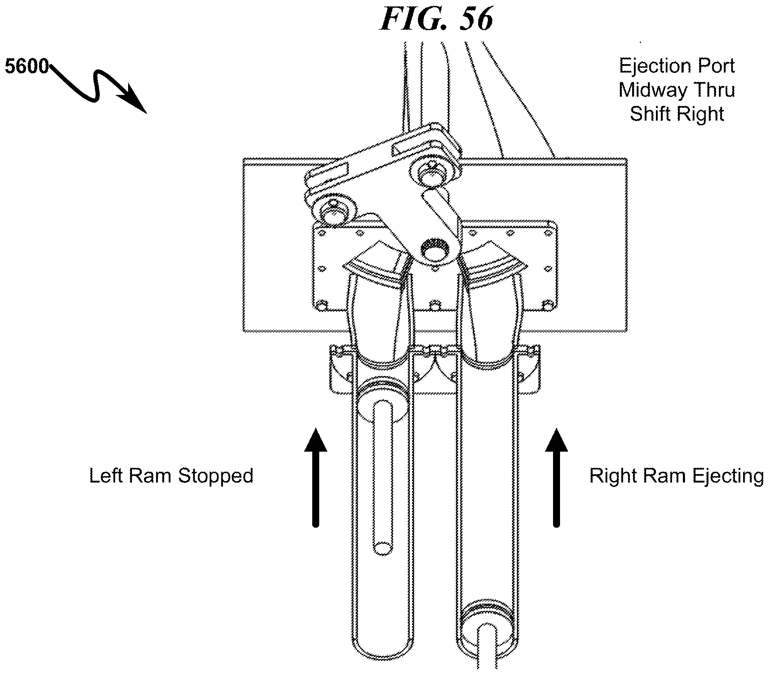

FIG. 56 illustrates a front perspective view of a preferred exemplary embodiment of the present invention utilizing a sectioned annular-ring-shaped spectacle plate configured with the ejection port positioned midway thru shift right with the left ram stopped and the right ram ejecting;

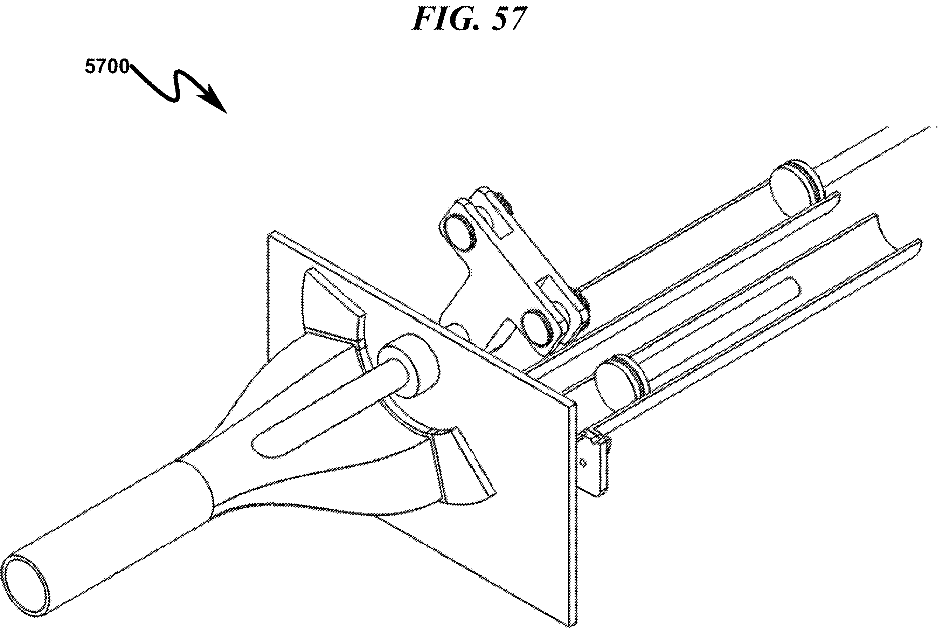

FIG. 57 illustrates a rear perspective view of a preferred exemplary embodiment of the present invention utilizing a sectioned annular-ring-shaped spectacle plate configured with the ejection port positioned midway thru shift right with the left ram stopped and the right ram ejecting;

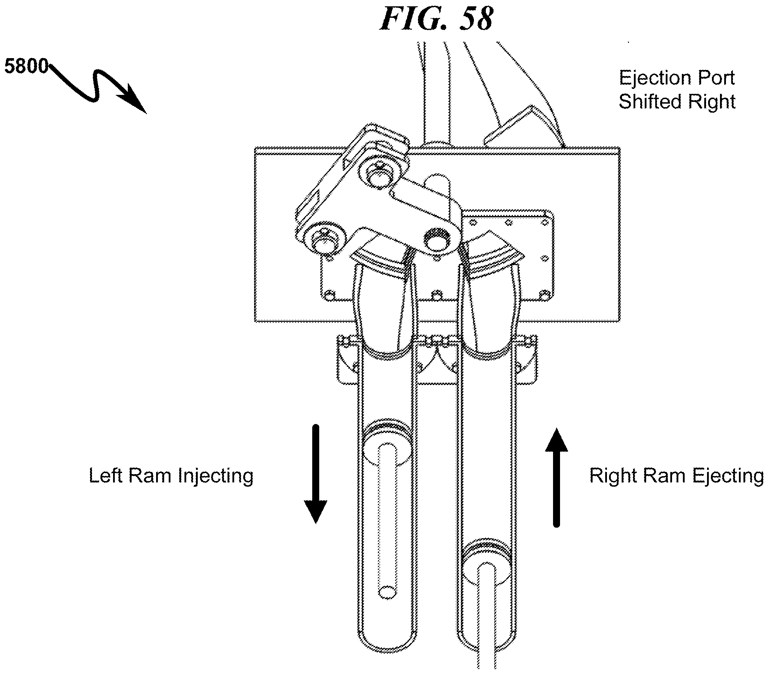

FIG. 58 illustrates a front perspective view of a preferred exemplary embodiment of the present invention utilizing a sectioned annular-ring-shaped spectacle plate configured with the ejection port shifted right with the left ram injecting and the right ram ejecting;

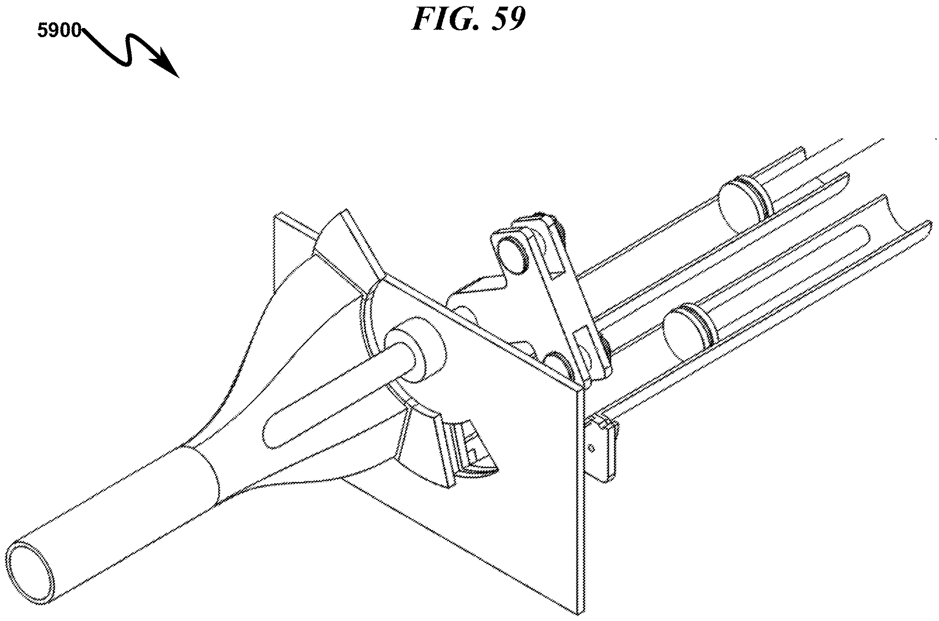

FIG. 59 illustrates a rear perspective view of a preferred exemplary embodiment of the present invention utilizing a sectioned annular-ring-shaped spectacle plate configured with the ejection port shifted right with the left ram injecting and the right ram ejecting;

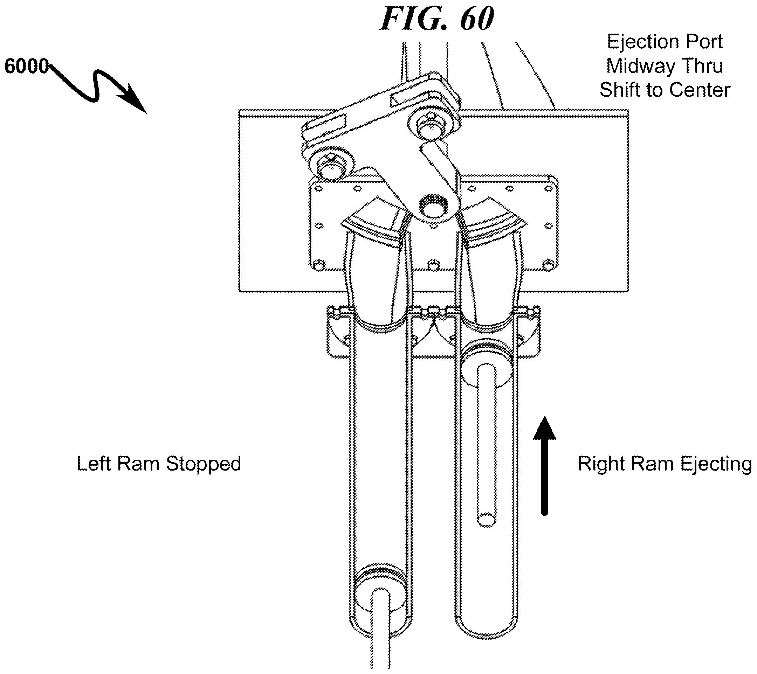

FIG. 60 illustrates a front perspective view of a preferred exemplary embodiment of the present invention utilizing a sectioned annular-ring-shaped spectacle plate configured with the ejection port positioned midway thru shift to center with the left ram stopped and the right ram ejecting;

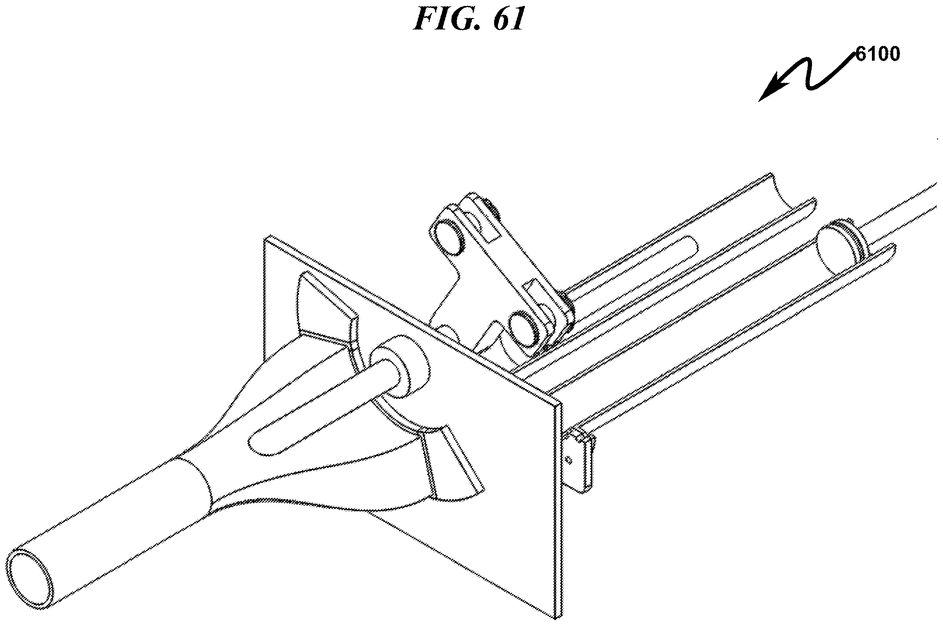

FIG. 61 illustrates a rear perspective view of a preferred exemplary embodiment of the present invention utilizing a sectioned annular-ring-shaped spectacle plate configured with the ejection port positioned midway thru shift to center with the left ram stopped and the right ram ejecting;

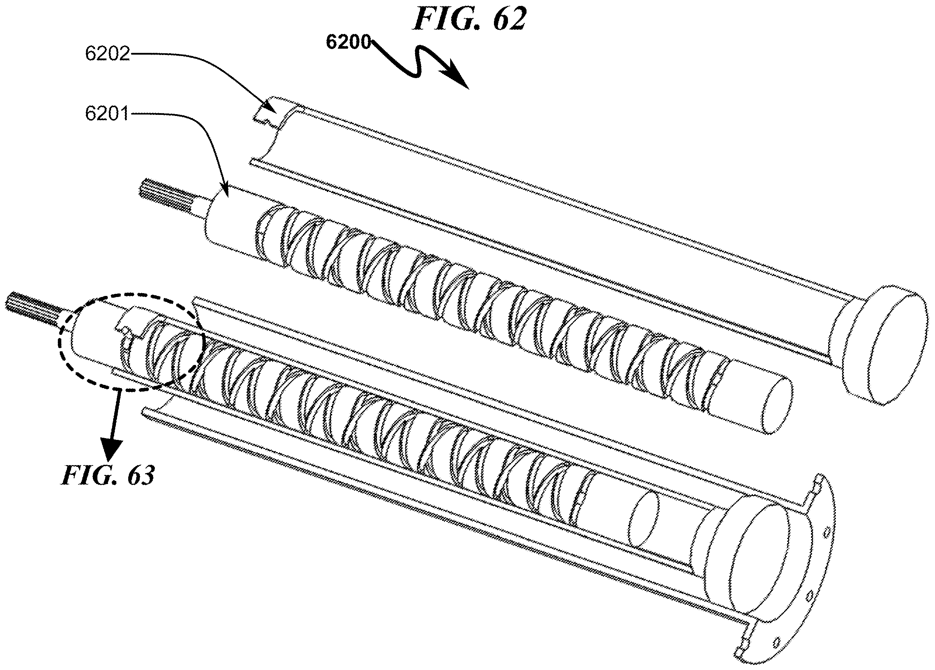

FIG. 62 illustrates a perspective sectional view of a preferred exemplary embodiment of the present invention incorporating a shaft-driven pumping system;

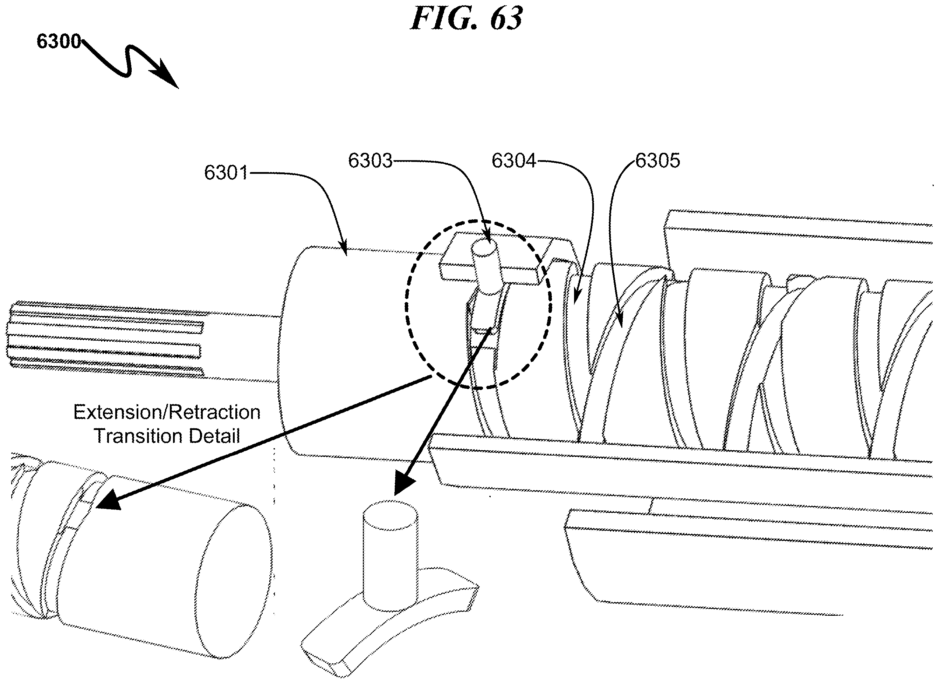

FIG. 63 illustrates a detail perspective sectional view of a preferred exemplary embodiment of the present invention incorporating a shaft-driven pumping system;

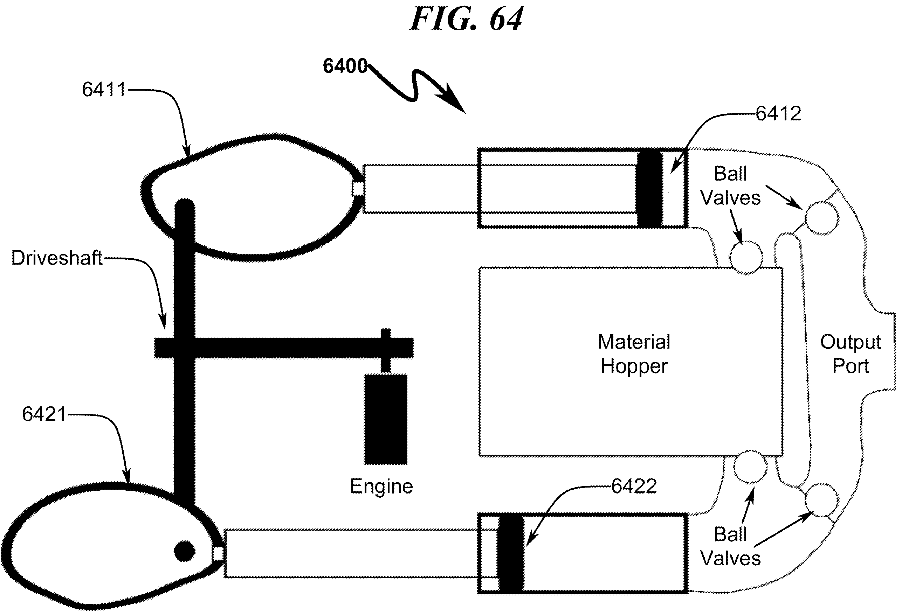

FIG. 64 illustrates a schematic diagram of a preferred exemplary invention embodiment utilizing a cam-driven pump lever ram operation with ball valves;

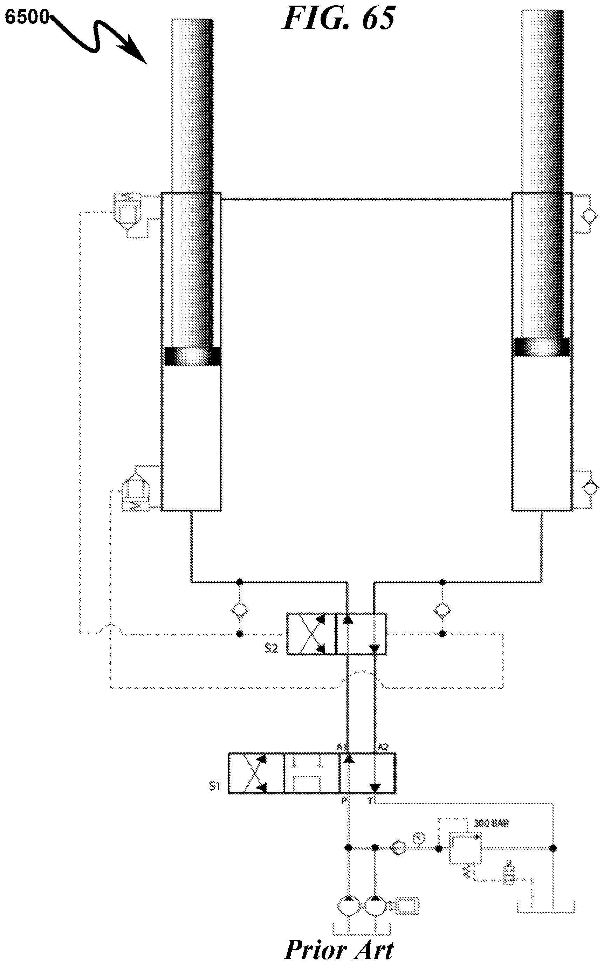

FIG. 65 illustrates a hydraulic schematic diagram of a typical prior art twin cylinder concrete pump system; and

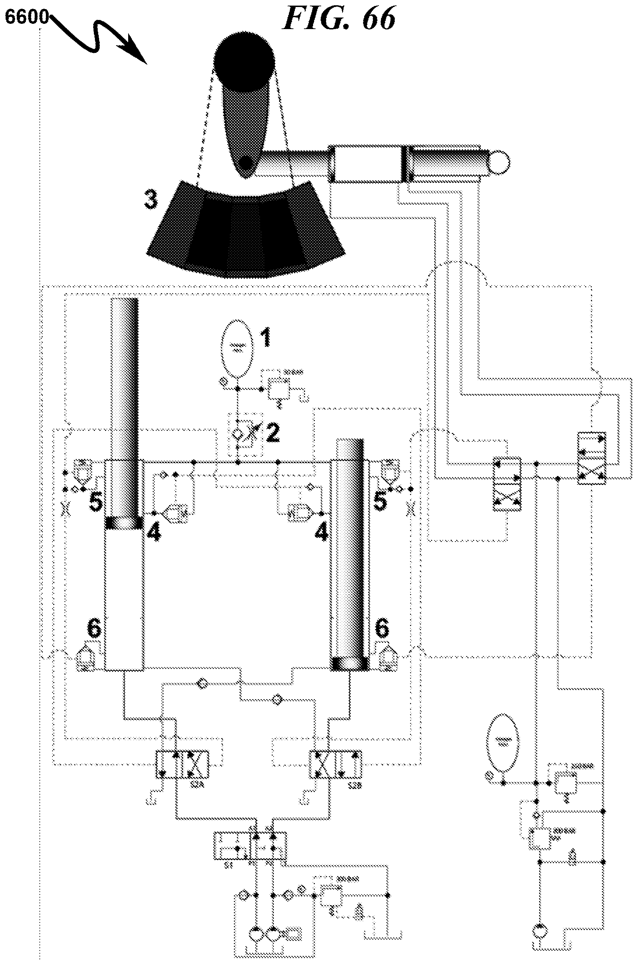

FIG. 66 illustrates a hydraulic schematic diagram of a preferred exemplary invention embodiment utilizing a trapezoidal spectacle plate ejection port that may in some embodiments be substituted by ball valves.

### DESCRIPTION OF THE PRESENTLY PREFERRED EXEMPLARY EMBODIMENTS

While this invention is susceptible of embodiment in many different forms, there is shown in the drawings and will herein be described in detailed preferred embodiment of the invention with the understanding that the present disclosure is to be considered as an exemplification of the principles of the invention and is not intended to limit the broad aspect of the invention to the embodiment illustrated.

The numerous innovative teachings of the present application will be described with particular reference to the presently preferred embodiment, wherein these innovative teachings are advantageously applied to the particular problems of a **CONCRETE PUMP SYSTEM AND METHOD.** However, it should be understood that this embodiment is only one example of the many advantageous uses of the innovative teachings herein. In general, statements made in the specification of the present application do not necessarily limit any of the various claimed inventions. Moreover, some statements may apply to some inventive features but not to others.

### Trapezoid Not Limitive

The present invention description herein makes general reference to the construction of portions of the invention as having the shape of a "trapezoid" or being "trapezoidal" in shape. However, this terminology may have a variety of definitions within the mathematical arts and as such should be broadly construed to include any of the following:
- four-sided polygons having exactly two sides that are parallel;
- four-sided polygons having two sets of sides that are parallel;
- four-sided polygons in which the legs on opposite sides of the polygon have the same length and the base angles have the same measure (isosceles trapezoid);
- four-sided polygons in which two adjacent angles are right angles (right trapezoid; also called right-angled trapezoid);
- four-sided polygons which have an inscribed circle (tangential trapezoid);
- four-sided parallelograms (including rhombuses, rectangles and squares); and
- annular sectors comprising one or more sectors of an annulus or annular ring that approximate an isosceles trapezoid.

One skilled in the art will recognize that the construction of the present invention may make use of a variety of geometric shapes (some of which may not be polygonal in shape) to accomplish the goal of providing substantially uniform material flow from the concrete pumping system.

### System Overview (2500)-(3200)

The present invention in various embodiments addresses one or more of the above objectives in the following manner as generally depicted in FIG. 25 (**2500**) - FIG. 32 (**3200**). As depicted in FIG. 25 (**2500**), the system provides for trapezoidal-shaped transition regions (**2501, 2502**) between the hydraulic pump cylinders (**2503, 2504**), their corresponding hydraulic pump rams (**2505**, **2506**) and the material ejection port (**2507**). The ejection port (**2507**) is configured with a trapezoidal-shaped transition region (**2508**) that articulates between the left (**2503**) and right (**2504**) pump cylinders through the spectacle plate (**2609**) as depicted in FIG. 26 (**2600**).

Further detail of the trapezoidal-shaped transition regions (**2501, 2502**) and spectacle plate (**2609**) are depicted in the sectional views of FIG. 27 (**2700**) and FIG. 28 (**2800**). FIG. 29 (**2900**) and FIG. 30 (**3000**) detail the trapezoidal-shaped transition regions (**2501**, **2502**) and spectacle plate (**2609**) without the hydraulic pump cylinders and ejection port/cutting plate. The ejection port / cutting plate (with splined driveshaft) are illustrated in detail in the perspective views of FIG. 31 (**3100**) and FIG. 32 (**3200**).

One skilled in the art will recognize that the various embodiments depicted herein may be combined to produce a variety of system configurations consistent with the teachings of the invention.

### Trapezoidal-Shaped Spectacle Plate Embodiment (3300)-(4000)

As mentioned previously, the term "trapezoidal" should be given a broad interpretation in defining the scope of the present invention. As depicted in FIG. 25 (**2500**) ... FIG. 32 (**3200**), this is embodied as a sector of an annulus or annular ring. However, as depicted in FIG. 33 (**3300**) - FIG. 40 (**4000**), the spectacle plate aperture (and corresponding ejection port cutting plate) may be configured using conventional trapezoidal structures as shown. Combinations of these two constructs are also anticipated by the present invention. The key features of (a) providing port flow during all portions of the pumping cycle and (b) sealing off access to the material hopper from the ejection port during cycle shifts are the only restraints on the invention operation and construction.

### Method Overview (4100)-(6100)

A preferred invention method embodiment may be generalized as illustrated in the flowcharts depicted in FIG. 41 (**4100**) - FIG. 43 (**4300**) and corresponding positional diagrams depicted in FIG. 44 (**4400**) - FIG. 61 (**6100**) wherein the method operates in conjunction with a concrete pump system comprising:
(a) material hopper (MHOP);
(b) trapezoidal-shaped spectacle plate (TSSP);
(c) hydraulic pump;
(d) trapezoidal-shaped cutting ring (TSCR); and
(e) ejection port;
wherein
the TSSP comprises a first trapezoidal inlet port (FTIP) and a second trapezoidal inlet port (STIP);
the TSSP is attached to the MHOP and configured to supply concrete from the MHOP to the hydraulic pump through the FTIP and the STIP;
the hydraulic pump comprises a first hydraulic pump ram (FHPR) and a second hydraulic pump ram (SHPR);
the FHPR is configured to accept concrete via the FTIP;
the SHPR is configured to accept concrete via the STIP;
the TSCR comprises a trapezoidal receiver output port (TROP) configured to alternately traverse between positions that cover the FTIP and the STIP;
the TROP is configured to direct concrete from the FTIP and the STIP to the ejection port;
the hydraulic pump is configured to eject concrete from the FHPR into the TROP when the TROP is positioned to cover the FTIP;
the hydraulic pump is configured to inject concrete from the MHOP into the SHPR when the TROP is positioned to cover the FTIP;
the hydraulic pump is configured to eject concrete from the SHPR into the TROP when the TROP is positioned to cover the STIP; and
the hydraulic pump is configured to inject concrete from the MHOP into the FHPR when the TROP is positioned to cover the STIP;
wherein the method comprises the steps of:
(1) Centering the TROP over the TSSP to open the TROP to the FHPR and the SHPR (**4101**) (as depicted in FIG. 44 (**4400**) and FIG. 45 (**4500**));
(2) Ejecting material using the FHPR and the SHPR into the TROP (**4102**) (as depicted in FIG. 44 (**4400**) and FIG. 45 (**4500**));
(3) Shifting the TROP over the FHPR and sealing off the SHPR (4103) (as depicted in FIG. 46 (**4600**) and FIG. 47 (**4700**));
(4) Ejecting material into the TROP using the FHPR (**4104**) (as depicted in FIG. 46 (**4600**) and FIG. 47 (**4700**));
(5) Shifting the TROP over the FHPR and opening the SHPR to the MHOP (**4105**) (as depicted in FIG. 48 (**4800**) and FIG. 49 (**4900**));
(6) Ejecting material into the TROP using the FHPR and injecting material from the MHOP using the SHPR (**4106**) (as depicted in FIG. 48 (**4800**) and FIG. 49 (**4900**));
(7) Shifting the TROP over the FHPR and opening the SHPR to the MHOP (**4207**) (as depicted in FIG. 50 (**5000**) and FIG. 51 (**5100**));
(8) Ejecting material into the TROP using the FHPR and injecting material from the MHOP using the SHPR (optionally at twice the ejection rate of the FHPR) (**4208**) (as depicted in FIG. 50 (**5000**) and FIG. 51 (**5100**));
(9) Shifting the TROP over the FHPR and sealing off the SHPR (**4209**) (as depicted in FIG. 52 (**5200**) and FIG. 53 (**5300**));
(10) Ejecting material into the TROP using the FHPR and stopping the SHPR when fully loaded (**4210**) (as depicted in FIG. 52 (**5200**) and FIG. 53 (**5300**));
(11) Centering the TROP over the TSSP to open the TROP to the FHPR and the SHPR (**4211**) (as depicted in FIG. 54 (**5400**) and FIG. 55 (**5500**));
(12) Ejecting material into the TROP using the FHPR and the SHPR (**4212**) (as depicted in FIG. 54 (**5400**) and FIG. 55 (**5500**));
(13) Shifting the TROP over the SHPR and sealing off the FHPR (**4313**) (as depicted in FIG. 56 (**5600**) and FIG. 57 (**5700**));
(14) Ejecting material into the TROP using the SHPR and stopping the FHPR when fully ejected (**4314**) (as depicted in FIG. 56 (**5600**) and FIG. 57 (**5700**));
(15) Shifting the TROP over the SHPR and opening the FHPR to the MHOP (**4315**) (as depicted in FIG. 58 (**5800**) and FIG. 59 (**5900**));
(16) Ejecting material into the TROP using the SHPR and injecting material from the MHOP using the FHPR (optionally at twice the ejection rate of the SHPR) (**4316**) (as depicted in FIG. 58 (**5800**) and FIG. 59 (**5900**));
(17) Shifting the TROP over the SHPR and sealing off the FHPR (**4317**) (as depicted in FIG. 60 (**6000**) and FIG. 61 (**6100**));
(18) Ejecting material into the TROP using the SHPR and stopping the FHPR when fully loaded (**4318**) (as depicted in FIG. 60 (**6000**) and FIG. 61 (**6100**)); and
(19) Proceeding to step (1) to repeat material pumping operations.

One skilled in the art will recognize that this method as depicted is applied to a pumping system having two hydraulic pump rams (HPRs). Other preferred invention embodiments may employ a plurality of HPRs in a coordinated fashion using the same techniques to achieve higher pump flow rates as discussed elsewhere herein.

### Annulus Transition Sizing Calculations

As generally depicted in FIG. 25 (**2500**) - FIG. 40 (**4000**), the transition interfaces between the pump cylinders and the spectacle plate may be optimally sized in some preferred embodiments so that the circular pump cylinder face area and the trapezoidal spectacle plate interfaces are approximately equal. One skilled in the art will readily be able to calculate the required spectacle plate sizing for these preferred embodiments.

### Mechanical Methods of Operation (6200)-(6400)

While many preferred invention embodiments operate hydraulically, the present invention also anticipates that some embodiments may operate mechanically. Within this context, there are various methods to achieve these functions including:
- **Threaded Driveshaft Operation.** As generally depicted in FIG. 62 (**6200**) and FIG. 63 (**6300**), the present invention may in some preferred embodiments be implemented using a threaded driveshaft (**6201**) to operate the pump cylinder pistons (**6202**). In this embodiment gear or chain driven threaded driveshafts (**6201**) incorporate an automatic reversing channel thread (**6304**, **6305**) that retracts the rams (**6202**) at a faster rate than it extends the rams (**6202**). Within this context a driveshaft engagement key (**6303**) rides within the right-handed (**6304**) and left-handed (**6305**) channels of the driveshaft (**6301**) to affect the extension and retraction cycles respectively. As an operational example, assume a 1.00 thread per inch extension and a 1.25 thread per inch retraction pitch. A 40-inch long thread stroke would thus create one full extension in 40 revolutions and a full retraction in 32 revolutions. Using two units driven simultaneously results in a 4-inch simultaneous extension (pumping) at the beginning and end of every stroke. This varying pumping flow can also be accomplished using a variable thread pitch along the shaft on the extension stroke. For example, the first and last portion of the threaded shaft can be at a lesser TPI than the middle portion of the shaft. This would create pistons that stroke at different rates as they discharge simultaneously during the beginning and end of their strokes than in the middle when discharging singularly. The retraction TPI would still generally be at a faster rate to retract in about half the revolutions as compared to the extension cycle.
- **Cam driven mechanical lever rams.** As generally depicted in FIG. 64 (**6400**), the present invention functionality can also be accomplished utilizing cam (**6411**, **6421)** driven lever rams (**6412, 6422**). The cam drives (**6411**, **6421**) allow the retract stroke to be at a faster rate than the discharge. This allows the timing of the beginning of each cylinder stroke to begin prior to the opposite cylinder finishing its discharge stroke while being driven by a common drive shaft power apparatus that maintains a constant speed.

One skilled in the art will recognize that these mechanical implementations are only exemplary of a variety of methods that may be used to affect the disclosed pumping action. With respect to the threaded driveshaft (**6201**) embodiment, the implementation of the driveshaft engagement key (**6303**) may have many forms, but in general is designed to ride within the threads of the threaded driveshaft (**6201**) in such a way that transition between the right-handed (**6304**) and left-handed (**6305**) threaded regions is possible at the distal ends of the threaded driveshaft (**6201**).

### Differentiation With The Prior Art (6500, 6600)

All other twin reciprocating concrete pumps in the prior art exhibit a surging discharge of material. This is due to the inherit design of a round cutting ring valve at round discharge spectacle plates from the pumping cylinders. Pressure is lost and actual backflow of material is unpreventable during the valve shift (through the center position). Some prior art configurations try to cushion how the pumping pistons start each stroke to reduce the destructive forces while others add shock absorbing air cylinders to the discharge pipeline.

The present invention utilizes a "YS Tube" discharge port that is designed to never allow the pressurized discharge material pressure to be relaxed nor back-flow into the material hopper. This is achieved by the use of a trapezoidal-shaped cutting ring and spectacle plate.

There is never a position that the "YS Tube" is in during transitioning from one discharge port to the other that allows material pressure to bleed off or backflow into the loading hopper. The trapezoidal cutting ring completely seals off the trapezoid spectacle ports as it transitions across the spectacle plate during cycle changes.

The trapezoidal ejection port shape is designed with the same or larger material face area as an equivalent round spectacle plate to allow for the harsh mixes to still flow without a reduction in flow rate. For example, an 8-inch I.D. round cutting ring has a flow area of approximately 50.24 square inches. A trapezoid design generally provides an equal or larger flow area by construction of appropriate side lengths of the trapezoid having opposite side dimensions of approximately 4/6 inches and 10/10 inches respectively.

In addition, the "YS Tube" design described herein has three operating positions. The center position allows both pumping pistons to begin its discharge stroke simultaneously prior to the other piston finishing their respective discharge stroke. This results in the pistons retracting (loading concrete) at a faster rate than they discharge (pump concrete). Prior art twin piston pumps reciprocate simultaneously at the same retract (loading) rate as discharging (pumping) rate.

There are various methods hydraulically to achieve the pumping functions described herein. FIG. 65 (6500) depicts a traditional concrete pump schematic and is contrasted with FIG. 66 (6600) which illustrates an exemplary invention system schematic that may be used to implement some of the features of the present invention which may include:
- Referencing FIG. 66 (**6600**), one embodiment may utilize an accumulator (1) in the slave oil of the hydraulic differential cylinders that stores the energy from both cylinders during their discharge strokes. This is accomplished by the 75% signal port (4) on each cylinder which causes both cylinders to discharge simultaneously. That energy is then released and controlled by the throttle check valve (2) once a cylinder reaches its full discharge stroke and the YS tube (3) has been shifted. The 100% signal port (5) activates the YS tube (3) to shift the accumulator (1) to unload its stored energy controllably through the throttle check valve (2) along with the slave oil from the opposite cylinder to retract the loading cylinder at a faster rate. Once the retracted cylinder reaches the 0% port (6), the YS tube is shifted and the retracted cylinder rests until the discharging cylinder reaches the 75% signal port (4) and it all repeats.
- For the grout and small aggregate concrete, ball valve type concrete pump machines are very popular. They may utilize both hydraulic and mechanical pumping cylinders. Again, having both pumping pistons begin their discharge stroke simultaneously prior to the other piston finishing its discharge stroke will provide a truly continuous flow.

As indicated in the examples provided herein, the use of hydraulic and/or mechanical controls to drive the pump cylinders may take many forms. Included within the scope of the present invention is the anticipation that these hydraulic/mechanical controls may be computer driven and be manipulated by machine instructions read from a computer readable medium. Thus, with the proper computer control configuration, a variety of pump cycles incorporating the trapezoidal shaped spectacle plate may be implemented to support a variety of material delivery methodologies, material consistencies, piping configurations, and specific job site requirements. This may permit a single concrete pump hardware configuration to be programmed to support a wide variety of materials and work environments without the need for significant hardware modifications to the machinery.

### Preferred Embodiment System Summary

The present invention preferred exemplary system embodiment anticipates a wide variety of variations in the basic theme of construction, but can be generalized as a concrete pump system comprising:
(a) material hopper (MHOP);
(b) trapezoidal-shaped spectacle plate (TSSP);
(c) hydraulic pump;
(d) trapezoidal-shaped cutting ring (TSCR); and
(e) ejection port;
wherein
the TSSP comprises a first trapezoidal inlet port (FTIP) and a second trapezoidal inlet port (STIP);
the TSSP is attached to the MHOP and configured to supply concrete from the MHOP to the hydraulic pump through the FTIP and the STIP;
the hydraulic pump comprises a first hydraulic pump ram (FHPR) and a second hydraulic pump ram (SHPR):
the FHPR is configured to accept concrete via the FTIP;
the SHPR is configured to accept concrete via the STIP;
the TSCR comprises a trapezoidal receiver output port (TROP) configured to alternately traverse between positions that cover the FTIP and the STIP;
the TROP is configured to direct concrete from the FTIP and the STIP to the ejection port;
the hydraulic pump is configured to eject concrete from the FHPR into the TROP when the TROP is positioned to cover the FTIP;
the hydraulic pump is configured to inject concrete from the MHOP into the SHPR when the TROP is positioned to cover the FTIP;
the hydraulic pump is configured to eject concrete from the SHPR into the TROP when the TROP is positioned to cover the STIP; and
the hydraulic pump is configured to inject concrete from the MHOP into the FHPR when the TROP is positioned to cover the STIP.

This general system summary may be augmented by the various elements described herein to produce a wide variety of invention embodiments consistent with this overall design description.

### Preferred Embodiment Method Summary

The present invention preferred exemplary method embodiment anticipates a wide variety of variations in the basic theme of implementation, but can be generalized as a concrete pump method, the method operating in conjunction with a concrete pump system comprising:
(a) material hopper (MHOP);
(b) trapezoidal-shaped spectacle plate (TSSP);
(c) hydraulic pump;
(d) trapezoidal-shaped cutting ring (TSCR); and
(e) ejection port;
wherein
the TSSP comprises a first trapezoidal inlet port (FTIP) and a second trapezoidal inlet port (STIP);
the TSSP is attached to the MHOP and configured to supply concrete from the MHOP to the hydraulic pump through the FTIP and the STIP;
the hydraulic pump comprises a first hydraulic pump ram (FHPR) and a second hydraulic pump ram (SHPR);
the FHPR is configured to accept concrete via the FTIP;
the SHPR is configured to accept concrete via the STIP;
the TSCR comprises a trapezoidal receiver output port (TROP) configured to alternately traverse between positions that cover the FTIP and the STIP;
the TROP is configured to direct concrete from the FTIP and the STIP to the ejection port;
the hydraulic pump is configured to eject concrete from the FHPR into the TROP when the TROP is positioned to cover the FTIP;
the hydraulic pump is configured to inject concrete from the MHOP into the SHPR when the TROP is positioned to cover the FTIP;
the hydraulic pump is configured to eject concrete from the SHPR into the TROP when the TROP is positioned to cover the STIP; and
the hydraulic pump is configured to inject concrete from the MHOP into the FHPR when the TROP is positioned to cover the STIP;
wherein the method comprises the steps of:
(1) Centering the TROP over the TSSP to open the TROP to the FHPR and the SHPR;
(2) Ejecting material using the FHPR and the SHPR into the TROP;
(3) Shifting the TROP over the FHPR and sealing off the SHPR;
(4) Ejecting material into the TROP using the FHPR;
(5) Shifting the TROP over the FHPR and opening the SHPR to the MHOP;
(6) Ejecting material into the TROP using the FHPR and injecting material from the MHOP using the SHPR;
(7) Shifting the TROP over the FHPR and opening the SHPR to the MHOP;
(8) Ejecting material into the TROP using the FHPR and injecting material from the MHOP using the SHPR (optionally at twice the ejection rate of the FHPR);
(9) Shifting the TROP over the FHPR and sealing off the SHPR;
(10) Ejecting material into the TROP using the FHPR and stopping the SHPR when fully loaded;
(11) Centering the TROP over the TSSP to open the TROP to the FHPR and the SHPR;
(12) Ejecting material into the TROP using the FHPR and the SHPR;
(13) Shifting the TROP over the SHPR and sealing off the FHPR;
(14) Ejecting material into the TROP using the SHPR and stopping the FHPR when fully ejected;
(15) Shifting the TROP over the SHPR and opening the FHPR to the MHOP;
(16) Ejecting material into the TROP using the SHPR and injecting material from the MHOP using the FHPR (optionally at twice the ejection rate of the SHPR);
(17) Shifting the TROP over the SHPR and sealing off the FHPR;
(18) Ejecting material into the TROP using the SHPR and stopping the FHPR when fully loaded; and
(19) Proceeding to step (1) to repeat material pumping operations.

One skilled in the art will recognize that these method steps may be augmented or rearranged without limiting the teachings of the present invention. This general method summary may be augmented by the various elements described herein to produce a wide variety of invention embodiments consistent with this overall design description.

### System/Method Variations

The present invention anticipates a wide variety of variations in the basic theme of construction. The examples presented previously do not represent the entire scope of possible usages. They are meant to cite a few of the almost limitless possibilities.

This basic system and method may be augmented with a variety of ancillary embodiments, including but not limited to:
- An embodiment wherein the TSCR comprises a transfer cavity having a geometric shape selected from a group consisting of:
   (1) four-sided polygons having exactly two sides that are parallel;
   (2) four-sided polygons having two sets of sides that are parallel;
   (3) four-sided polygons in which the legs on opposite sides of the polygon have the same length and the base angles have the same measure (isosceles trapezoid);
   (4) four-sided polygons in which two adjacent angles are right angles (right trapezoid or right-angled trapezoid);
   (5) four-sided polygons which have an inscribed circle (tangential trapezoid);
   (6) four-sided parallelograms; and
   (7) annular sectors comprising one or more sectors of an annulus or annular ring that approximate an isosceles trapezoid.
- An embodiment wherein the TSSP comprises transfer cavities having a geometric shape selected from a group consisting of:
   (1) four-sided polygons having exactly two sides that are parallel;
   (2) four-sided polygons having two sets of sides that are parallel;
   (3) four-sided polygons in which the legs on opposite sides of the polygon have the same length and the base angles have the same measure (isosceles trapezoid);
   (4) four-sided polygons in which two adjacent angles are right angles (right trapezoid or right-angled trapezoid);
   (5) four-sided polygons which have an inscribed circle (tangential trapezoid);
   (6) four-sided parallelograms; and
   (7) annular sectors comprising one or more sectors of an annulus or annular ring that approximate an isosceles trapezoid.
- An embodiment wherein material is injected from the MHOP using the SHPR at twice the ejection rate of the FHPR.
- An embodiment wherein material is injected from the MHOP using the FHPR at twice the ejection rate of the SHPR.
- An embodiment wherein the FTIP further comprises a transition conduit that transitions from a cylindrical FHPR to a trapezoidal-shaped void in the TSSP.
- An embodiment wherein the STIP further comprises a transition conduit that transitions from a cylindrical SHPR to a trapezoidal-shaped void in the TSSP.
- An embodiment wherein the TSCR further comprises trapezoidal-shaped sealing wings configured to seal the FTIP and the STIP when positioned over the FTIP and the STIP.
- An embodiment wherein the TSCR comprises a sector of an annulus having an area that is three times the cross sectional area of the FTIP and the STIP.
- An embodiment wherein the TSCR sector comprises a sweep angle of approximately 90 degrees.

One skilled in the art will recognize that other embodiments are possible based on combinations of elements taught within the above invention description.

### CONCLUSION

A concrete pump system/method configured to provide substantially constant flow of concrete or cement material has been disclosed. The system integrates a trapezoidal cutting ring and spectacle plate in conjunction with lofted transitional interfaces to the hydraulic pump cylinder rams and output ejection port to ensure that pressurized discharge concrete material is not allowed to be relaxed nor backflow into the material sourcing hopper. The trapezoidal cutting ring is configured to completely seal off the trapezoidal spectacle ports as it smoothly transitions between the hydraulic pump input ports during cycle changes thus generating a more uniform output flow of concrete while eliminating hopper backflow and hydraulic fluid shock. A control system is configured to coordinate operation of the hydraulic pump cylinder rams and cutting ring to ensure that output ejection port pressure and material flow is maintained at a relatively constant level throughout all portions of the pumping cycle.

Although a preferred embodiment of the present invention has been illustrated in the accompanying drawings and described in the foregoing Detailed Description, it will be understood that the invention is not limited to the embodiments disclosed.

## Claims

1. A concrete pump system comprising:
(a) material hopper (MHOP);
(b) trapezoidal-shaped spectacle plate (TSSP) (2609);
(c) hydraulic pump;
(d) trapezoidal-shaped cutting ring (TSCR); and
(e) ejection port (2507);
wherein
said TSSP (2609) comprises a first trapezoidal inlet port (FTIP) and a second trapezoidal inlet port (STIP);
said TSSP (2609) is attached to said MHOP and configured to supply concrete from said MHOP to said hydraulic pump through said FTIP and said STIP;
said hydraulic pump comprises a left cylinder (2503) attached to the FTIP, a first hydraulic pump ram (FHPR) (2505) within the left cylinder (2503), a right cylinder (2504) attached to the STIP, and a second hydraulic pump ram (SHPR) (2506) within the right cylinder (2504);
said FHPR (2505) is configured to accept concrete via said FTIP;
said SHPR (2506) is configured to accept concrete via said STIP;
said TSCR comprises a trapezoidal receiver output port (TROP);
said hydraulic pump is configured to use said FHPR (2505) to eject concrete from said left cylinder (2503) of said hydraulic pump into said TROP when said TROP is positioned to cover said FTIP;
said hydraulic pump is configured to use said SHPR (2506) to inject concrete from said MHOP into said right cylinder (2504) of said hydraulic pump when said TROP is positioned to cover said FTIP;
said hydraulic pump is configured to use said SHPR (2506) to eject concrete from said right cylinder (2504) into said TROP when said TROP is positioned to cover said STIP; and
said hydraulic pump is configured to use said FHPR (2505) to inject concrete from said MHOP into said left cylinder (2503) when said TROP is positioned to cover said STIP; and
wherein the concrete pump system is **characterized in that**
said TROP is configured to alternately traverse between positions covering said FTIP to direct concrete from said FTIP to said ejection port (2507) and to direct concrete from said MHOP to said STIP, covering said STIP to direct concrete from said STIP to said ejection port (2507) and to direct concrete from said MHOP to said FTIP, and completely covering said FTIP and said STIP to direct concrete from said FTIP and said STIP to said ejection port (2507).

2. The concrete pump system of Claim 1 wherein said ejection port (2507) is configured with a trapezoidal-shaped transition region (2508) that articulates between the left and right cylinders (2503 and 2504) of said hydraulic pump through said TSSP (2609).

3. The concrete pump system of Claim 1 wherein said TSCR comprises a transfer cavity having a geometric shape selected from a group consisting of:
(1) four-sided polygons having exactly two sides that are parallel;
(2) four-sided polygons having two sets of sides that are parallel;
(3) four-sided polygons in which the legs on opposite sides of the polygon have the same length and the base angles have the same measure (isosceles trapezoid);
(4) four-sided polygons in which two adjacent angles inside the polygon are right angles (right trapezoid or right-angled trapezoid);
(5) four-sided polygons which have each side tangent to an inscribed circle (tangential trapezoid);
(6) four-sided parallelograms; and
(7) annular sectors comprising one or more sectors of an annulus or annular ring that approximate an isosceles trapezoid.

4. The concrete pump system of Claim 1 wherein said TSSP (2609) comprises transfer cavities having a geometric shape selected from a group consisting of:
(1) four-sided polygons having exactly two sides that are parallel;
(2) four-sided polygons having two sets of sides that are parallel;
(3) four-sided polygons in which the legs on opposite sides of the polygon have the same length and the base angles have the same measure (isosceles trapezoid);
(4) four-sided polygons in which two adjacent angles inside the polygon are right angles (right trapezoid or right-angled trapezoid);
(5) four-sided polygons which have each side tangent to an inscribed circle (tangential trapezoid);
(6) four-sided parallelograms; and
(7) annular sectors comprising one or more sectors of an annulus or annular ring that approximate an isosceles trapezoid.

5. The concrete pump system of Claim 1 wherein material is injected from said MHOP using the SHPR (2506) at twice the ejection rate of said FHPR (2505).

6. The concrete pump system of Claim 1 wherein material is injected from said MHOP using the FHPR (2505) at twice the ejection rate of said SHPR (2506).

7. The concrete pump system of Claim 1 wherein said FTIP further comprises a transition conduit that transitions from a cylindrical FHPR (2505) to a trapezoidal-shaped void in said TSSP (2609).

8. The concrete pump system of Claim 1 wherein said STIP further comprises a transition conduit that transitions from a cylindrical SHPR (2506) to a trapezoidal-shaped void in said TSSP (2609).

9. The concrete pump system of Claim 1 wherein said TSCR further comprises trapezoidal-shaped sealing wings configured to seal said FTIP and said STIP when positioned over said FTIP and said STIP.

10. The concrete pump system of Claim 1 wherein said TSCR comprises a sector of an annulus having an area that is three times the cross sectional area of said FTIP and said STIP.

11. The concrete pump system of Claim 10 wherein said TSCR sector comprises a sweep angle of approximately 90 degrees.

12. A concrete pump method, said method operating in conjunction with a concrete pump system comprising:
(a) material hopper (MHOP);
(b) trapezoidal-shaped spectacle plate (TSSP) (2609);
(c) hydraulic pump;
(d) trapezoidal-shaped cutting ring (TSCR); and
(e) ejection port (2507);
wherein
said TSSP (2609) comprises a first trapezoidal inlet port (FTIP) and a second trapezoidal inlet port (STIP);
said TSSP (2609) is attached to said MHOP and configured to supply concrete from said MHOP to said hydraulic pump through said FTIP and said STIP;
said hydraulic pump comprises a left cylinder (2503) attached to the FTIP, a first hydraulic pump ram (FHPR) (2505) within the left cylinder (2503), a right cylinder (2504) attached to the STIP, and a second hydraulic pump ram (SHPR) (2506) within the right cylinder (2504);
said FHPR (2505) is configured to accept concrete via said FTIP;
said SHPR (2506) is configured to accept concrete via said STIP;
said TSCR comprises a trapezoidal receiver output port (TROP);
said hydraulic pump is configured to use said FHPR (2505) to eject concrete from said left cylinder (2503) of said hydraulic pump into said TROP when said TROP is positioned to cover said FTIP;
said hydraulic pump is configured to use said SHPR (2506) to inject concrete from said MHOP into said right cylinder (2504) when said TROP is positioned to cover said FTIP;
said hydraulic pump is configured to use said SHPR (2506) to eject concrete from said right cylinder (2504) into said TROP when said TROP is positioned to cover said STIP; and
said hydraulic pump is configured to use said FHPR (2505) to inject concrete from said MHOP into said left cylinder (2503) when said TROP is positioned to cover said STIP;
wherein said method is **characterized in that**:
said TROP is configured to alternately traverse between positions covering said FTIP to direct concrete from said FTIP to said ejection port (2507) and to direct concrete from said MHOP to said STIP, covering said STIP to direct concrete from said STIP to said ejection port (2507) and to direct concrete from said MHOP to said FTIP, and completely covering said FTIP and said STIP to direct concrete from said FTIP and said STIP to said ejection port (2507); and
that the method comprises the steps of:
(1) Centering said TROP over said TSSP (2609) to open said TROP to said FHPR (2505) and said SHPR (2506);
(2) Ejecting material using said FHPR (2505) and said SHPR (2506) into said TROP;
(3) Shifting said TROP over said FHPR (2505) and sealing off said SHPR (2506);
(4) Ejecting material into said TROP using said FHPR (2505);
(5) Shifting said TROP over said FHPR (2505) and opening said SHPR (2506) to said MHOP;
(6) Ejecting material into said TROP using said FHPR (2505) and injecting material from said MHOP using said SHPR (2506);
(7) Shifting said TROP over said FHPR (2505) and opening said SHPR (2506) to said MHOP;
(8) Ejecting material into said TROP using said FHPR (2505) and injecting material from said MHOP using said SHPR (2506);
(9) Shifting said TROP over said FHPR (2505) and sealing off said SHPR (2506);
(10) Ejecting material into said TROP using said FHPR (2505) and stopping said SHPR (2506) when fully loaded;
(11) Centering said TROP over said TSSP (2609) to open said TROP to said FHPR (2505) and said SHPR (2506);
(12) Ejecting material into said TROP using said FHPR (2505) and said SHPR (2506);
(13) Shifting said TROP over said SHPR (2506) and sealing off said FHPR (2505);
(14) Ejecting material into said TROP using said SHPR (2506) and stopping said FHPR (2505) when fully ejected;
(15) Shifting said TROP over said SHPR (2506) and opening said FHPR (2505) to said MHOP;
(16) Ejecting material into said TROP using said SHPR (2506) and injecting material from said MHOP using said FHPR (2505);
(17) Shifting said TROP over said SHPR (2506) and sealing off said FHPR (2505);
(18) Ejecting material into said TROP using said SHPR (2506) and stopping said FHPR (2505) when fully loaded; and
(19) Proceeding to step (1) to repeat material pumping operations.

13. The concrete pump method of Claim 12 wherein said TSCR comprises a transfer cavity having a geometric shape selected from a group consisting of:
(1) four-sided polygons having exactly two sides that are parallel;
(2) four-sided polygons having two sets of sides that are parallel;
(3) four-sided polygons in which the legs on opposite sides of the polygon have the same length and the base angles have the same measure (isosceles trapezoid);
(4) four-sided polygons in which two adjacent angles inside the polygon are right angles (right trapezoid or right-angled trapezoid);
(5) four-sided polygons which have each side tangent to an inscribed circle (tangential trapezoid);
(6) four-sided parallelograms; and
(7) annular sectors comprising one or more sectors of an annulus or annular ring that approximate an isosceles trapezoid.

14. The concrete pump method of Claim 12 wherein said TSSP (2609) comprises transfer cavities having a geometric shape selected from a group consisting of:
(1) four-sided polygons having exactly two sides that are parallel;
(2) four-sided polygons having two sets of sides that are parallel;
(3) four-sided polygons in which the legs on opposite sides of the polygon have the same length and the base angles have the same measure (isosceles trapezoid);
(4) four-sided polygons in which two adjacent angles inside the polygon are right angles (right trapezoid or right-angled trapezoid);
(5) four-sided polygons which have each side tangent to an inscribed circle (tangential trapezoid);
(6) four-sided parallelograms; and
(7) annular sectors comprising one or more sectors of an annulus or annular ring that approximate an isosceles trapezoid.

15. The concrete pump method of Claim 12 wherein material is injected from said MHOP using the SHPR (2506) at twice the ejection rate of said FHPR (2505).

16. The concrete pump method of Claim 12 wherein material is injected from said MHOP using the FHPR (2505) at twice the ejection rate of said SHPR (2506).

17. The concrete pump method of Claim 12 wherein said FTIP further comprises a transition conduit that transitions from a cylindrical FHPR (2505) to a trapezoidal-shaped void in said TSSP (2609).

18. The concrete pump method of Claim 12 wherein said STIP further comprises a transition conduit that transitions from a cylindrical SHPR (2506) to a trapezoidal-shaped void in said TSSP (2609).

19. The concrete pump method of Claim 12 wherein said TSCR further comprises trapezoidal-shaped sealing wings configured to seal said FTIP and said STIP when positioned over said FTIP and said STIP.

20. The concrete pump method of Claim 12 wherein said TSCR comprises a sector of an annulus having an area that is three times the cross sectional area of said FTIP and said STIP.

21. The concrete pump method of Claim 20 wherein said TSCR sector comprises a sweep angle of approximately 90 degrees.

## Patentansprüche

1. Betonpumpensystem, umfassend:
(a) Materialtrichter (MHOP);
(b) trapezförmige Brillenplatte (TSSP) (2609);
(c) Hydraulikpumpe;
(d) trapezförmiger Schneidring (TSCR); und
(e) Ausstoßöffnung (2507);
wobei
die TSSP (2609) eine erste trapezförmige Einlassöffnung (FTIP) und eine zweite trapezförmige Einlassöffnung (STIP) umfasst;
die TSSP (2609) an dem MHOP befestigt ist und konfiguriert ist, um der Hydraulikpumpe von dem MHOP durch die FTIP und die STIP Beton zuzuführen;
die Hydraulikpumpe einen linken Zylinder (2503), der an der FTIP angebracht ist, einen ersten Hydraulikpumpenkolben (FHPR) (2505) in dem linken Zylinder (2503), einen rechten Zylinder (2504), der an der STIP angebracht ist, und einen zweiten Hydraulikpumpenkolben (SHPR) (2506) in dem rechten Zylinder (2504) umfasst;
der FHPR (2505) konfiguriert ist, um Beton über die FTIP anzunehmen;
der SHPR (2506) konfiguriert ist, um Beton über die STIP anzunehmen;
der TSCR eine trapezförmige Aufnahmeausgangsöffnung (TROP) umfasst;
die Hydraulikpumpe so konfiguriert ist, dass der FHPR (2505) verwendet wird, um Beton von dem linken Zylinder (2503) der Hydraulikpumpe in die TROP auszustoßen, wenn die TROP so positioniert ist, dass die FTIP abdeckt wird;
die Hydraulikpumpe so konfiguriert ist, dass der SHPR (2506) verwendet wird, um Beton von dem MHOP in den rechten Zylinder (2504) der Hydraulikpumpe einzuspritzen, wenn die TROP so positioniert ist, dass die FTIP abdeckt wird;
die Hydraulikpumpe so konfiguriert ist, dass der SHPR (2506) verwendet wird, um Beton von dem rechten Zylinder (2504) in die TROP auszustoßen, wenn die TROP so positioniert ist, dass die STIP abdeckt wird; und
die Hydraulikpumpe so konfiguriert ist, dass der FHPR (2505) verwendet wird, um Beton von dem MHOP in den linken Zylinder (2503) einzuspritzen, wenn die TROP so positioniert ist, dass die STIP abdeckt wird; und
wobei das Betonpumpensystem **dadurch gekennzeichnet ist, dass** die TROP so konfiguriert ist, dass sie alternierend zwischen Positionen wandert, die die FTIP abdeckt, um Beton von der FTIP zu der Ausstoßöffnung (2507) zu leiten und Beton von dem MHOP zu der STIP zu leiten, die die STIP abdeckt, um Beton von der STIP zu der Ausstoßöffnung (2507) zu leiten und Beton von dem MHOP zu der FTIP zu leiten, und die die FTIP und die STIP vollständig abdeckt, um Beton von der FTIP und der STIP zu der Ausstoßöffnung (2507) zu leiten.

2. Betonpumpensystem nach Anspruch 1, wobei die Ausstoßöffnung (2507) mit einem trapezförmigen Übergangsbereich (2508) ausgebildet ist, der zwischen dem linken und rechten Zylinder (2503 und 2504) der Hydraulikpumpe über die TSSP (2609) gelenkig gelagert ist.

3. Betonpumpensystem nach Anspruch 1, wobei der TSCR einen Transferhohlraum mit einer geometrischen Form umfasst, die ausgewählt ist aus einer Gruppe, bestehend aus:
(1) vierseitigen Polygonen mit genau zwei Seiten, die parallel sind;
(2) vierseitigen Polygonen mit zwei Sätzen von Seiten, die parallel sind;
(3) vierseitigen Polygonen, bei denen die Schenkel auf gegenüberliegenden Seiten des Polygons die gleiche Länge haben und die Basiswinkel das gleiche Maß haben (gleichschenkliges Trapez);
(4) vierseitigen Polygonen, bei denen zwei benachbarte Winkel innerhalb des Polygons rechtwinklig sind (rechtwinkliges Trapez);
(5) vierseitigen Polygonen, bei denen jede Seite tangential zu einem Inkreis liegt (tangentiales Trapez);
(6) vierseitigen Parallelogrammen; und
(7) ringförmigen Sektoren, die einen oder mehrere Sektoren eines Rings oder eines Rings mit kreisförmigem Querschnitt umfassen, die einem gleichschenkligen Trapez nahe kommen.

4. Betonpumpensystem nach Anspruch 1, wobei die TSSP (2609) Transferhohlräume mit einer geometrischen Form umfasst, die ausgewählt ist aus einer Gruppe, bestehend aus:
(1) vierseitigen Polygonen mit genau zwei Seiten, die parallel sind;
(2) vierseitigen Polygonen mit zwei Sätzen von Seiten, die parallel sind;
(3) vierseitigen Polygonen, bei denen die Schenkel auf gegenüberliegenden Seiten des Polygons die gleiche Länge haben und die Basiswinkel das gleiche Maß haben (gleichschenkliges Trapez);
(4) vierseitigen Polygonen, bei denen zwei benachbarte Winkel innerhalb des Polygons rechtwinklig sind (rechtwinkliges Trapez);
(5) vierseitigen Polygonen, bei denen jede Seite tangential zu einem Inkreis liegt (tangentiales Trapez);
(6) vierseitigen Parallelogrammen; und
(7) ringförmigen Sektoren, die einen oder mehrere Sektoren eines Rings oder eines Rings mit kreisförmigem Querschnitt umfassen, die einem gleichschenkligen Trapez nahe kommen.

5. Betonpumpensystem nach Anspruch 1, wobei das Material von dem MHOP unter Verwendung des SHPR (2506) mit der doppelten Ausstoßrate des FHPR (2505) eingespritzt wird.

6. Betonpumpensystem nach Anspruch 1, wobei das Material von dem MHOP unter Verwendung des FHPR (2505) mit der doppelten Ausstoßrate des SHPR (2506) eingespritzt wird.

7. Betonpumpensystem nach Anspruch 1, wobei die FTIP ferner einen Übergangskanal umfasst, der von einem zylindrischen FHPR (2505) in einen trapezförmigen Hohlraum in der TSSP (2609) übergeht.

8. Betonpumpensystem nach Anspruch 1, wobei die STIP ferner einen Übergangskanal umfasst, der von einem zylindrischen SHPR (2506) in einen trapezförmigen Hohlraum in der TSSP (2609) übergeht.

9. Betonpumpensystem nach Anspruch 1, wobei der TSCR ferner trapezförmige Dichtungsflügel umfasst, die so konfiguriert sind, dass sie die FTIP und die STIP abdichten, wenn sie über der FTIP und der STIP positioniert sind.

10. Betonpumpensystem nach Anspruch 1, wobei der TSCR einen Sektor von einem Ring mit einer Fläche umfasst, die das Dreifache der Querschnittsfläche der FTIP und der STIP ist.

11. Betonpumpensystem nach Anspruch 10, wobei der TSCR-Sektor einen Pfeilwinkel von etwa 90 Grad umfasst.

12. Betonpumpverfahren, wobei das Verfahren in Verbindung mit einem Betonpumpensystem betrieben wird, welches umfasst:
(a) Materialtrichter (MHOP);
(b) trapezförmige Brillenplatte (TSSP) (2609);
(c) Hydraulikpumpe;
(d) trapezförmiger Schneidring (TSCR); und
(e) Ausstoßöffnung (2507);
wobei
die TSSP (2609) eine erste trapezförmige Einlassöffnung (FTIP) und eine zweite trapezförmige Einlassöffnung (STIP) umfasst;
die TSSP (2609) an dem MHOP befestigt ist und konfiguriert ist, um der Hydraulikpumpe von dem MHOP durch die FTIP und die STIP Beton zuzuführen;
die Hydraulikpumpe einen linken Zylinder (2503), der an der FTIP angebracht ist, einen ersten Hydraulikpumpenkolben (FHPR) (2505) in dem linken Zylinder (2503), einen rechten Zylinder (2504), der an der STIP angebracht ist, und einen zweiten Hydraulikpumpenkolben (SHPR) (2506) in dem rechten Zylinder (2504) umfasst;
der FHPR (2505) konfiguriert ist, um Beton über die FTIP anzunehmen;
der SHPR (2506) konfiguriert ist, um Beton über die STIP anzunehmen;
der TSCR eine trapezförmige Aufnahmeausgangsöffnung (TROP) umfasst;
die Hydraulikpumpe so konfiguriert ist, dass der FHPR (2505) verwendet wird, um Beton von dem linken Zylinder (2503) der Hydraulikpumpe in die TROP auszustoßen, wenn die TROP so positioniert ist, dass die FTIP abdeckt wird;
die Hydraulikpumpe so konfiguriert ist, dass der SHPR (2506) verwendet wird, um Beton von dem MHOP in den rechten Zylinder (2504) einzuspritzen, wenn die TROP so positioniert ist, dass die FTIP abdeckt wird;
die Hydraulikpumpe so konfiguriert ist, dass der SHPR (2506) verwendet wird, um Beton von dem rechten Zylinder (2504) in die TROP auszustoßen, wenn die TROP so positioniert ist, dass die STIP abdeckt wird; und
die Hydraulikpumpe so konfiguriert ist, dass der FHPR (2505) verwendet wird, um Beton von dem MHOP in den linken Zylinder (2503) einzuspritzen, wenn die TROP so positioniert ist, dass die STIP abdeckt wird;
wobei das Verfahren **dadurch gekennzeichnet ist, dass**
die TROP so konfiguriert ist, dass sie alternierend zwischen Positionen wandert, die die FTIP abdeckt, um Beton von der FTIP zu der Ausstoßöffnung (2507) zu leiten und Beton von dem MHOP zu der STIP zu leiten, die die STIP abdeckt, um Beton von der STIP zu der Ausstoßöffnung (2507) zu leiten und Beton von dem MHOP zu der FTIP zu leiten, und die die FTIP und die STIP vollständig abdeckt, um Beton von der FTIP und der STIP zu der Ausstoßöffnung (2507) zu leiten, und
dass das Verfahren die folgenden Schritte umfasst:
(1) Zentrieren der TROP über der TSSP (2609), um die TROP zu dem FHPR (2505) und dem SHPR (2506) zu öffnen;
(2) Ausstoßen von Material unter Verwendung des FHPR (2505) und des SHPR (2506) in die TROP;
(3) Verschieben der TROP über den FHPR (2505) und Verschließen des SHPR (2506);
(4) Ausstoßen von Material in die TROP unter Verwendung des FHPR (2505);
(5) Verschieben der TROP über den FHPR (2505) und Öffnen des SHPR (2506) für den MHOP;
(6) Ausstoßen von Material in die TROP unter Verwendung des FHPR (2505) und Einspritzen von Material aus dem MHOP unter Verwendung des SHPR (2506);
(7) Verschieben der TROP über den FHPR (2505) und Öffnen des SHPR (2506) für den MHOP;
(8) Ausstoßen von Material in die TROP unter Verwendung des FHPR (2505) und Einspritzen von Material aus dem MHOP unter Verwendung des SHPR (2506);
(9) Verschieben der TROP über den FHPR (2505) und Verschließen des SHPR (2506);
(10) Ausstoßen von Material in die TROP unter Verwendung des FHPR (2505) und Stoppen des SHPR (2506), wenn vollständig beladen ist;
(11) Zentrieren der TROP über der TSSP (2609), um die TROP für den FHPR (2505) und den SHPR (2506) zu öffnen;
(12) Ausstoßen von Material in die TROP unter Verwendung des FHPR (2505) und des SHPR (2506);
(13) Verschieben der TROP über den SHPR (2506) und Verschließen des FHPR (2505);
(14) Ausstoßen von Material in die TROP unter Verwendung des SHPR (2506) und Stoppen des FHPR (2505), wenn vollständig ausgestoßen ist;
(15) Verschieben der TROP über den SHPR (2506) und Öffnen des FHPR (2505) für den MHOP;
(16) Ausstoßen von Material in die TROP unter Verwendung des SHPR (2506) und Einspritzen von Material aus dem MHOP unter Verwendung des FHPR (2505);
(17) Verschieben der TROP über den SHPR (2506) und Verschließen des FHPR (2505);
(18) Ausstoßen von Material in die TROP unter Verwendung des SHPR (2506) und Stoppen des FHPR (2505), wenn vollständig beladen ist; und
(19) Fortsetzen mit Schritt (1), um die Materialpumpvorgänge zu wiederholen.

13. Betonpumpverfahren nach Anspruch 12, wobei der TSCR einen Transferhohlraum mit einer geometrischen Form umfasst, die ausgewählt ist aus einer Gruppe, bestehend aus:
(1) vierseitigen Polygonen mit genau zwei Seiten, die parallel sind;
(2) vierseitigen Polygonen mit zwei Sätzen von Seiten, die parallel sind;
(3) vierseitigen Polygonen, bei denen die Schenkel auf gegenüberliegenden Seiten des Polygons die gleiche Länge haben und die Basiswinkel das gleiche Maß haben (gleichschenkliges Trapez);
(4) vierseitigen Polygonen, bei denen zwei benachbarte Winkel innerhalb des Polygons rechtwinklig sind (rechtwinkliges Trapez);
(5) vierseitigen Polygonen, bei denen jede Seite tangential zu einem Inkreis liegt (tangentiales Trapez);
(6) vierseitigen Parallelogrammen; und
(7) ringförmigen Sektoren, die einen oder mehrere Sektoren eines Rings oder eines Rings mit kreisförmigem Querschnitt umfassen, die einem gleichschenkligen Trapez nahe kommen.

14. Betonpumpverfahren nach Anspruch 12, wobei die TSSP (2609) Transferhohlräume mit einer geometrischen Form umfasst, die ausgewählt ist aus einer Gruppe, bestehend aus:
(1) vierseitigen Polygonen mit genau zwei Seiten, die parallel sind;
(2) vierseitigen Polygonen mit zwei Sätzen von Seiten, die parallel sind;
(3) vierseitigen Polygonen, bei denen die Schenkel auf gegenüberliegenden Seiten des Polygons die gleiche Länge haben und die Basiswinkel das gleiche Maß haben (gleichschenkliges Trapez);
(4) vierseitigen Polygonen, bei denen zwei benachbarte Winkel innerhalb des Polygons rechtwinklig sind (rechtwinkliges Trapez);
(5) vierseitigen Polygonen, bei denen jede Seite tangential zu einem Inkreis liegt (tangentiales Trapez);
(6) vierseitigen Parallelogrammen; und
(7) ringförmigen Sektoren, die einen oder mehrere Sektoren eines Rings oder eines Rings mit kreisförmigem Querschnitt umfassen, die einem gleichschenkligen Trapez nahe kommen.

15. Betonpumpverfahren nach Anspruch 12, wobei das Material von dem MHOP unter Verwendung des SHPR (2506) mit der doppelten Ausstoßrate des FHPR (2505) eingespritzt wird.

16. Betonpumpverfahren nach Anspruch 12, wobei das Material von dem MHOP unter Verwendung des FHPR (2505) mit der doppelten Ausstoßrate des SHPR (2506) eingespritzt wird.

17. Betonpumpverfahren nach Anspruch 12, wobei die FTIP ferner einen Übergangskanal umfasst, der von einem zylindrischen FHPR (2505) in einen trapezförmigen Hohlraum in der TSSP (2609) übergeht.

18. Betonpumpverfahren nach Anspruch 12, wobei die STIP ferner einen Übergangskanal umfasst, der von einem zylindrischen SHPR (2506) in einen trapezförmigen Hohlraum in der TSSP (2609) übergeht.

19. Betonpumpverfahren nach Anspruch 12, wobei der TSCR ferner trapezförmige Dichtungsflügel umfasst, die so konfiguriert sind, dass sie die FTIP und die STIP abdichten, wenn sie über der FTIP und der STIP positioniert sind.

20. Betonpumpverfahren nach Anspruch 12, wobei der TSCR einen Sektor von einem Ring mit einer Fläche umfasst, die das Dreifache der Querschnittsfläche der FTIP und der STIP ist.

21. Betonpumpverfahren nach Anspruch 20, wobei der TSCR-Sektor einen Pfeilwinkel von etwa 90 Grad umfasst.

## Revendications

1. Système de pompe à béton comprenant :
(a) une trémie à matériau (MHOP) ;
(b) une plaque d'obturation de forme trapézoïdale (TSSP) (2609) ;
(c) une pompe hydraulique ;
(d) une bague de coupe de forme trapézoïdale (TSCR) ; et
(e) un orifice d'éjection (2507) ;
dans lequel :
ladite TSSP (2609) comprend un premier orifice d'entrée trapézoïdal (FTIP) et un second orifice d'entrée trapézoïdal (STIP) ;
ladite TSSP (2609) est fixée à ladite MHOP et configurée pour fournir du béton de ladite MHOP à ladite pompe hydraulique par le biais dudit FTIP et dudit STIP ;
ladite pompe hydraulique comprend un cylindre gauche (2503) fixé audit FTIP, un premier vérin de pompe hydraulique (FHPR) (2505) à l'intérieur du cylindre gauche (2503), un cylindre droit (2504) fixé au STIP, et un second vérin de pompe hydraulique (SHPR) (2506) à l'intérieur du cylindre droit (2504) ;
ledit FHPR (2505) est configuré pour accepter le béton via ledit FTIP ;
ledit SHPR (2506) est configuré pour accepter le béton via ledit STIP ;
ladite TSCR comprend un orifice de sortie de réception trapézoïdal (TROP) ;
ladite pompe hydraulique est configurée pour utiliser ledit FHPR (2505) pour éjecter le béton dudit cylindre gauche (2503) de ladite pompe hydraulique dans ledit TROP lorsque ledit TROP est positionné pour recouvrir ledit FTIP ;
ladite pompe hydraulique est configurée pour utiliser ledit SHPR (2506) pour injecter le béton depuis ladite MHOP dans ledit cylindre droit (2504) de ladite pompe hydraulique lorsque ledit TROP est positionné pour recouvrir ledit FTIP ;
ladite pompe hydraulique est configurée pour utiliser ledit SHPR (2506) pour éjecter le béton dudit cylindre droit (2504) dans ledit TROP lorsque ledit TROP est positionné pour recouvrir ledit STIP ; et
ladite pompe hydraulique est configurée pour utiliser ledit FHPR (2505) afin d'injecter du béton depuis ladite MHOP dans ledit cylindre gauche (2503) lorsque ledit TROP est positionné pour recouvrir ledit STIP ; et
dans lequel ledit système de pompe à béton est **caractérisé en ce que** :
ledit TROP est configuré pour traverser, de manière alternée, entre des positions recouvrant ledit FTIP afin de diriger le béton dudit FTIP vers ledit orifice d'éjection (2507) et afin de diriger le béton de ladite MHOP vers ledit STIP, recouvrant ledit STIP pour diriger le béton dudit STIP vers ledit orifice d'éjection (2507) et pour diriger le béton dudit MHOP audit FTIP, et recouvrant complètement ledit FTIP et ledit STIP pour diriger le béton dudit FTIP et dudit STIP vers ledit orifice d'éjection (2507) .

2. Système de pompe à béton selon la revendication 1, dans lequel ledit orifice d'éjection (2507) est configuré avec une région de transition de forme trapézoïdale (2508) qui s'articule entre les cylindres gauche et droit (2503 et 2504) de ladite pompe hydraulique par le biais de ladite TSSP (2609).

3. Système de pompe à béton selon la revendication 1, dans lequel ladite TSCR comprend une cavité de transfert ayant une forme géométrique sélectionnée dans un groupe comprenant :
(1) des polygones à quatre côtés ayant exactement deux côtés qui sont parallèles ;
(2) des polygones à quatre côtés ayant deux ensembles de côtés qui sont parallèles ;
(3) des polygones à quatre côtés dans lesquels les pattes sur les côtés opposés du polygone ont la même longueur et les angles de base ont la même mesure (trapèze isocèle) ;
(4) des polygones à quatre côtés dans lesquels deux angles adjacents à l'intérieur du polygone sont des angles droits (trapèze rectangle ou trapèze en angle droit) ;
(5) des polygones à quatre côtés qui ont chaque côté tangent à un cercle inscrit (trapèze tangentiel) ;
(6) des parallélogrammes à quatre côtés ; et
(7) des secteurs annulaires comprenant un ou plusieurs secteurs d'un anneau ou d'une bague annulaire qui s'approchent d'un trapèze isocèle.

4. Système de pompe à béton selon la revendication 1, dans lequel ladite TSSP (2609) comprend des cavités de transfert ayant une forme géométrique sélectionnée dans un groupe comprenant :
(1) des polygones à quatre côtés ayant exactement deux côtés qui sont parallèles ;
(2) des polygones à quatre côtés ayant deux ensembles de côtés qui sont parallèles ;
(3) des polygones à quatre côtés dans lesquels les pattes sur les côtés opposés du polygone ont la même longueur et les angles de base ont la même mesure (trapèze isocèle) ;
(4) des polygones à quatre côtés dans lesquels deux angles adjacents à l'intérieur du polygone sont des angles droits (trapèze rectangle ou trapèze en angle droit) ;
(5) des polygones à quatre côtés qui ont chaque côté tangent à un cercle inscrit (trapèze tangentiel) ;
(6) des parallélogrammes à quatre côtés ; et
(7) des secteurs annulaires comprenant un ou plusieurs secteurs d'un anneau ou d'une bague annulaire qui s'approchent d'un trapèze isocèle.

5. Système de pompe à béton selon la revendication 1, dans lequel le matériau est injecté par ladite MHOP à l'aide du SHPR (2506) à une vitesse deux fois supérieure à la vitesse d'éjection dudit FHPR (2505).

6. Système de pompe à béton selon la revendication 1, dans lequel le matériau est injecté par ladite MHOP à l'aide du FHPR (2505) à une vitesse deux fois supérieure à la vitesse d'éjection dudit SHPR (2506).

7. Système de pompe à béton selon la revendication 1, dans lequel ledit FTIP comprend en outre un conduit de transition qui effectue une transition d'un FHPR cylindrique (2505) à un vide de forme trapézoïdale dans ladite TSSP (2609).

8. Système de pompe à béton selon la revendication 1, dans lequel ledit STIP comprend en outre un conduit de transition qui effectue une transition d'un SHPR cylindrique (2506) à un vide de forme trapézoïdale dans ladite TSSP (2609).

9. Système de pompe à béton selon la revendication 1, dans lequel ladite TSCR comprend en outre des ailes d'étanchéité de forme trapézoïdale configurées pour sceller ledit FTIP et ledit STIP lorsqu'elles sont positionnées sur ledit FTIP et ledit STIP.

10. Système de pompe à béton selon la revendication 1, dans lequel ladite TSCR comprend un secteur d'un anneau ayant une surface qui représente trois fois la surface transversale dudit FTIP et dudit STIP.

11. Système de pompe à béton selon la revendication 10, dans lequel ledit secteur de TSCR comprend un angle de balayage d'approximativement 90 degrés.

12. Procédé de pompage de béton, ledit procédé fonctionnant conjointement avec un système de pompe à béton comprenant :
(a) une trémie à matériau (MHOP) ;
(b) une plaque d'obturation de forme trapézoïdale (TSSP) (2609) ;
(c) une pompe hydraulique ;
(d) une bague de coupe de forme trapézoïdale (TSCR) ; et
(e) un orifice d'éjection (2507) ;
dans lequel :
ladite TSSP (2609) comprend un premier orifice d'entrée trapézoïdal (FTIP) et un second orifice d'entrée trapézoïdal (STIP) ;
ladite TSSP (2609) est fixée à ladite MHOP et configurée pour amener le béton de ladite MHOP à ladite pompe hydraulique par ledit FTIP et ledit STIP ;
ladite pompe hydraulique comprend un cylindre gauche (2503) fixé au FTIP, un premier vérin de pompe hydraulique (FHPR) (2505) à l'intérieur du cylindre gauche (2503), un cylindre droit (2504) fixé au STIP, et un second vérin de pompe hydraulique (SHPR) (2506) à l'intérieur du cylindre droit (2504) ;
ledit FHPR (2505) est configuré pour accepter le béton via ledit FTIP ;
ledit SHPR (2506) est configuré pour accepter le béton via ledit STIP ;
ladite TSCR comprend un orifice de sortie de réception trapézoïdal (TROP) ;
ladite pompe hydraulique est configurée pour utiliser ledit FHPR (2505) pour éjecter du béton dudit cylindre gauche (2503) de ladite pompe hydraulique dans ledit TROP lorsque ledit TROP est positionné pour recouvrir ledit FTIP ;
ladite pompe hydraulique est configurée pour utiliser ledit SHPR (2506) pour injecter du béton de ladite MHOP dans ledit cylindre droit (2504) lorsque ledit TROP est positionné pour recouvrir ledit FTIP ;
ladite pompe hydraulique est configurée pour utiliser ledit SHPR (2506) pour éjecter du béton dudit cylindre droit (2504) dans ledit TROP lorsque ledit TROP est positionné pour recouvrir ledit STIP ; et
ladite pompe hydraulique est configurée pour utiliser ledit FHPR (2505) pour injecter du béton de ladite MHOP dans ledit cylindre gauche (2503) lorsque ledit TROP est positionné pour recouvrir ledit STIP ;
dans lequel ledit procédé est **caractérisé en ce que** :
ledit TROP est configuré pour traverser, de manière alternée, entre des positions recouvrant ledit FTIP afin de diriger le béton dudit FTIP vers ledit orifice d'éjection (2507) et pour diriger le béton de ladite MHOP vers ledit STIP, recouvrant ledit STIP pour diriger le béton dudit STIP vers ledit orifice d'éjection (2507) et pour diriger le béton de ladite MHOP audit FTIP, et recouvrant complètement ledit FTIP et ledit STIP pour diriger le béton dudit FTIP et dudit STIP vers ledit orifice d'éjection (2507) ; et
**en ce que** le procédé comprend les étapes consistant à :
(1) centrer ledit TROP sur ladite TSSP (2609) pour ouvrir ledit TROP sur ledit FHPR (2505) et ledit SHPR (2506) ;
(2) éjecter le matériau en utilisant ledit FHPR (2505) et ledit SHPR (2506) dans ledit TROP ;
(3) déplacer ledit TROP sur ledit FHPR (2505) et sceller ledit SHPR (2506) ;
(4) éjecter le matériau dans ledit TROP en utilisant ledit FHPR (2505) ;
(5) écarter ledit TROP dudit FHPR (2505) et ouvrir ledit SHPR (2506) sur ledit MHOP ;
(6) éjecter le matériau dans ledit TROP en utilisant ledit FHPR (2505) et injecter le matériau à partir de ladite MHOP en utilisant ledit SHPR (2506) ;
(7 écarter ledit TROP dudit FHPR (2505) et ouvrir ledit SHPR (2506) sur ladite MHOP ;
(8) éjecter le matériau dans ledit TROP en utilisant ledit FHPR (2505) et injecter le matériau depuis ladite MHOP en utilisant ledit SHPR (2506) ;
(9) écarter ledit TROP dudit FHPR (2505) et sceller ledit SHPR (2506) ;
(10) éjecter le matériau dans ledit TROP en utilisant ledit FHPR (2505) et arrêter ledit SHPR (2506) lorsqu'il est complètement chargé ;
(11) centrer ledit TROP sur ladite TSSP (2609) pour ouvrir ledit TROP sur ledit FHPR (2505) et ledit SHPR (2506) ;
(12) éjecter le matériau dans ledit TROP en utilisant ledit FHPR (2505) et ledit SHPR (2506) ;
(13) écarter ledit TROP dudit SHPR (2506) et sceller ledit FHPR (2505) ;
(14) éjecter le matériau dans ledit TROP en utilisant ledit SHPR (2506) et arrêter ledit FHPR (2505) lorsqu'il est complètement éjecté ;
(15) écarter ledit TROP dudit SHPR (2506) et ouvrir ledit FHPR (2505) sur ladite MHOP ;
(16) éjecter le matériau dans ledit TROP en utilisant ledit SHPR (2506) et injecter le matériau de ladite MHOP en utilisant ledit FHPR (2505) ;
(17) écarter ledit TROP dudit SHPR (2506) et sceller ledit FHPR (2505) ;
(18) éjecter le matériau dans ledit TROP en utilisant ledit SHPR (2506) et arrêter ledit FHPR (2505) lorsqu'il est complètement chargé ; et
(19) passer à l'étape (1) pour répéter les opérations de pompage de matériau.

13. Procédé de pompage de béton selon la revendication 12, dans lequel ladite TSCR comprend une cavité de transfert ayant une forme géométrique sélectionnée dans un groupe comprenant :
(1) des polygones à quatre côtés ayant exactement deux cotés qui sont parallèles ;
(2) des polygones à quatre côtés ayant deux ensembles de côtés qui sont parallèles ;
(3) des polygones à quatre côtés dans lesquels les pattes sur les côtés opposés du polygone ont la même longueur et les angles de base ont la même mesure (trapèze isocèle) ;
(4) des polygones à quatre côtés dans lesquels deux angles adjacents à l'intérieur du polygone sont en angle droit (trapèze rectangle ou trapèze en angle droit) ;
(5) des polygones à quatre côtés qui ont chaque côté tangent à un cercle inscrit (trapèze tangentiel) ;
(6) des parallélogrammes à quatre côtés ; et
(7) des secteurs annulaires comprenant un ou plusieurs secteurs d'un anneau ou d'une bague annulaire qui s'approchent d'un trapèze isocèle.

14. Procédé de pompage de béton selon la revendication 12, dans lequel ladite TSSP (2609) comprend des cavités de transfert ayant une forme géométrique sélectionnée dans un groupe comprenant :
(1) des polygones à quatre côtés ayant exactement deux côtés qui sont parallèles ;
(2) des polygones à quatre côtés ayant deux ensembles de côtés qui sont parallèles ;
(3) des polygones à quatre côtés dans lesquels les pattes sur les côtés opposés du polygone ont la même longueur et les angles de base ont la même mesure (trapèze isocèle) ;
(4) des polygones à quatre côtés dans lesquels deux angles adjacents à l'intérieur du polygone sont des angles droits (trapèze rectangle ou trapèze en angle droit) ;
(5) des polygones à quatre côtés qui ont chaque côté tangent à un cercle inscrit (trapèze tangentiel) ;
(6) des parallélogrammes à quatre côtés ; et
(7) des secteurs annulaires comprenant un ou plusieurs secteurs d'un anneau ou d'une bague annulaire qui s'approchent d'un trapèze isocèle.

15. Procédé de pompage de béton selon la revendication 12, dans lequel le matériau est injecté de ladite MHOP en utilisant le SHPR (2506) à une vitesse deux fois supérieure à la vitesse d'éjection dudit FHPR (2505).

16. Procédé de pompage de béton selon la revendication 12, dans lequel le matériau est injecté par ladite MHOP en utilisant le FHPR (2505) à une vitesse deux fois supérieure à la vitesse d'éjection dudit SHPR (2506).

17. Procédé de pompage de béton selon la revendication 12, dans lequel ledit FTIP comprend en outre un conduit de transition qui effectue une transition d'un FHPR cylindrique (2505) à un vide de forme trapézoïdale dans ladite TSSP (2609).

18. Procédé de pompage de béton selon la revendication 12, dans lequel ledit STIP comprend en outre un conduit de transition qui effectue une transition d'un SHPR cylindrique (2506) à un vide de forme trapézoïdale dans ladite TSSP (2609).

19. Procédé de pompage de béton selon la revendication 12, dans lequel ladite TSCR comprend en outre des ailes d'étanchéité de forme trapézoïdale configurées pour sceller ledit FTIP et ledit STIP lorsqu'elles sont positionnées sur ledit FTIP et ledit STIP.

20. Procédé de pompage de béton selon la revendication 12, dans lequel ladite TSCR comprend un secteur d'un anneau ayant une surface qui représente trois fois la surface transversale dudit FTIP et dudit STIP.

21. Procédé de pompage de béton selon la revendication 20, dans lequel ledit secteur de TSCR comprend un angle de balayage d'approximativement 90 degrés.
